(19) **Europäisches Patentamt / European Patent Office / Office européen des brevets**

(11) **EP 4 047 702 B1**

(12) **EUROPEAN PATENT SPECIFICATION**

(45) Date of publication and mention
of the grant of the patent:
**05.06.2024   Bulletin 2024/23**

(21) Application number: **22152207.1**

(22) Date of filing: **19.01.2022**

(51) International Patent Classification (IPC):
*H01M 10/04* (2006.01)      *H01M 50/533* (2021.01)
*H01M 50/536* (2021.01)     *H01M 50/538* (2021.01)
*H01M 50/107* (2021.01)     *H01M 50/152* (2021.01)
*H01M 50/167* (2021.01)     *H01M 50/179* (2021.01)
*H01M 50/184* (2021.01)     *H01M 50/188* (2021.01)
*H01M 50/534* (2021.01)     *H01M 50/545* (2021.01)
*H01M 50/586* (2021.01)     *H01M 50/593* (2021.01)
*H01M 50/213* (2021.01)     *H01M 50/249* (2021.01)
*H01M 50/186* (2021.01)     *H01M 50/503* (2021.01)

(52) Cooperative Patent Classification (CPC):
**H01M 10/0431; H01M 50/107; H01M 50/152;
H01M 50/167; H01M 50/179; H01M 50/184;
H01M 50/186; H01M 50/188; H01M 50/534;
H01M 50/536; H01M 50/538; H01M 50/545;
H01M 50/586; H01M 50/593;** H01M 50/213; (Cont.)

(54) **ELECTRODE ASSEMBLY, BATTERY, AND BATTERY PACK AND VEHICLE INCLUDING THE SAME**

ELEKTRODENANORDNUNG, BATTERIE UND BATTERIEPACK UND FAHRZEUG DAMIT

ENSEMBLE ÉLECTRODE, BATTERIE ET BLOC-BATTERIE ET VÉHICULE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:
19.01.2021   KR 20210007278
19.02.2021   KR 20210022894
19.02.2021   KR 20210022891
19.02.2021   KR 20210022897
19.02.2021   KR 20210022881
23.02.2021   KR 20210024424
08.03.2021   KR 20210030300
08.03.2021   KR 20210030291
09.04.2021   KR 20210046798
04.05.2021   KR 20210058183
14.06.2021   KR 20210077046
28.06.2021   KR 20210084326
01.10.2021   KR 20210131225
01.10.2021   KR 20210131208
01.10.2021   KR 20210131205
01.10.2021   KR 20210131207
01.10.2021   KR 20210131215
14.10.2021   KR 20210137001
15.10.2021   KR 20210137856
22.10.2021   KR 20210142196
09.11.2021   KR 20210153472

19.11.2021   KR 20210160823
24.11.2021   KR 20210163809
26.11.2021   KR 20210165866
03.12.2021   KR 20210172446
10.12.2021   KR 20210177091
31.12.2021   KR 20210194611
31.12.2021   KR 20210194612
31.12.2021   KR 20210194572
31.12.2021   KR 20210194593
31.12.2021   KR 20210194610
05.01.2022   KR 20220001802

(43) Date of publication of application:
**24.08.2022   Bulletin 2022/34**

(60) Divisional application:
**24168384.6 / 4 376 211**

(73) Proprietor: **LG Energy Solution, Ltd.**
**Seoul 07335 (KR)**

(72) Inventors:
• **LIM, Hae-Jin**
**07335 Seoul (KR)**
• **KONG, Jin-Hak**
**07335 Seoul (KR)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **LEE, Soon-O**
  **07335 Seoul (KR)**
- **CHOI, Kyu-Hyun**
  **07335 Seoul (KR)**
- **KIM, Do-Gyun**
  **07335 Seoul (KR)**
- **CHOI, Su-Ji**
  **07335 Seoul (KR)**
- **HWANGBO, Kwang-Su**
  **07335 Seoul (KR)**
- **MIN, Geon-Woo**
  **07335 Seoul (KR)**
- **JO, Min-Ki**
  **07335 Seoul (KR)**
- **LIM, Jae-Won**
  **07335 Seoul (KR)**
- **KIM, Hak-Kyun**
  **07335 Seoul (KR)**
- **LEE, Je-Jun**
  **07335 Seoul (KR)**
- **JUNG, Ji-Min**
  **07335 Seoul (KR)**
- **KIM, Jae-Woong**
  **07335 Seoul (KR)**
- **PARK, Jong-Sik**
  **07335 Seoul (KR)**
- **CHOE, Yu-Sung**
  **07335 Seoul (KR)**

- **LEE, Byoung-Gu**
  **07335 Seoul (KR)**
- **RYU, Duk-Hyun**
  **07335 Seoul (KR)**
- **LEE, Kwan-Hee**
  **07335 Seoul (KR)**
- **LEE, Jae-Eun**
  **07335 Seoul (KR)**
- **KANG, Bo-Hyun**
  **07335 Seoul (KR)**
- **PARK, Pil-Kyu**
  **07335 Seoul (KR)**

(74) Representative: **Goddar, Heinz J.**
   **Boehmert & Boehmert**
   **Anwaltspartnerschaft mbB**
   **Pettenkoferstrasse 22**
   **80336 München (DE)**

(56) References cited:
   **EP-A1- 2 472 641     EP-A1- 2 728 647**
   **FR-A1- 3 011 128     US-A1- 2016 226 056**

(52) Cooperative Patent Classification (CPC): (Cont.)
   H01M 50/249; H01M 50/503; H01M 2220/20;
   Y02E 60/10; Y02P 70/50

## Description

TECHNICAL FIELD

The present disclosure relates to an electrode assembly, a battery, and a battery pack and a vehicle including the same.

BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery, namely a unit battery, has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 (diameter: 18 mm, height: 65 mm) or a form factor 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

US 2016/226056 A1 describes a method for producing an electrochemical bundle of a lithium battery, such as an Li-ion battery, with a view to electrically connecting same to the output terminals of the battery, wherein it includes the combination of two steps of folding an electrochemical bundle of a lithium battery which are carried out separately, i.e. a radial folding with plastic deformation and an axial compacting, which make it possible to obtain two separate areas on at least one, and preferably both, of the lateral ends of the bundle.

EP 2 728 647 A1 describes an electricity storage device including an electricity storage element constituted by an electrode body in a positive side and an electrode body in a negative side that face each other while holding a separator, a sealing member that seals a case member accommodating the electricity storage element, at least one electrode protrusion that is either of the electrode bodies, which is led out on an element end-face of the electricity storage element, at least one current collector plate that is connected to the electrode protrusion, and a terminal member that is installed in the sealing member, a lateral face of the terminal member being connected to that of any of the current collector plate.

EP 2 472 641 A1 describes a cylindrical Ni-Zn battery including a battery shell, an electrode assembly and a liquid electrolyte which are sealed within the shell. The electrode assembly, whose upper part is connected to a cap, includes a nickel cathode, zinc anode, and a composite membrane. The nickel cathode and zinc anode have an edge portion which are externally exposed and bent inwardly to form the anode and cathode conductive end respectively, and edges of the composite membranes are sealed together, so that the electrodes are contained in the membranes.

DISCLOSURE

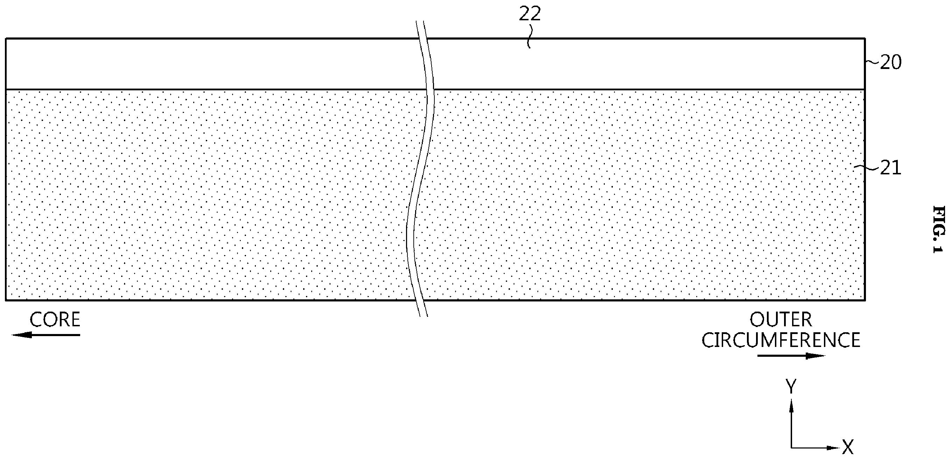

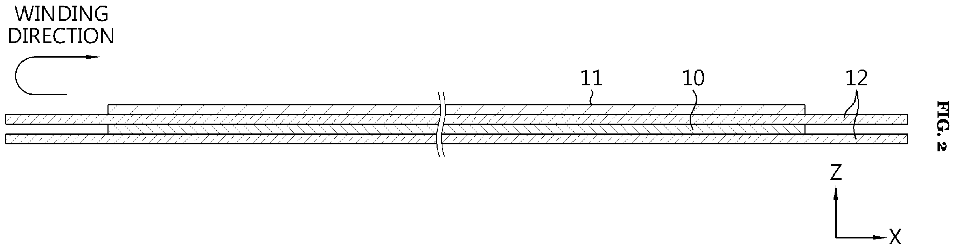

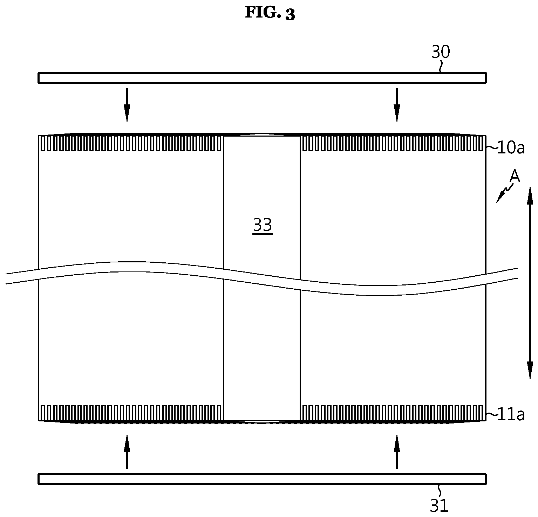

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collector to a bending surface region of an uncoated portion.

Referring to FIGS. 1 to 3, a positive electrode 10 and a negative electrode 11 have a structure in which a sheet-shaped current collector 20 is coated with an active material 21, and include an uncoated portion 22 at one long side along the winding direction X.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions. The positions of the positive electrode 10 and the negative electrode 11 may be changed opposite to those shown in the figures.

After the winding process, the uncoated portion 10a of the positive electrode 10 and the uncoated portion 11a of the negative electrode 11 are bent toward the core to form a bending surface region. After that, current collectors 30, 31 are welded and coupled to the uncoated portions 10a, 11a, respectively.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see arrow, which has an advantage of lowering the resistance of the battery. This is because resistance is inversely proportional to the cross-sectional area of the path through which the current flows.

In the tab-less cylindrical battery, in order to improve the welding characteristics between the uncoated portions 10a, 11a and the current collectors 30, 31, a strong pressure must be applied to the welding regions of the uncoated portions 10a, 11a to bend the uncoated portions 10a, 11a as flat as possible.

When the uncoated portions 10a, 11a are bent, as the uncoated portion 32 adjacent to the core of the electrode assembly A is bent, all or a significant portion of the cavity 33 in the core of the electrode assembly A is blocked. In this case, it causes a problem in the electrolyte injection process. That is, the cavity 33 in the core of the electrode assembly A is used as a passage through which an electrolyte is injected. However, if the corresponding passage is blocked, electrolyte injection is difficult. In addition, while an electrolyte injector is being inserted into the cavity 33, the electrolyte injector may interfere with the uncoated portion 32 bent near the core, which may cause the uncoated portion 32 to tear.

In addition, the bent portions of the uncoated portions 10a, 11a to which the current collectors 30, 31 are welded should be overlapped in multiple layers and there should not be any empty spaces (gaps). In this way, sufficient welding strength may be obtained, and even with the latest technology such as laser welding, it is possible to prevent laser from penetrating into the electrode assembly A and melting the separator or the active material.

In order for the uncoated portions 10a, 11a to be overlapped with the same number of layers, the uncoated portions 10a, 11a at the corresponding positions based on the position of each winding turn must be bent toward the core and cover the top surface of the uncoated portion bent at an inner winding turn. In addition, assuming that the interval between winding turns is d and the bending length of the uncoated portions 10a, 11a of each winding turn is e, the bending length e must have a length greater than d*n (n is a natural number greater than or equal to 2). Only in this case, an area where the uncoated portions 10a, 11a are overlapped in multiple layers with the same amount is formed. In addition, in order to sufficiently obtain a region in which the uncoated portions 10a, 11a are overlapped in substantially the same number in the radial direction of the electrode assembly, the uncoated portions 10a, 11a must have a sufficiently length. However, since the electrode assembly included in a small cylindrical battery has a small radius, it is difficult to conceive of a motivation for deriving the concept of designing the uncoated portions 10a, 11a having a sufficiently long bending length.

TECHNICAL PROBLEM

The present disclosure is designed to solve the problems of the related art, and therefore the present disclosure is directed to providing an electrode assembly having an uncoated portion bent structure that may prevent a separator or an active material layer from being damaged when welding a current collector by sufficiently securing a region in which uncoated portions are overlapped into 10 or more layers in a radial direction of an electrode assembly when the uncoated portions exposed at both ends of the electrode assembly are bent.

The present disclosure is also directed to providing an electrode assembly in which an electrolyte injection passage is not blocked even if the uncoated portion is bent.

The present disclosure is also directed to providing an electrode assembly with improved energy density and reduced resistance.

The present disclosure is also directed to providing a battery including the electrode assembly having an improved structure, a battery pack including the battery, and a vehicle including the battery pack.

The technical objects to be solved by the present disclosure are not limited to the above, and other objects not mentioned herein will be clearly understood by those skilled in the art from the following disclosure.

SUMMARY OF THE INVENTION

The present invention is given by the subject matter of the independent claims. Particular examples for implementing the present invention are given by the features of the dependent claims.

An electrode assembly is provided, in particular an electrode assembly for a battery, more particularly an electrode assembly for a secondary battery. The electrode assembly includes a first electrode, a second electrode and a separator interposed between the first electrode and the second electrode.

The outer circumference of the wound first and second electrode and the separator interposed therebetween may have a generally cylindrical shape. The wound first and second electrode and the separator interposed therebetween may have a cross section corresponding to a spiral shape. The core may include a generally cylindrical cavity. The description as "generally cylindrical" as used herein with reference to the wound first and second electrode and the separator interposed therebetween shall be understood to refer to the inner and/or outer cylinder surface which may have a step-like transition at the terminal inner or outer winding edge, respectively, with respect to the penultimate winding. The terminal winding edge may extend parallel to the winding axis. The terminal winding edge may alternatively be referred to as a short side end.

There is provided an electrode assembly in which a first electrode, a second electrode, and a separator interposed therebetween are wound based on an axis to define a core and an outer circumference, wherein the first electrode includes an uncoated portion adjacent to an edge of the first electrode (e.g., at a long side end thereof). The uncoated portion extends beyond (and/or may be exposed out of, or may be exposed from) the separator along a winding axis direction of the electrode assembly, in particular at said edge of the first electrode. A part of the uncoated portion is bent in a radial direction of the electrode assembly to form a bending surface region that includes overlapping layers of the uncoated portion, and in a partial region of the bending surface region, the number of stacked layers of the uncoated portion is 10 or more in the winding axis direction of the electrode assembly. The edge of the first and/or second electrode may extend along a winding direction of the wound electrode assembly.

In a spread-out view (i.e., without winding or rolling) of the electrode assembly, any of the first electrode, the second electrode and the separator may extend between two respective long side ends in the axial direction of the rolled electrode assembly. Any of the first electrode, the second electrode and the separator may extend between two respective short side ends in the winding direction (approximately circumferential direction) of the rolled electrode assembly. In some examples, any of the long side ends may be longer than any of the short side ends. Alternatively, the expressions long and short may be denominations only, and any of the short side ends may be longer than the long side ends. Any of the long side ends may be linear, curved, or patterned (e.g., provided with segments as described below) or a combination thereof.

Additionally or alternatively, the long side end of any of the first and second electrodes and the separator may correspond to a longer or longest side end of any of the sheet-shaped first and second electrodes and separator. For example, for any of the first and second electrodes and separator having a substantially rectangular shape before being rolled to form the electrode assembly of the battery, an edge of the rectangle formed by any of the unrolled first and second electrodes and separator corresponding to the longer side of the rectangle may correspond to a respective "long side end". The long side end of any of the first and second electrodes and separator may hence be perpendicular to a height direction of the battery. In said direction perpendicular to the height of the battery, the uncoated portion of the respective electrode may protrude from and/or extend beyond the separator.

A bending surface region is formed adjacent to the edge of the wound electrode. The wound electrode is provided with the uncoated portion at a lateral edge with respect to the winding axis. The lateral edge may extend in a spiral with respect to the winding axis. The lateral edge may alternatively be referred to as a long side end. The wound electrode may extend continuously in a spiral cylindrical arrangement around the winding axis. The winding axis may correspond to the center axis of the spiral cylindrical arrangement of the electrode. In the bending surface region, the uncoated portion may be at least sectionally provided with an inclined orientation with respect to the winding axis and/or with an orientation crosswise with respect to the winding axis. In the bending surface region, the uncoated portion may layer on top of itself such that a plurality of winding turns of the uncoated portions engage with one or both adjacent winding turns.

A partial region of the bending surface region refers to a circular or annular region. The partial region extends circularly around the winding axis. The partial region may define an outer diameter and an inner diameter. The inner diameter of the partial region may correspond to the inner diameter of the core. The inner diameter of the partial region may be smaller than the inner diameter of the core. The outer diameter of the partial region may be smaller than the outer circumference. 10 or more, 12 or more, 15 or more, 18 or more, 22 or more, 26 or more, 30 or more, 34 or more layers of the uncoated portion may be stacked in the winding axis direction in the partial region of the bending surface region. 10 or more, 12 or more, 15 or more, 18 or more, 22 or more, 26 or more, 30 or more, 34 or more layers of the uncoated portion of adjacent winding turns may form a layered arranged in the winding axis direction in the partial region. In the winding axis direction, the uncoated portion may form 10 or more, 12 or more, 15 or more, 18 or more, 22 or more, 26 or more, 30 or more, 34 or more, layers on top of each other in the winding axis direction in the partial region.

When the number of total winding turns of the first electrode is defined as $n_1$ and a value obtained by dividing a winding turn index k (a natural number of 1 to $n_1$) at a $k^{th}$ winding turn location by the number of total winding turns $n_1$ is defined as a relative radial position $R_{1,k}$ of the winding turn index k, a length ratio of a radial region of $R_{1,k}$ satisfying a condition that the number of stacked layers of the uncoated portion is 10 or more, in particular 12 or more or 18 or more, more particularly 20 or more or 22 or more, may be 30% or more, 40% or more, 50 % or more, 60% or more, 70% or more, and/or no more than 95%, no more than 90 %, or no more than 85%, based on a relative radial position region in which the uncoated portion is bent. The number of stacked layers may be no larger than the number of total winding turns. In particular, the number of stacked layers of the uncoated portion is equal to or less than the number of total winding turns.

A relative radial position region may be defined by a primary (outer) relative radial position of the winding turn index and a secondary (inner) relative radial position of the winding turn index. Radially outward of the primary relative radial position, the condition may not be fulfilled. Radially inward of the secondary relative radial position, the condition may not be fulfilled. For example, radially outward of the primary relative radial position, the number of stacked layers of the uncoated portion may be less than 10. A length ratio may refer to the radial length of the partial region in relation to the radial length of the bending surface region. In particular, a length ratio as used herein may refer to a ratio of the radial length between the primary and the secondary relative radial position with respect to the radial length of the bending surface region.

The length ratio of the radial region of $R_{1,k}$ satisfying a condition that the number of stacked layers of the uncoated portion is 10 or more, in particular 12 or more or 18 or more, more particularly 20 or more or 22 or more, may be 30% to 85%, 40 % to 80%, 50% to 75 %, or 60% to 70%, based on the relative radial position region in which the uncoated portion is bent.

The second electrode may include an uncoated portion adjacent to an edge of the second electrode (e.g. at a long side end thereof) and extend beyond (and/or exposed out of or exposed from) the separator along the winding axis direction of the electrode assembly adjacent to an edge of the separator (e.g. at a long side end thereof), and a part of the uncoated portion may be bent in the radial direction of the electrode assembly, in particular towards the core, to form a bending surface region that includes overlapping layers of the uncoated portionIn a partial region of the bending surface region, the number of stacked layers of the uncoated portion may be 10 or more, in particular 12 or more or 18 or more, more particularly 20 or more or 22 or more, in the winding axis direction of the electrode assembly.

When the number of total winding turns of the second electrode is defined as $n_2$ and a value obtained by dividing a winding turn index k (a natural number of 1 to $n_2$) at a $k^{th}$ winding turn location by the number of total winding turns $n_2$ is defined as a relative radial position $R_{2,k}$ of the winding turn index k, a length ratio of a radial region of $R_{2,k}$ satisfying a condition that the number of stacked layers of the uncoated portion is 10 or more, in particular 12 or more or 18 or more, more particularly 20 or more or 22 or more, may be 30% or more, 40% or more, 50 % or more, 60% or more, 70% or more, and/or no more than 95%, no more than 90 %, or no more than 85%, based on a relative radial position region in which the uncoated portion is bent.

The length ratio of the radial region of $R_{2,k}$ satisfying a condition that the number of stacked layers of the uncoated portion is 10 or more may be 30% to 85%, 40 % to 80%, 50% to 75 %, or 60% to 70%, based on the relative radial position region in which the uncoated portion is bent.

A winding structure may be provided, which may alternatively be designated as spiral structure. The first electrode and/or the second electrode may have a respective winding structure. The winding structure may refer to the structure of the first electrode, the second electrode and/or the separator in a configuration wound around the winding axis. The winding structure may define a core and an outer circumference. The winding structure may comprise a plurality of winding turns. The $1^{st}$ winding turn of the winding structure may correspond to the core. The winding structure of the first electrode may comprise a number of winding turns $n_1$. The winding structure of the second electrode may comprise a number of winding turns $n_2$. The winding structure may extend in the circumferential direction in a spiral-like manner from an inner terminal winding edge, of the $1^{st}$ winding turn, to an outer terminal winding edge of the $n_1^{*th}$ or $n_2^{*th}$ winding turn, wherein $n_1$ designates the number of winding turns of the first electrode and/or wherein $n_2$ designates the number of winding turns of the second electrode. In particular, $n_1$ may be equal to $n_2$.

A relative radial position $R_{1,k}$ refers to a position of a preset $k^{*th}$ winding turn of the first electrode. A relative radial position $R_{2,k}$ refers to a position of a preset $k^{*th}$ winding turn of the second electrode.In the winding structure of the first electrode, the uncoated portion of a region from a relative radial position $R_{1,1}$ of a $1^{st}$ winding turn to a first relative radial position $R_{1,k^*}$ of a preset $k^{*th}$ winding turn may have a smaller height than the uncoated portion of a region from a relative radial position $R_{1,k^*+1}$ of a $k^*+1^{th}$ winding turn to a relative radial position 1.

In the winding structure of the first electrode, the uncoated portion of a region from a relative radial position $R_{1,1}$ of a $1^{st}$ winding turn to a first relative radial position $R_{1,k^*}$ of a preset $k^{*th}$ winding turn may have a smaller height than the bending surface region formed by overlapping of the bent uncoated portions.

In the winding structure of the first electrode, the uncoated portion of a region from a relative radial position $R_{1,1}$ of a $1^{st}$ winding turn to a first relative radial position $R_{1,k^*}$ of a $k^{*th}$ winding turn may not be bent toward the core of the electrode assembly.

In the winding structure of the second electrode, the uncoated portion of a region from a relative radial position $R_{2,1}$ of a 1st winding turn to a first relative radial position $R_{2,k*}$ of a preset $k*$th winding turn may have a smaller height than the uncoated portion of a region from a relative radial position $R_{2,k*+1}$ of a $k*+1$th winding turn to a relative radial position 1.

In the winding structure of the second electrode, the uncoated portion of a region from a relative radial position $R_{2,1}$ of a 1st winding turn to a first relative radial position $R_{2,k*}$ of a preset $k*$th winding turn may have a smaller height than the bending surface region formed by overlapping of the bent uncoated portions.

In the winding structure of the second electrode, the uncoated portion of a region from a relative radial position $R_{2,1}$ of a 1st winding turn to a first relative radial position $R_{2,k*}$ of a preset $k*$th winding turn may not be bent toward the core of the electrode assembly.

The uncoated portion of the first electrode and/or of the second electrode may be divided into a plurality of separate tabs that are independently bendable.

A separate tab may alternative be designated as a segment. Alternatively, a separate tab may be referred to as separation part or distinct cut part. One or both of the first and second electrode may be provided with separate tabs. The separate tabs of the first electrode may be bendable independently of one another. The separate tabs of the second electrode may be bendable independently of one another.

In case both the first electrode and the second electrode are provided with an uncoated portion bent in a radial direction, the uncoated portion of the first electrode may be provided at first (upper) edge, in particular a first lateral edge, of the first electrode, and the uncoated portion of the second electrode may be provided at second (lower) edge, in particular a second lateral edge, of the second electrode, wherein the first edge and the second edge are arranged opposite with respect to one another and/or with respect to the winding axis direction.

Each of the plurality of separate tabs may have a geometric shape which uses a bending line as a base, and the geometric shape may be formed by connecting one or more straight lines, one or more curves, or a combination thereof. The geometric shape may be symmetrical. The geometric shape may for example be a parabola, triangle, prism or another geometric shape.

A bending line may be in the shape of a straight line or of an arc. The bending line may extend along the edge of the respective first or second electrode in the winding direction. In particular, the bending line may define an arc length along the edge of the respective first or second electrode in the winding direction. The bending line may separate the respective first or second electrode into a first, generally cylindrically extending spiral or coil section, and into a second bent section, in which the overlapping layers of the uncoated portion are stacked on top of each other in the winding axis direction. In the spiral or coil section, the cross section of the first or second electrode with respect to the winding axis may be constant in the winding axis direction. In the spiral or coil section, the first electrode and/or the second electrode may extend generally parallel to the winding axis. In the spiral or coil section, adjacent winding turns of the respective first or second electrode may be separated by the separator in the radial direction. In the bent section, the uncoated portion and/or its separate tabs may engage each other in the winding axis direction. In the bent section, the uncoated portion and/or its separate tabs may be oriented with an inclination with respect to the winding axis. The radial direction may be defined as a direction radial with respect to the winding axis.

The geometric shape may have a width decreasing stepwise or continuously from the base to the top. When the uncoated portion is bent in the radial direction, the top may designate the part closest to the winding axis.

A lower internal angle of the geometric shape between the base and a side intersecting the base may be 60 degrees to 85 degrees. The lower internal angle may be at least 65 degrees, in particular at least 70 degrees, and/or no more than 80 degrees, in particular no more than 75 degrees. The lower internal angle at the first end of the base may be equal to the lower internal angle at the second end of the base.

The lower internal angles of the plurality of separate tabs may increase stepwise or continuously along one direction parallel to the winding direction of the electrode assembly. Continuously, as opposed to stepwise, may alternatively be described as gradually.

Each of the plurality of separate tabs may have a geometric shape which uses a bending line as a base, and when a radius of a winding turn in which the separate tab is disposed based on a core center of the electrode assembly is r, an arc length of a winding turn corresponding to a lower portion of the separate tab is $L_{arc}$, and a lower internal angle of the separate tab in the assumption that sides of a pair of separate tabs adjacently disposed in the winding turn having the radius of r is $\theta_{assumption}$, an actual lower internal angle $\theta_{real}$ of the pair of separate tabs adjacently disposed may satisfy the following formula:

$$\theta_{real} > \theta_{assumption}$$

$$\theta_{assumption} = 90° - 360°*(L_{arc}/2\pi r)*0.5.$$

A circumferential angle corresponding to the arc length $L_{arc}$ of the winding turn corresponding to the lower portion of the separate tab based on the core center of the electrode assembly may be 45 degrees or less. The circumferential angle corresponding to the arc length $L_{arc}$ of the winding turn corresponding to the lower portion of the separate tab may be 30 degrees or less, 20 degrees or less, or 10 degrees or less. The circumferential angle corresponding to the arc length $L_{arc}$ of the winding turn corresponding to the lower portion of the separate tab may be no less than 1 degree, no less than 5 degrees, or no less than 10 degrees.

When an overlapping ratio of the separate tabs adjacently disposed in the winding turn having the radius of r based on the core center of the electrode assembly is defined using a formula $(\theta_{real}/\theta_{assumptoin}-1)$, the overlapping ratio of the separate tabs may be greater than 0 and/or equal to or smaller than 0.05.

When a virtual circle passing through a pair of separate tabs adjacently disposed in the winding turn having the radius of r based on the core center of the electrode assembly is drawn, a pair of arcs passing through each separate tab may lie on (overlap with, contact, be coupled) each other.

When a ratio of a length of the overlapping arc to a length of the arc passing through each separate tab is defined as an overlapping ratio, the overlapping ratio of the separate tab may be greater than 0 and/or equal to or smaller than 0.05.

In the winding structure of the first electrode, the uncoated portion of a region from a relative radial position $R_{1,1}$ of a 1st winding turn to a first relative radial position $R_{1,k^*}$ of a $k^{*th}$ winding turn may have a smaller height than the uncoated portion of a region from a relative radial position $R_{1,k^*+1}$ of a $k^*+1^{th}$ winding turn to a relative radial position 1, and may not be bent toward the core.

The height of an uncoated portion may refer to the extension of said uncoated portion in the direction away from the separator beyond which the uncoated portion extends. In particular, the height of an uncoated portion before bending may refer to the winding axis direction. In particular, the height of an uncoated portion after bending may refer to the distance from the bottom of a tab and/or from the bending line in the direction facing away from the separator beyond which said uncoated portion protrudes.

A length of the first electrode corresponding to the region from the relative radial position $R_{1,1}$ to the first relative radial position $R_{1,k^*}$ may be 1% to 30% compared to a length of the first electrode corresponding to the region from the relative radial position $R_{1,k^*+1}$ to the relative radial position 1.

In the winding structure of the first electrode, a bending length $fd_{1,k^*+1}$ of the uncoated portion at a relative radial position $R_{1,k^*+1}$ of a $k^*+1^{th}$ winding turn may be shorter than a radial length from a relative radial position $R_{1,1}$ of a 1st winding turn to a relative radial position $R_{1,k^*}$ of a $k^{*th}$ winding turn.

In the winding structure of the first electrode, when a radius of the core of the electrode assembly is defined as $r_c$, a region from a center of the core to $0.90r_c$ may not be blocked by a bent portion of the uncoated portion located in a region from a relative radial position $R_{1,k^*+1}$ of a $k^*+1^{th}$ winding turn to a relative radial position 1. A region from a center of the core to $0.90r_c$ may, in the winding axis direction, be free of separate tabs of the first electrode and/or free the bent uncoated portion of the first electrode.

A bending length $fd_{1,k^*+1}$ of the uncoated portion at a relative radial position $R_{1,k^*+1}$ of a $k^*+1^{th}$ winding turn, the radius $r_c$ of the core, and a distance $d_{1,k^*+1}$ from a center of the electrode assembly to the relative radial position $R_{1,k^*+1}$ may satisfy the following formula:

$$fd_{1,k^*+1} + 0.90^*r_c \leq d_{1,k^*+1}.$$

In the winding structure of the second electrode, the uncoated portion of a region from a relative radial position $R_{2,1}$ of a 1st winding turn to a first relative radial position $R_{2,k^*}$ of a preset $k^{*th}$ winding turn may have a smaller height than the uncoated portion of a region from a relative radial position $R_{2,k^*+1}$ of a $k^*+1^{th}$ winding turn to a relative radial position 1, and may not be bent toward the core.

A length of the second electrode corresponding to the region from the relative radial position $R_{2,1}$ to the first relative radial position $R_{2,k^*}$ may be 1% to 30% compared to a length of the second electrode corresponding to the region from the relative radial position $R_{2,k^*+1}$ to the relative radial position 1.

In the winding structure of the second electrode, a bending length $fd_{2,k^*+1}$ of the uncoated portion at a relative radial position $R_{2,k^*+1}$ of a $k^*+1^{th}$ winding turn may be shorter than a radial length from a relative radial position $R_{2,1}$ of a 1st winding turn to a relative radial position $R_{1,k^*}$ of a $k^{*th}$ winding turn.

In the winding structure of the second electrode, when a radius of the core of the electrode assembly is defined as $r_c$, a region from a center of the core to $0.90r_c$ may not be blocked by a bent portion of the uncoated portion of the second electrode located in a region from a relative radial position $R_{2,k^*+1}$ of a $k^*+1^{th}$ winding turn to a relative radial position 1. A region from a center of the core to $0.90r_c$ may, in the winding axis direction, be free of separate tabs of the second electrode and/or free the bent uncoated portion of the second electrode.

A bending length $fd_{2,k^*+1}$ of the uncoated portion at a relative radial position $R_{2,k^*+1}$ of a $k^*+1^{th}$ winding turn, the radius $r_c$ of the core, and a distance $d_{2,k^*+1}$ from a center of the electrode assembly to the relative radial position $R_{2,k^*+1}$ may satisfy the following formula:

$$fd_{2,k^*+1} + 0.90^*r_c \leq d_{2,k^*+1}.$$

In the winding structure of the first electrode, the uncoated portion of a region from a relative radial position $R_{1,k^*+1}$ of a $k^*+1^{th}$ winding turn to a second relative radial position $R_{1,k@}$ of a preset $k@^{th}$ winding turn may be divided into a plurality of separate tabs, whose heights increase gradually or stepwise along one direction parallel to the winding direction.

A radial length of the region from the relative radial position $R_{1,k*+1}$ to the second relative radial position $R_{1,k@}$ may be 1% to 56% compared to a radius of the winding structure of the first electrode except for the core of the electrode assembly.

In the winding structure of the first electrode, the uncoated portion of a region from a relative radial position $R_{1,k@+1}$ of a preset $k@+1^{th}$ winding turn to a relative radial position 1 may be divided into a plurality of separate tabs, and the plurality of separate tabs may have substantially the same height from the relative radial position $R_{1,k@+1}$ to the relative radial position 1.

In the winding structure of the second electrode, the uncoated portion of a region from a relative radial position $R_{2,k*+1}$ of a $k*+1^{th}$ winding turn to a second relative radial position $R_{2,k@}$ of a preset $k@^{th}$ winding turn may be divided into a plurality of separate tabs, whose heights increase stepwise or gradually along one direction parallel to the winding direction.

A radial length of the region from the relative radial position $R_{2,k*+1}$ to the second relative radial position $R_{2,k@}$ may be 1% to 56% compared to a radius of the winding structure of the second electrode except for the core of the electrode assembly.

In the winding structure of the second electrode, the uncoated portion of the second electrode of a region from a relative radial position $R_{2,k@+1}$ of a $k@+1^{th}$ winding turn to a relative radial position 1 may be divided into a plurality of separate tabs, and the plurality of separate tabs may have substantially the same height from the relative radial position $R_{2,k@+1}$ to the relative radial position 1.

In the winding structure of the first electrode, the uncoated portion bent in the radial direction of the electrode assembly, in particular towards the core, may be divided into a plurality of separate tabs that are independently bendable, and at least one of a height of the plurality of separate tabs in the winding axis direction and a width thereof in the winding direction may increase continuously (gradually) or stepwise along one direction parallel to the winding direction individually or in groups.

In the winding structure of the second electrode, the uncoated portion bent in the radial direction of the electrode assembly may be divided into a plurality of separate tabs that are independently bendable, and at least one of a height of the plurality of separate tabs in the winding axis direction and a width thereof in the winding direction may increase continuously (gradually) or stepwise along one direction parallel to the winding direction individually or in groups.

Each of the plurality of separate tabs may satisfy at least one condition among a width condition of 1 mm to 11 mm in the winding direction; a height condition of 2 mm to 10 mm in the winding axis direction; and a separation pitch condition of 0.05 mm to 1 mm in the winding direction.

A cut groove may be interposed between the plurality of separate tabs, and a predetermined gap may be provided between a bottom of the cut groove and the active material layer of the first electrode or the second electrode. Grooves and tabs may be alternatingly arranged along the edge in the winding direction. Each pair of tabs immediately adjacent to each other in the winding direction may be separated from another by a respective groove.

The gap may have a length of 0.2 mm to 4 mm. In particular, the gap may have a length of at least 0.2 mm, particularly at least 0.5 mm, more particularly at least 1 mm. In particular, the gap may have a length of no more than 4 mm, particularly no more than 3 mm, more particularly no more than 2 mm.

The plurality of separate tabs may form a plurality of separate tab groups along the winding direction of the electrode assembly, and separate tabs belonging to the same separate tab group may be substantially the same as each other in terms of at least one of a width in the winding direction, a height in the winding axis direction, and a separation pitch in the winding direction. Separate tab groups or simply put: tab groups, may define separation tabs of one respective step in case of separate tabs which vary in a stepwise manner.

The separate tabs belonging to the same separate tab group may be configured such that at least one of the width in the winding direction, the height in the winding axis direction, and the separation pitch in the winding direction increases gradually or stepwise along one direction parallel to the winding direction of the electrode assembly.

At least a part of the plurality of separate tab groups may be disposed at the same winding turn of the electrode assembly.

The bending surface region formed by the uncoated portion of the first electrode may include a stack number increasing region and a stack number uniform region from the outer circumference of the electrode assembly to the core thereof. The stack number increasing region may be defined as a region in which the number of stacked layers of the uncoated portion increases toward to the core of the electrode assembly. The stack number uniform region may be defined as a region from a radial position where the increasing of the number of stacked layers of the uncoated portion stops to a radial position where the uncoated portion starts bending. A radial length of the stack number uniform region may be 30% or more, 40% or more, 50 % or more, 60% or more, 70% or more, and/or no more than 95%, no more than 90 %, or no more than 85%, compared to a radial length from a winding turn where the uncoated portion starts bending to a winding turn where the uncoated portion ends bending.

The bending surface region formed by the uncoated portion of the second electrode may include a stack number increasing region and a stack number uniform region from the outer circumference of the electrode assembly to the core thereof. The stack number increasing region may be defined as a region, in particular a circular or annular region based on the winding axis, in which the number of stacked layers of the uncoated portion increases toward the core of the electrode assembly. The stack number uniform region may be defined as a region, in particular a circular or annular region based on the winding axis, from a radial position where the increasing of the number of stacked layers of the uncoated portion stops to a radial position where the uncoated portion starts bending. A radial length of the stack number uniform region may be 30% or more, 40% or more, 50 % or more, 60% or more, 70% or more, and/or no more than 95%, no more than 90 %, or no more than 85%, compared to a radial length from a winding turn where the uncoated portion starts bending to a winding turn where the uncoated portion ends bending.

The first electrode and/or the second electrode may have a thickness of 80 um to 250 um. The first electrode and/or the second electrode may have a thickness of at least 100 um, at least 120 um or at least 150 um, and/or no more than 230 um, no more than 210 um, or no more than 200 um. An interval of the uncoated portions located at winding turns adjacent in the radial direction of the electrode assembly may be 200 um to 500 um. The interval of the uncoated portions located at winding turns adjacent in the radial direction of the electrode assembly may have a thickness of at least 200 um, at least 250 um or at least 300 um, and/or no more than 500 um, no more than 450 um, or no more than 400 um.

The uncoated portion of the first electrode may have a thickness of 10 um to 25 um, in particular 15 um to 20 um.

The uncoated portion of the second electrode may have a thickness of 5 um to 20 um, in particular 10 um to 15 um.

In the partial region of the bending surface region formed by the uncoated portion of the first electrode, a total stack thickness of overlapping layers of the uncoated portion may be 100 um to 975 um, in particular 200 um to 800 um, more particularly 300 um to 600 um.

The uncoated portion of the first electrode may be divided into a plurality of separate tabs that are independently bendable, the first electrode may include a height variable region in which heights of separate tabs are variable and a height uniform region in which heights of separate tabs are uniform, and in a region formed by bending the separate tabs included in the height uniform region along the radial direction of the electrode assembly in the bending surface region, a ratio of a stack thickness of the uncoated portion of the bending surface region to the height of the separate tab may be 1.0% to 16.3%.

In the partial region of the bending surface region formed by the uncoated portion of the second electrode, a total stack thickness of overlapping layers of the uncoated portion may be 50 um to 780 um, in particular 100 um to 600 um, more particularly 150 um to 450 um.

The uncoated portion of the second electrode may be divided into a plurality of separate tabs that are independently bendable, the second electrode may include a height variable region in which heights of separate tabs are variable and a height uniform region in which heights of separate tabs are uniform, and in a region formed by bending the separate tabs included in the height uniform region along the radial direction of the electrode assembly in the bending surface region, a ratio of a stack thickness of the uncoated portion of the bending surface region to the height of the separate tab may be 0.5% to 13.0%

Alternatively or additionally, there may be provided an electrode assembly in which a first electrode, a second electrode, and a separator interposed therebetween are wound based on an axis to define a core and an outer circumference, wherein the first electrode includes a first uncoated portion at a adjacent to an edge of the first electrode (e.g. long side end thereof) and extending beyond (and/or exposed out of) the separator along a winding axis direction of the electrode assembly, in particular at said edge of the first electrode, and a part of the first uncoated portion is bent in a radial direction of the electrode assembly to form a first bending surface region, and in a partial region of the first bending surface region, a stack thickness of the first uncoated portion is 100 um to 975 um, in particular 200 um to 800 um, more particularly 300 um to 600 um.

The first uncoated portion of the first electrode may be divided into a plurality of separate tabs that are independently bendable, the first electrode may include a height variable region in which heights of separate tabs are variable and a height uniform region in which heights of separate tabs are uniform, and in a region formed by bending the separate tabs included in the height uniform region along the radial direction of the electrode assembly in the bending surface region, a ratio of a stack thickness of the uncoated portion of the bending surface region to the height of the separate tab may be 1.0% to 16.3%, in particular 2.0 % to 12 %, more particularly 5% to 10 %.

The second electrode may include a second uncoated portion adjacent to an edge of the second electrode (e.g. at a long side end thereof) and extending beyond (and/or exposed out of) the separator along the winding axis direction of the electrode assembly, a part of the second uncoated portion may be bent in the radial direction of the electrode assembly, in particular towards the core, to form a second bending surface region, and in a partial region of the second bending surface region, a stack thickness of the second uncoated portion may be 50 um to 780 um, in particular 100 um to 600 um, more particularly 150 um to 450 um.

The second uncoated portion of the second electrode may be divided into a plurality of separate tabs that are independently bendable, the second electrode may include a height variable region in which heights of separate tabs are variable and a height uniform region in which heights of separate tabs are uniform, and in a region formed by bending the separate tabs included in the height uniform region along the radial direction of the electrode assembly in the bending surface region, a ratio of a stack thickness of the uncoated portion of the bending surface region to the height of the separate tab may be 0.5% to 13.0%, in particular 1.0% to 10%, more particularly 2% to 5%.

Alternatively or additionally, there may be provided a battery, comprising: an electrode assembly in which a first electrode, a second electrode, and a separator interposed therebetween are wound based on an axis to define a core and an outer circumference, wherein at least one of the first electrode and the second electrode includes an uncoated portion adjacent to an edge of the second electrode (e.g. at a long side end thereof) and extending beyond (and/or exposed out of) the separator along a winding axis direction of the electrode assembly, in particular at said edge of the first electrode, and at least a part of the uncoated portion is bent in a radial direction of the electrode assembly to form a bending surface region, and in a partial region of the bending surface region, the number of stacked layers of the uncoated portion is 10 or more; a battery housing configured to accommodate the electrode assembly and electrically connected to one of the first electrode and the second electrode to have a first polarity; a sealing body configured to seal an open end of the battery housing; a terminal electrically connected to the other of the first electrode and the second electrode to have a second polarity and configured to have a surface exposed to the outside; and a current collector welded to the bending surface region and electrically connected to any one of the battery housing and the terminal, wherein the welding region of the current collector overlaps with the bending surface region in which the number of stacked layers of the uncoated portion is 10 or more.

The first electrode may include a first uncoated portion adjacent to an edge of the first electrode (e.g. at the long side end thereof) and extending beyond (and/or exposed out of) the separator along the winding axis direction of the electrode assembly, in particular at said edge of the first electrode, and when the number of total winding turns of the first electrode is defined as $n_1$ and a value obtained by dividing a winding turn index k (a natural number of 1 to $n_1$) at a $k^{th}$ winding turn location by the number of total winding turns $n_1$ is defined as a relative radial position $R_{1,k}$ of the winding turn index k, a length ratio of a radial region of $R_{1,k}$ satisfying a condition that the number of stacked layers of the first uncoated portion is 10 or more may be 30% or more, 40% or more, 50 % or more, 60% or more, 70% or more, and/or no more than 95%, no more than 90 %, or no more than 85%, based on a relative radial position region in which the first uncoated portion is bent.

The second electrode may include a second uncoated portion adjacent to an edge of the second electrode (e.g. at the long side end thereof) and extending beyond (and/or exposed out of) the separator along the winding axis direction of the electrode assembly, and when the number of total winding turns of the second electrode is defined as $n_2$ and a value obtained by dividing a winding turn index k (a natural number of 1 to $n_2$) at a $k^{th}$ winding turn location by the number of total winding turns $n_2$ is defined as a relative radial position $R_{2,k}$ of the winding turn index k, a length ratio of a radial region of $R_{2,k}$ satisfying a condition that the number of stacked layers of the second uncoated portion is 10 or more may be 30% or more, 40% or more, 50 % or more, 60% or more, 70% or more, and/or no more than 95%, no more than 90 %, or no more than 85%, based on a relative radial position region in which the second uncoated portion is bent.

The welding region of the current collector may lie on (overlap with, contact, be coupled to) the bending surface region in which the number of stacked layers of the uncoated portion is 10 or more by 50% or more. The welding region may lie on (overlap with, contact, be coupled) the bending surface region in which the number of stacked layers of the uncoated portion is 10 or more, in particular 12 or more or 18 or more, more particularly 20 or more or 22 or more, by 50 % or more, 60% or more, 75% or more.

The welding region of the current collector may have a welding strength of 2kf/cm$^2$ or more, in particular 5kf/cm$^2$ or more, more particularly 10kf/cm$^2$ or more.

Alternatively or additionally, there may be provided a battery, comprising: an electrode assembly in which a first electrode, a second electrode, and a separator interposed therebetween are wound based on an axis to define a core and an outer circumference, wherein the first electrode includes a first uncoated portion adjacent to an edge of the first electrode (e.g. at a long side end thereof) and extending beyond (and/or exposed out of) the separator along a winding axis direction of the electrode assembly adjacent to an edge of the separator (e.g. at a long side end thereof), and a part of the first uncoated portion is bent in a radial direction of the electrode assembly to form a first bending surface region, and in a partial region of the first bending surface region, a stack thickness of the first uncoated portion is 100 um to 975 um, a battery housing configured to accommodate the electrode assembly and electrically connected to one of the first electrode and the second electrode to have a first polarity; a sealing body configured to seal an open end of the battery housing; a terminal electrically connected to the other of the first electrode and the second electrode to have a second polarity and configured to have a surface exposed to the outside; and a first current collector welded to the first bending surface region and electrically connected to any one of the battery housing and the terminal, wherein the welding region of the first current collector overlaps with the partial region of the first bending surface region in which the stack thickness of the first uncoated portion is 100 um to 975 um, in particular 200 um to 800 um, more particularly 300 um to 600 um.

The first uncoated portion of the first electrode may be divided into a plurality of separate tabs that are independently bendable, the first electrode may include a height variable region in which heights of separate tabs are variable and a height uniform region in which heights of separate tabs are uniform, and in a region formed by bending the separate tabs included in the height uniform region along the radial direction of the electrode assembly in the first bending surface region, a ratio of a stack thickness of the uncoated portion of the first bending surface region to the height of the separate tab may be 1.0% to 16.3%, in particular 2.0 % to 12 %, more particularly 5% to 10 %.

The welding strength of the first current collector is in the range of $2kgf/cm^2$ or more, in particular $5kf/cm^2$ or more, more particularly $10kf/cm^2$ or more.

The second electrode may include a second uncoated portion adjacent to an edge of the second electrode (e.g. at a long side end thereof) and exposed out of the separator along the winding axis direction of the electrode assembly, in particular at said edge of the first electrode, a part of the second uncoated portion may be bent in the radial direction of the electrode assembly, in particular towards the core, to form a second bending surface region.In a partial region of the second bending surface region, a stack thickness of the second uncoated portion may be 50 um to 780 um, in particular 100 um to 600 um, more particularly 150 um to 450 um, the battery may comprise a second current collector welded to the second bending surface region and electrically connected to any one of the battery housing and the terminal, and the welding region of the second current collector may lie on (overlap with, contact, be coupled) the partial region of the second bending surface region in which the stack thickness of the second uncoated portion is 50 um to 780 um, in particular 100 um to 600 um, more particularly 150 um to 450 um.

The second uncoated portion of the second electrode may be divided into a plurality of separate tabs that are independently bendable, the second electrode may include a height variable region in which heights of separate tabs are variable and a height uniform region in which heights of separate tabs are uniform, and in a region formed by bending the separate tabs included in the height uniform region along the radial direction of the electrode assembly in the second bending surface region, a ratio of a stack thickness of the uncoated portion of the second bending surface region to the height of the separate tab may be 0.5% to 13.0%, in particular 1.0% to 10%, more particularly 2% to 5%.

The welding strength of the second current collector is in the range of $2kgf/cm^2$ or more, in particular $5kf/cm^2$ or more, more particularly $10kf/cm^2$ or more.

The welding region of the first current collector may lie on (overlap with, contact, be coupled to) the partial region of the first bending surface region in which the stack thickness of the first uncoated portion is 100 um to 975 um, in particular 200 um to 800 um, more particularly 300 um to 600 um, by 50% or more, in particular 60% or more, more particularly 75% or more.

The welding region of the second current collector may lie on (overlap with, contact, be coupled ) the partial region of the second bending surface region in which the stack thickness of the second uncoated portion is 50 um to 780 um, in particular 100 um to 600 um, more particularly 150 um to 450 um, by 50% or more, in particular 60% or more, more particularly 75% or more.

Alternatively or additionally, there may be provided a battery pack comprising at last one or more of the battery described above, and a vehicle comprising at last one or more of the battery pack.

## ADVANTAGEOUS EFFECTS

When bending the uncoated portions exposed at both ends of the electrode assembly, it is possible to prevent the separator or the active material layer from being damaged even if the welding power is increased by sufficiently securing an area where the uncoated portion is overlapped into 10 or more layers in the radial direction of the electrode assembly.

Since the structure of the uncoated portion adjacent to the core of the electrode assembly is improved, it is possible to prevent the cavity in the core of the electrode assembly from being blocked when the uncoated portion is bent. Thus, the electrolyte injection process and the process of welding the battery housing and the current collector may be carried out easily.

Since the bending surface region of the uncoated portion is directly welded to the current collector instead of a strip-shaped electrode tab, it is possible to provide an electrode assembly with improved energy density and reduced resistance.

It is possible to provide a battery having a structure that has a low internal resistance and improves welding strength between the current collector and the uncoated portion, and a battery pack and a vehicle including the battery.

In addition, the present disclosure may have several other effects, and such effects will be described in each embodiment, or any description that can be easily inferred by a person skilled in the art will be omitted for an effect.

## DESCRIPTION OF DRAWINGS

The accompanying drawings illustrate an embodiment of the present disclosure and together with the foregoing disclosure, serve to provide further understanding of the technical features of the present disclosure, and thus, the present disclosure is not construed as being limited to the drawing.

FIG. 1 is a plan view showing a structure of an electrode used for manufacturing a conventional tab-less cylindrical battery.

FIG. 2 is a diagram showing an electrode winding process of the conventional tab-less cylindrical battery.

FIG. 3 is a diagram showing a process of welding a current collector to a bending surface region of an uncoated portion in the conventional tab-less cylindrical battery.

FIG. 4 is a plan view showing a structure of an electrode.

FIG. 5 is a diagram showing the definitions of width, height and separation pitch of a separate tab.

FIG. 6 is a diagram for explaining the overlapping condition of separate tabs.

FIGS. 7a and 7b are diagrams showing an upper cross-sectional structure and a lower cross-sectional structure of an electrode assembly before the bent structure of an uncoated portion is formed, respectively.

FIGS. 8a and 8b are a sectional view and a perspective view showing an electrode assembly in which the uncoated portion is bent to form a bending surface region, respectively.

FIG. 9a is a sectional view showing an electrode assembly with a radius of 22 mm included in a cylindrical battery with a form factor of 4680, in which separate tabs of a first electrode are overlapped in a radial direction to form a bending surface region when the separate tabs are bent from the outer circumference toward the core without being overlapped in a circumferential direction.

FIG. 9b is a sectional view showing an electrode assembly with a radius of 22 mm included in the cylindrical battery with a form factor of 4680, in which the separate tabs of the first electrode are overlapped in the radial direction and in the circumferential direction to form a bending surface region, when the separate tabs are bent from the outer circumference toward the core while being overlapped in the circumferential direction.

FIG. 10 is a sectional view showing a cylindrical battery according to a first embodiment, taken along the Y-axis direction.

FIG. 11 is a sectional view showing a cylindrical battery according to a second embodiment, taken along the Y-axis direction.

FIG. 12 is a plan view showing a structure of a first current collector.

FIG. 13 is a perspective view showing a structure of a second current collector of the present disclosure.

FIG. 14 is a plan view showing a state in which a plurality of cylindrical batteries are electrically connected.

FIG. 15 is a partially enlarged plan view showing the electrical connection of the plurality of cylindrical batteries of FIG. 14 in detail.

FIG. 16 is a diagram schematically showing a battery pack including the cylindrical battery.

FIG. 17 is a diagram showing a vehicle including the battery pack .

EXAMPLES

Hereinafter, examples will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

First, an electrode assembly will be described. The electrode assembly is a jelly-roll type electrode assembly in which a first electrode and a second electrode having a sheet shape and a separator interposed therebetween are wound based on one axis. However, the present invention is not limited to the specific type of the electrode assembly and thus the electrode assembly may have any rolled structure known in the art.

Particularly, at least one of the first electrode and the second electrode includes an uncoated portion free of (i.e., not coated with) an active material adjacent to an edge of the first electrode (e.g. at a long side end thereof) in the winding direction. At least a part of the uncoated portion is used as an electrode tab by itself.

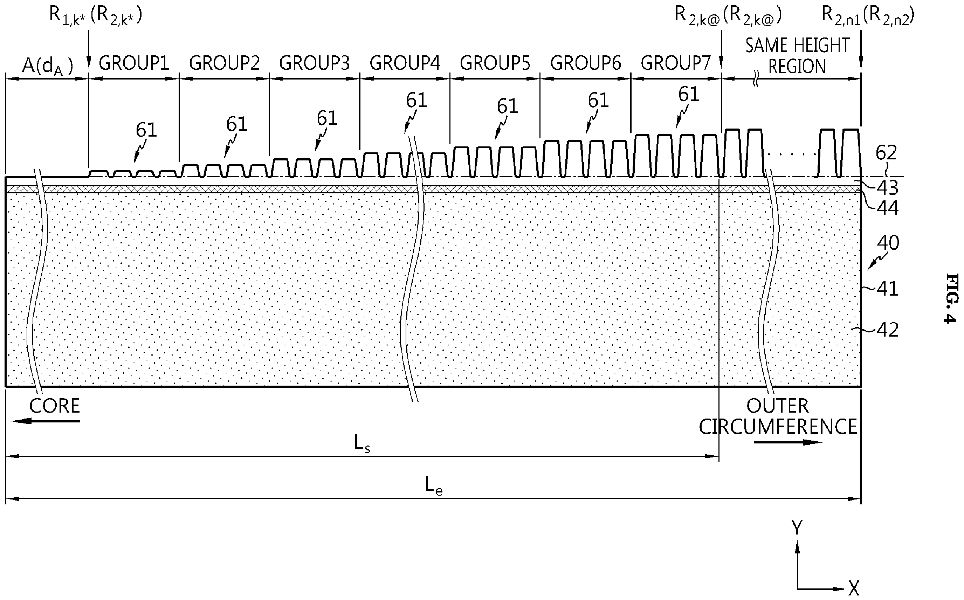

FIG. 4 is a plan view showing a structure of an electrode 40.

Referring to FIG. 4, the electrode 40 includes a current collector 41 made of metal foil and an active material layer 42. The metal foil may be aluminum or copper, and is appropriately selected according to the polarity of the electrode 40. The active material layer 42 is formed on at least one surface of the current collector 41, and includes an uncoated portion 43 at the adjacent to a lateral edge of the current collector (e.g. long side end) in the winding direction X. The uncoated portion 43 is an area where the active material is not coated. An insulating coating layer 44 may be formed at a boundary between the active material layer 42 and the uncoated portion 43. The insulating coating layer 44 is formed such that at least a part thereof overlaps with the boundary between the active material layer 42 and the uncoated portion 43. The insulating coating layer 44 may include a polymer resin and may include an inorganic filler such as $Al_2O_3$. The region of the uncoated portion 43 in which the insulating coating layer 44 is formed also corresponds to the uncoated portion 43 because there is no active material layer 42.

A bending part of the uncoated portion 43 of the electrode 40 may include a plurality of separate tabs 61. The plurality of separate tabs 61 may have a height increasing stepwise from the core toward the outer circumference. The region in which the height increases stepwise is the remaining region except for the uncoated portion adjacent to the core of the electrode assembly (a core-side uncoated portion A). The core-side uncoated portion A has a relatively lower height than the other portions.

The separate tab 61 may be formed by laser notching. The separate tab 61 may be formed by a known metal foil cutting process such as ultrasonic cutting or punching.

When the electrode 40 is wound, each separate tab 61 may be bent in the radial direction of the electrode assembly, for example, toward the core, at a bending line 62. The core refers to the cavity at the winding center of the electrode assembly. Each separate tab 61 has a geometric shape using the bending line 62 as a base. In the geometric shape, the width of a lower portion thereof may be greater than the width of an upper portion thereof. Also, in the geometric shape, the width of the lower portion may increase gradually or stepwise (not shown) toward the upper portion. The geometric shape may have a trapezoidal shape.

In a modified example, the geometric shape may be formed by connecting one or more straight lines, one or more curves, or a combination thereof. In one example, the geometric shape may be a polygon such as a triangle, a rectangle, or a parallelogram. In another example, the geometric shape may have an arc shape such as a semicircle, semi-ellipse, or the like.

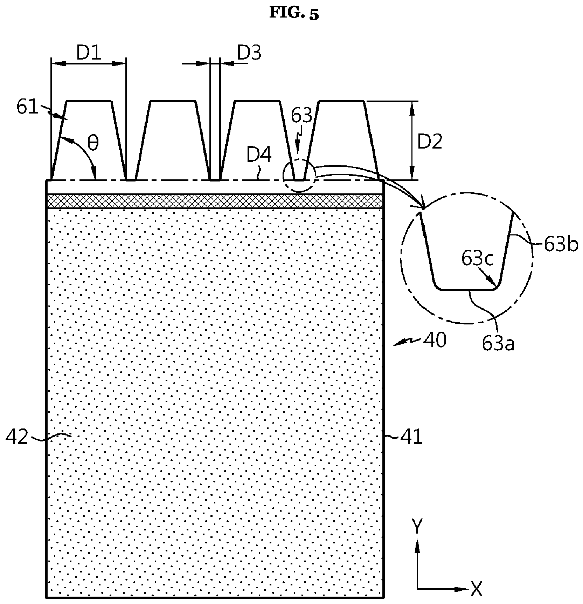

In order to prevent the active material layer 42 and/or the insulating coating layer 44 from being damaged during bending of the separate tab 61, it is preferable to provide a predetermined gap between the bottom (a portion indicated by D4 in FIG. 5) of the cut groove between the separate tabs 61 and the active material layer 42. This is because stress is concentrated near the bottom of the cut groove when the uncoated portion 43 is bent. The gap is particularly 0.2 mm to 4 mm. If the gap is adjusted within the corresponding numerical range, it is possible to prevent the active material layer 42 and/or the insulating coating layer 44 from being damaged near the bottom of the cut groove by the stress generated during bending of the separate tab 61. In addition, the gap prevents the active material layer 42 and/or the insulating coating layer 44 from being damaged due to tolerances during notching or cutting of the separate tabs 61.

The plurality of separate tabs 61 may form a plurality of separate tab groups from the core to the outer circumference. The width, height and separation pitch of separate tabs belonging to the same separate tab group may be substantially the same.

FIG. 5 is a diagram showing the definitions of width, height and separation pitch of the separate tab 61.

Referring to FIG. 5, a cut groove 63 is formed between the separate tabs 61. An edge of the lower portion of the cut groove 63 has a round shape. That is, the cut groove 63 includes a substantially flat bottom portion 63a and a round portion 63c. The round portion 63c connects the bottom portion 63a and the side 63b of the separate tab 61. In a modified example, the bottom portion 63a of the cut groove 63 may be replaced with an arc shape. In this case, the sides 63b of the separate tabs 61 may be smoothly connected by the arc shape of the bottom portion 63a.

The curvature radius of the round portion 63c may be greater than 0 and less than or equal to 0.5 mm, more particularly, greater than 0 and less than or equal to 0.1 mm. More The round portion 63c may have a curvature radius of 0.01 mm to 0.05 mm. When the curvature radius of the round portion 63c meets the above numerical range, it is possible to prevent cracks from occurring in the lower portion of the cut groove 63 while the electrode 40 is traveling in the winding process or the like.

The width (D1), height (D2) and separation pitch (D3) of the separate tab 61 are designed to prevent abnormal deformation of the uncoated portion 43 as much as possible while sufficiently increasing the number of stacked layers of the uncoated portion 43 in order to prevent the uncoated portion 43 from being torn during bending of the uncoated portion 43 and improve welding strength of the uncoated portion 43. Abnormal deformation means that the uncoated portion below the bending point does not maintain a straight state but sinks down to be deformed irregularly. The bending point may be a point spaced apart by 2 mm or less, particularly 1 mm or less, from the bottom of the cut groove 63 indicated by D4.

The width (D1) of the separate tab 61 is defined as a length between two points where two straight lines extending from both sides 63b of the separate tab 61 meet a straight line extending from the bottom portion 63a of the cut groove 63. The height of the separate tab 61 is defined as the shortest distance between the uppermost side of the separate tab 61 and a straight line extending from the bottom portion 63a of the cut groove 63. The separation pitch (D3) of the separate tab 61 is defined as a length between two points where a straight line extending from the bottom portion 63a of the cut groove 63 meets straight lines extending from two sidewalls 63b connected to the bottom portion 63a. When the side 63b and/or the bottom portion 63a is curved, the straight line may be replaced with a tangent line extending from the side 63b and/or the bottom portion 63a.

The width (D1) of the separate tab 61 may be adjusted in the range of 1 mm to 11 mm. If D1 is less than 1 mm, a non-overlapping area or an empty space (gap) is generated, thereby not to sufficiently secure welding strength when the separate tab 61 is bent toward the core. Meanwhile, if D1 exceeds 11 mm, there is a possibility that the uncoated portion 43 near the bending point (D4) is torn due to stress when the separate tab 61 is bent. The bending point D4 may be spaced apart from the bottom portion 63a of the cut groove 63. The separation distance may be 2 mm or less, particularly 1mm or less. Also, the height of the separate tab 61 may be adjusted in the range of 2 mm to 10 mm. If D2 is less than 2 mm, a non-overlapping area or an empty space (gap) may be generated, thereby not to sufficiently secure welding strength when the separate tab 61 is bent toward the core. Meanwhile, if D2 exceeds 10 mm, it is difficult to manufacture an electrode while uniformly maintaining the flatness of the uncoated portion in the winding direction X. That is, the over-height of the uncoated portion causes cambered surface in the uncoated portion. In addition, the separation pitch (D3) of the separate tab 61 may be adjusted in the range of 0.05 mm to 1 mm. If D3 is less than 0.05 mm, a crack may occur at the uncoated portion 43 near the bottom of the cut groove 63 due to stress when the electrode 40 travels in the winding process or the like. Meanwhile, if D3 exceeds 1 mm, a non-overlapping area where the separate tabs 61 do not overlap each other or an empty space (gap) may be generated, thereby not to sufficiently secure welding strength when the separate tab 61 is bent.

Meanwhile, when the current collector 41 of the electrode 40 is made of aluminum, it is more preferable to set the separation pitch D3 as 0.5 mm or more. When D3 is 0.5 mm or more, cracks may be prevented from occurring in the lower portion of the cut groove 63 even if the electrode 40 travels at a speed of 100 mm/sec or more under a tension of 300 gf or more in the winding process or the like.

According to the experimental results, when the current collector 41 of the electrode 40 is an aluminum foil with a thickness of 15 um and D3 is 0.5 mm or more, cracks do not occur in the lower portion of the cut groove 63 when the electrode 40 travels under the above traveling conditions.

Referring to FIG. 4 again, the width ($d_A$) of the core-side uncoated portion A is designed by applying a condition that it does not cover the core of the electrode assembly by 90% or more when the separate tabs 61 are bent toward the core.

In one example, the width ($d_A$) of the core-side uncoated portion A may increase in proportion to the bending length of the separate tab 61 of Group 1. The bending length corresponds to the height of the separate tab 61 based on the bending point 62 (FIG. 4).

In a specific example, when the electrode 40 is used to manufacture an electrode assembly of a cylindrical battery having a form factor of 4680, the width ($d_A$) of the core-side uncoated portion A may be set to 180 mm to 350 mm according to the diameter of the core of the electrode assembly.

The ratio $d_A/L_e$ of the width ($d_A$) of the core-side uncoated portion (A) to the long side length ($L_e$) of the electrode 40 may be 1% to 30%. In a large-size cylindrical battery with a diameter of 46 mm, the length of the electrode 40 is quite long from 3000 mm to 5000 mm, so the core-side uncoated portion (A) may be designed long enough. In cylindrical batteries with a form factor of 1865 or 2170, the electrode length is in the range of 600 mm to 1200 mm. In a typical cylindrical battery, it is difficult to design the ratio $d_A/L_e$ within the above numerical range.

The width of each separate tab group may be designed to constitute the same winding turn of the electrode assembly.

The width of each separate tab group may be designed to constitute a plurality of winding turns of the electrode assembly.

In one modification, the width and/or height and/or separation pitch of the separate tab 61 belonging to the same separate tab group may be increased or decreased gradually and/or stepwise and/or irregularly within the group or between the groups.

Groups 1 to 7 are only an example of separate tab groups. The number of groups and the number of separate tabs 61 included in each group may be adjusted to disperse stress as much as possible during the bending process of the uncoated portion 43, to sufficiently secure the welding strength, to minimize the gap between the sides 63b of the separate tabs 61, and to allow the separate tabs 61 to be overlapped into multiple layers along the radial direction of the electrode assembly without interfering with each other.

In one modification, separate tabs of some groups may be removed. In this case, the uncoated portion in a region from which the separate tabs are removed may be the same height as the core-side uncoated portion A.

The electrode 40 may be divided into a height variable region in which the height of the separate tab 61 changes along the long side direction and a height uniform region in which the height of the separate tab 61 is uniform.

In the electrode 40, the height variable region is a region corresponding to Groups 1 to 7, and the height uniform region is a region located near the outer circumference rather than Group 7.

In a specific example, the width ($d_A$) of the core-side uncoated portion A may be 180 mm to 350 mm. The width of Group 1 may be 35% to 55% of the width of the core-side uncoated portion A. The width of Group 2 may be 120% to 150% of the width of Group 1. The width of Group 3 may be 110% to 135% of the width of Group 2. The width of group 4 may be 75% to 90% of the width of group 3. The width of Group 5 may be 120% to 150% of the width of Group 4. The width of Group 6 may be 100% to 120% of the width of Group 5. The width of Group 7 may be 90% to 120% of the width of Group 6.

The reason that the widths of Groups 1 to 7 do not show a constant increase or decrease pattern is that the separate tab width gradually increases from Group 1 to Group 7, but the number of separate tabs included in the group is limited to an integer number and the thickness of the electrode 40 has a deviation along a winding direction X. Accordingly, the number of separate tabs may be reduced in a specific separate tab group. Therefore, the widths of the groups may show an irregular change pattern as in the above example from the core to the outer circumference.

Assuming that the width in the winding direction for each of the three separate tab groups consecutively adjacent to each other in the circumferential direction of the electrode assembly is $W_1$, $W_2$, and $W_3$, respectively, it is possible to include a combination of separate tab groups in which $W_3/W_2$ is smaller than $W_2/W_1$.

In the specific example, Groups 4 to 6 corresponds to this. The width ratio of Group 5 to Group 4 is 120% to 150%, and the width ratio of Group 6 to Group 5 is 100% to 120%, which is smaller than 120% to 150%.

In the plurality of separate tabs 61, the lower internal angle ($\Theta$) may increase from the core to the outer circumference. The lower internal angle ($\Theta$) corresponds to an angle between the straight line passing through the bending line 62 (FIG. 4) and the straight line (or, the tangent line) extending from the side 63b of the separate tab 61. When the separate tab 61 is asymmetrical in the left and right direction, the left internal angle and the right internal angle may be different from each other.

As the radius of the electrode assembly increases, the radius of curvature increases. If the lower internal angle ($\Theta$) of the separate tab 61 increases as the radius of the electrode assembly increases, the stress generated in the radial and circumferential directions when the separate tab 61 is bent may be relieved. In addition, when the lower internal angle ($\Theta$) is increased, when the separate tab 61 is bent, the area overlapping with the separate tab 61 at an inner side and the number of stacked layers of the separate tab 61 also increase, thereby securing uniform welding strength in the radial and circumferential directions and making the bending surface region flat.

If the angle of the lower internal angle ($\theta$) is adjusted as the radius of the electrode assembly increases, when the separate tabs 61 are bent, the separate tabs 61 may be overlapped in the circumferential direction as well as in the radial direction of the electrode assembly.

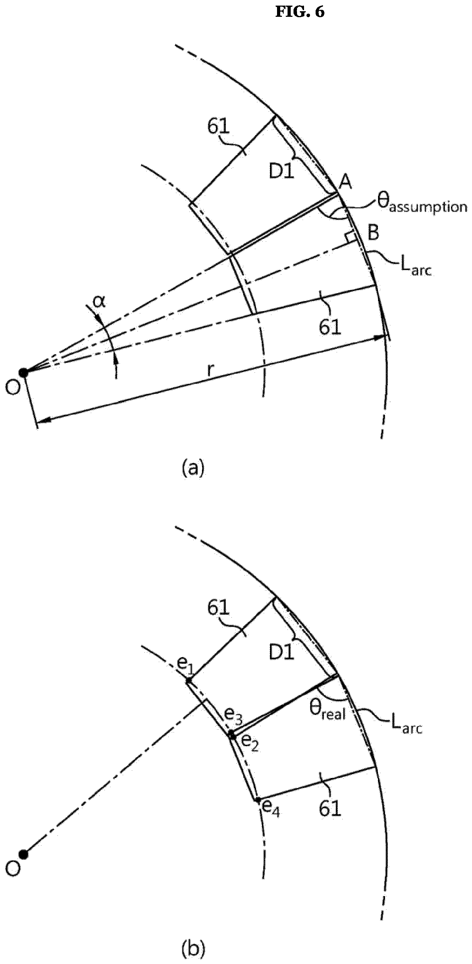

FIG. 6 (a) and (b) show an example in which the sides of the separate tabs 61 bent toward the core of the electrode assembly are spaced apart in parallel in an arbitrary winding turn with a radius of r based on the core center and an example in which the sides of the bent separate tabs 61 intersect each other.

Referring to FIG. 6, a pair of separate tabs 61 adjacent to each other are disposed in a winding turn having a radius of r with respect to the core center O of the electrode assembly. The width and height of the adjacent separate tabs 61 are substantially the same.

In FIG. 6(a), the lower internal angle $\theta_{assumption}$ is an angle in the assumption that the sides of the separate tab 61 are substantially parallel. The lower internal angle $\theta_{assumption}$ is an angle that can be uniquely determined by the arc length $L_{arc}$ corresponding to the lower portion of the separate tab 61. Meanwhile, $\theta_{real}$ is an actual lower internal angle when the sides of the adjacent separate tabs 61 intersect each other.

When the lower internal angles $\theta_{assumption}$ and $\theta_{real}$ satisfy Formula 1 below, the separate tabs 61 disposed in the winding turn located at the radius of r with respect to the core center O may lie on (overlap with, contact) each other in the circumferential direction.

<Formula 1>

$$\theta_{real} > \theta_{assumption}$$

$$\theta_{assumption} = 90° - 360°*(L_{arc}/2\pi r)*0.5$$

$$\theta_{real} > 90° - 360°*(L_{arc}/2\pi r)*0.5$$

Here, r is a radius of the winding turn where the separate tab 61 is disposed based on the core center of the electrode assembly.

$L_{arc}$ is a length of the arc (solid line) corresponding to the lower portion (dotted line) of the separate tab in a circle with a radius of r, and is uniquely determined from the width (D1) of the separate tab 61.

'360°*($L_{arc}/2\pi r$)' is a circumferential angle $\alpha$ of the lower portion (dotted line) of the separate tab 61.

'360°*($L_{arc}/2\pi r$)*0.5' is an angle between the line separate tab OB and the line separate tab OA in the right triangle OAB.

'90°- 360°*($L_{arc}/2\pi r$)*0.5' is an angle between the line separate tab OA and the line separate tab AB in the right triangle OAB, which approximately corresponds to the lower internal angle ($\theta_{assumption}$) of the separate tab 61.

The circumferential angle $\alpha$ of $L_{arc}$ at any winding turn radius r may be less than or equal to 45°. If the circumferential angle $\alpha$ exceeds 45°, the separate tab 61 is not bent easily. Therefore, at any radius r, $L_{arc}$ is greater than 1 mm, which is the lower limit of D1, and has a length of (45/36o)*($2\pi r$) or less.

The circumferential angle $\alpha$ may vary depending on a radius (r) of a winding turn at which the separate tab 61 is located. In one aspect, the circumferential angle

$\alpha$ of the separate tab 61 may increase gradually or stepwise along a radial direction of the electrode assembly within the above numerical range, or vice versa. In other aspect, the circumferential angle $\alpha$ of the separate tab 61 may increase gradually or stepwise and then decreases gradually or stepwise along a radial direction of the electrode assembly within the above numerical range, or vice versa. In another aspect, the circumferential angle $\alpha$ of the separate tab 61 may be substantially the same along a radial direction of the electrode assembly within the above numerical range.

When a width of each of the plurality of separate tabs 61 varies along a winding direction, the circumferential angle $\alpha$ may be in the range of 45 degrees or less and the width of each of the plurality of separate tabs 61 may be in the range of 1mm to 11mm.

In one example, when r is 20 mm and the circumferential angle $\alpha$ is 30°, $L_{arc}$ is 10.5 mm and $\theta_{assumption}$ is about 75 degrees. As another example, if r is 25 mm and the circumferential angle $\alpha$ is 25°, $L_{arc}$ is 10.9 mm and $\theta_{assumption}$ is about 77.5 degrees.

At any winding turn radius r, $(\theta_{real}/\theta_{assumption}-1)$ may be defined as an overlapping ratio of the separate tab 61 in the circumferential direction. The overlapping ratio of the separate tab 61 is particularly greater than o and equal to or less than 0.05. $\theta_{assumption}$ is the angle uniquely determined by the arc $L_{arc}$ at the winding turn radius r. If the overlapping ratio of the separate tab 61 is greater than 0.05, when the separate tabs 61 are bent, the sides of the separate tabs 61 may interfere with each other, and thus the separate tabs 61 may not be bent easily.

The degree of overlapping of the separate tabs 61 increases in proportion to the overlapping ratio. If the separate tabs 61 lie on (overlap with and/or contact) each other along the circumferential direction of the winding turn, the number of stacked layers of the separate tabs 61 may be further increased when the separate tabs 61 are bent. Embodiments for this will be described later.

When the electrode 40 is used to manufacture an electrode assembly of a cylindrical battery having a form factor of 4680, the radius of the core is 4 mm, and the height of the separate tab closest to the core is 3 mm, when the radius of the electrode assembly increases from 7 mm to 22 mm, the lower internal angle of the separate tabs 61 may increase stepwise in the range of 60° to 85°.

The radius range and the lower internal angle range may be determined from the form factor and the design specifications about the diameter of the core, the height of the separate tab closest to the core, the width (D1) of the separate tab 61, and the overlapping ratio.

Meanwhile, the overlapping condition of the separate tabs may be changed as follows. That is, when a virtual circle passing through a pair of separate tabs 61 adjacent to each other based on the core center O of the electrode assembly 40 is drawn as shown in FIG. 6(b), if an arc $e_1$-$e_2$ and an arc $e_3$-$e_4$ passing through separate

tab which lie on (overlap with and/or contact) each other 61, the pair of adjacent separate tabs may overlap with each other. The overlapping ratio of the separate tab 61 may be defined as a maximum value for a ratio of the length of the overlapping arc $e_2$-$e_3$ to the length of the arc $e_1$-$e_2$ (or, $e_3$-$e_4$) when a plurality of virtual circles with different radii are drawn. The overlapping ratio of the separate tab 61 may be greater than o and equal to or less than 0.05.

The shapes of the separate tabs 60 may be changed differently depending locations. In one example, a round shape (e.g., semicircle, semi-ellipse, etc.) that is advantageous for stress distribution is applied to a region where the stress is concentrated, and a polygonal shape (e.g., a rectangle, trapezoid, parallelogram, etc.) with the largest area may be applied a region where the stress is relatively low.

The separate tab structure may also be applied to the core-side uncoated portion A. However, if the separate tab structure is applied to the core-side uncoated portion A, when the separate tabs are bent according to the radius of curvature of the core, the end of the core-side uncoated portion A may be bent toward the outer circumference, which is called reverse forming. Therefore, the core-side uncoated portion A has no separate tab, or even if the separate tab structure is applied to the core-side uncoated portion A, it is desirable to control the width and/or height and/or separation pitch of the separate tabs 61 in consideration of the radius of curvature of the core such that reverse forming does not occur.

The electrode structure of the above embodiments (modifications) may be applied to the first electrode and/or the second electrode having different polarities included in the jelly-roll type electrode assembly. In addition, when the electrode structure of the above embodiments (modifications) is applied to any one of the first electrode and the second electrode, the conventional electrode structure may be applied to the other one. In addition, the electrode structures applied to the first electrode and the second electrode may not be identical but be different from each other.

For example, when the first electrode and the second electrode are a positive electrode and a negative electrode, respectively, any one of the above embodiments (modifications) may be applied to the first electrode and the conventional electrode structure (see FIG. 1) may be applied to the second electrode.

As another example, when the first electrode and the second electrode are a positive electrode and a negative electrode, respectively, any one of the above embodiments (modifications) may be selectively applied to the first electrode and any one of the above embodiments (modifications) may be selectively applied to the second electrode.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula $A[A_xM_y]O_{2+z}$ (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq_2$, $-0.1 \leq z \leq 2$; and the stoichiometric coefficients x, y and z are selected so that the compound maintains electrical neutrality).

In another example, the positive electrode active material may be an alkali metal compound $xLiM^1O_2$-$(1-x)Li_2M^2O_3$ disclosed in US6,677,082, US6,680,143, et al., wherein $M^1$ includes at least one element having an average oxidation state 3; $M^2$ includes at least one element having an average oxidation state 4; and $0 \leq x \leq 1$).

In still another example, the positive electrode active material may be lithium metal phosphate expressed by a general formula $Li_aM1_xFe1_{1-x}M^2_yP_{1-y}M^3_zO_{4-z}$ ($M^1$ includes at least one element selected from the Ti, Si, Mn, Co, Fe, V, Cr, Mo, Ni, Nd, Al, Mg and Al; $M^2$ includes at least one element selected from Ti, Si, Mn, Co, Fe, V, Cr, Mo, Ni, Nd, Al, Mg, Al, As, Sb, Si, Ge, V and S; $M^3$ includes a halogen element optionally including F; $0 < a \leq 2$, $0 \leq x \leq 1$, $0 \leq y < 1$, $0 \leq z < 1$; the stoichiometric coefficient a, x, y and z are selected so that the compound maintains electrical neutrality), or $Li_3M_2(PO_4)_3$ (M includes at least one element selected from Ti, Si, Mn, Fe, Co, V, Cr, Mo, Ni, Al, Mg and Al).

The positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as $TiO_2$ and $SnO_2$ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT), $BaTiO_3$, hafnia ($HfO_2$), $SrTiO_3$, $TiO_2$, $Al_2O_3$, $ZrO_2$, $SnO_2$, $CeO_2$, MgO, CaO, ZnO and $Y_2O_3$.

The electrode assembly according to the embodiment is a jelly-roll type electrode assembly 80 in which the electrode 40 of the embodiment is applied to a first electrode (positive electrode) and a second electrode (negative electrode). However, the present invention is not limited to specific kind of the electrode assembly.

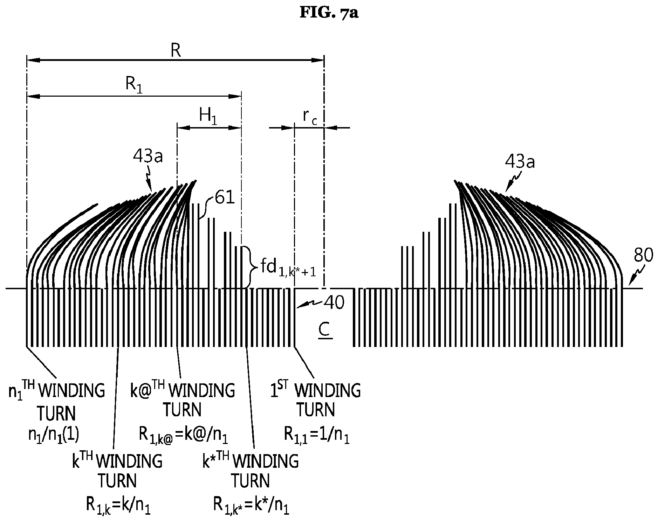

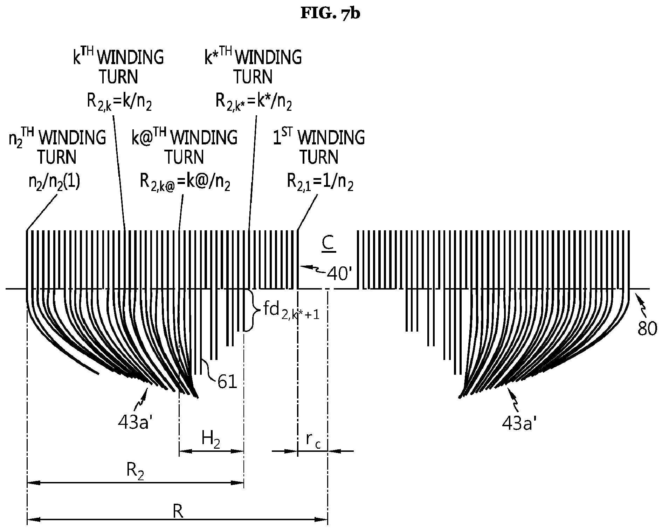

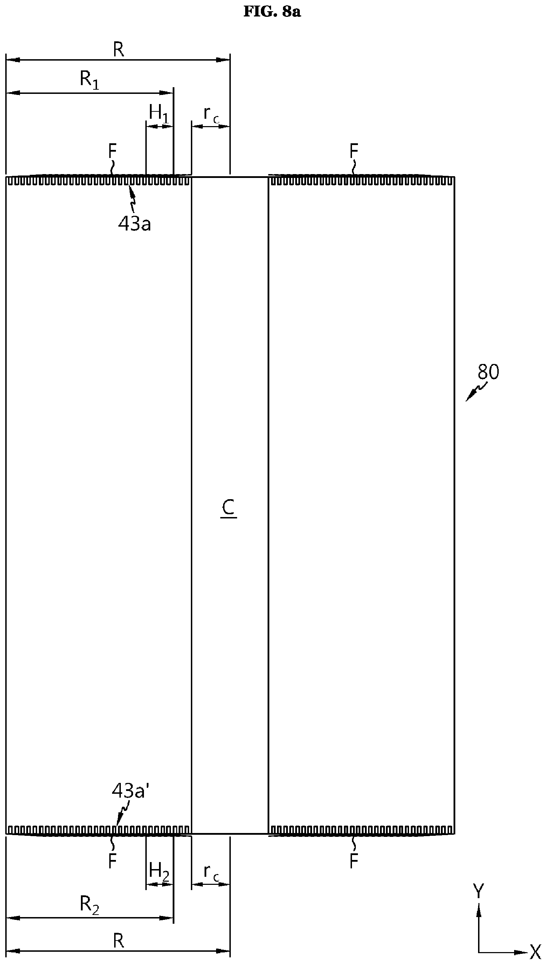

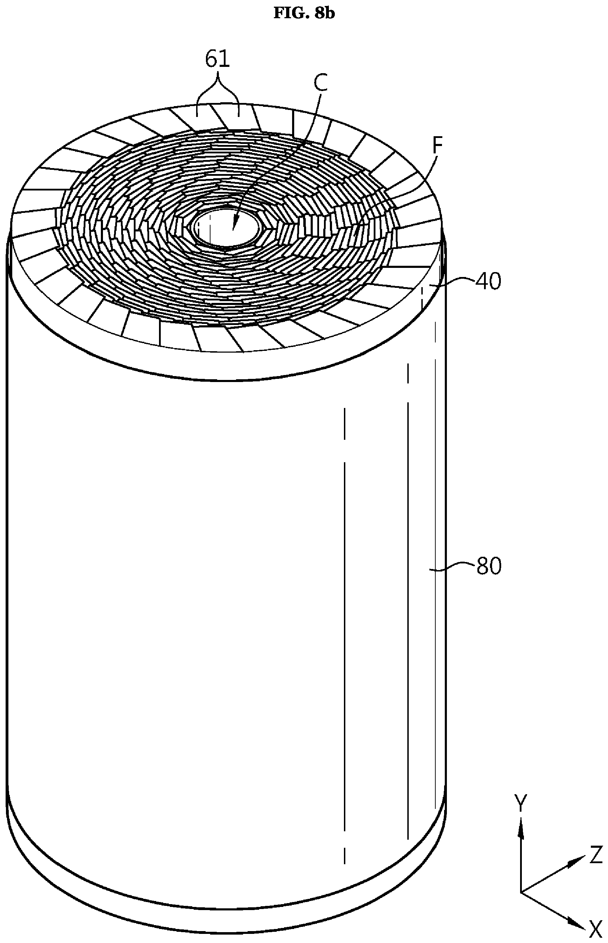

FIGS. 7a and 7b are drawings showing an upper cross-sectional structure and a lower cross-sectional structure of the electrode assembly 80 before the bending structures of the uncoated portions 43a, 43a' are formed, respectively. In addition, FIGS. 8a and 8b are a cross-sectional view and a perspective view showing the electrode assembly 80 in which the bending surface region F is formed while the uncoated portions 43a, 43a' are bent, respectively.

The electrode assembly 80 may be manufactured by the winding method described with reference to FIG. 2. For convenience of description, the protruding structures of the uncoated portions 43a, 43a' extending out of the separator are illustrated in detail, and the winding structure of the separator is not depicted. The uncoated portion 43a of the electrode assembly 80 protruding upward extends from the first electrode 40. The uncoated portion 43a' of the electrode assembly 80 protruding downward extends from the second electrode 40'. The end of the separator is marked by a dotted line.

The patterns in which the heights of the uncoated portions 43a, 43a' change are schematically illustrated. That is, the heights of the uncoated portions 43a, 43a' may vary irregularly depending on the position at which the cross-section is cut. For example, when the sides of the separate tabs 61 having a trapezoidal shape are cut, the height of the uncoated portion in the cross section is lower than the height (D2 in FIG. 4) of the separate tabs 61. In addition, the uncoated portions 43a, 43a' are not shown at the point where the cut groove 63 (FIG. 5) is cut.

Hereinafter, the structural features of the uncoated portion 43a of the first electrode 40 will be described in detail with reference to the drawings. The uncoated portion 43a' of the second electrode 40' may also have substantially the same characteristics as the uncoated portion 43a of the first electrode 40'.

Referring to FIGS. 7a, 7b, 8a and 8b, the uncoated portions 43a, 43a' of the first electrode 40 and the second electrode 40' are bent in the radial direction to form a bending surface region F. The first electrode 40 and the second electrode 40' are bent towards the core of the electrode assembly 80.

In the winding structure of the first electrode 40, assuming that the number of total winding turns of the first electrode 40 is $n_1$, when a value obtained by dividing a winding turn index k (a natural number of 1 to $n_1$) of a $k^{th}$ winding turn by the number of total winding turns $n_1$ is defined as a relative radial position $R_{1,k}$ of the $k^{th}$ winding turn, a radial length of the relative radial position $R_{1,k}$ region where the number of stacked layers of the uncoated portion 43a is 10 or more is 30% or more, 40% or more, 50 % or more, 60% or more, 70% or more, and/or no more than 95%, no more than 90 %, or no more than 85%, compared to the radial length of winding turns including the separate tabs.

For reference, the relative radial position of the $1^{st}$ winding turn is $1/n_1$ because the winding turn index is 1. The relative radial position of the $k^{th}$ winding turn is $k/n_1$. The relative radial position of the last $n_1^{th}$ winding turn is 1. That is, the relative radial position increases from $1/n_1$ to 1 from the core of the electrode assembly 80 to the outer circumference thereof.

In the winding structure of the second electrode 40', assuming that the number of total winding turns of the second electrode 40' is $n_2$, when a value obtained by dividing a winding turn index k (a natural number of 1 to $n_2$) at a $k^{th}$ winding turn location by the number of total winding turns $n_2$ is defined as a relative radial position $R_{2,k}$ of the $k^{th}$ winding turn, a radial length of the relative radial position $R_{2,k}$ region where the number of stacked layers of the uncoated portion is 10 or more is 30% or more, 40% or more, 50 % or more, 60% or more, 70% or more, and/or no more than 95%, no more than 90 %, or no more than 85%, compared to the radial length of winding turns in which the separate tabs are disposed.

For reference, the relative radial position of the $1^{st}$ winding turn is $1/n_2$ because the winding turn index is 1. The relative radial position of the $k^{th}$ winding turn is $k/n_2$. The relative radial position of the last $n_2^{th}$ winding turn is 1. That is, the relative radial position increases from $1/n_2$ to 1 from the core of the electrode assembly 80 to the outer circumference thereof.

The winding turn indexes k of the first electrode 40 and the second electrode 40' should be understood as variables to which different values can be assigned.

When the uncoated portions 43a, 43a' are bent in the radial direction, the bending surface regions F are formed on the upper and lower portions of the electrode assembly 80 as shown in FIGS. 8a and 8b.

Referring to FIGS. 8a and 8b, a plurality of separate tabs 61 are overlapped into multiple layers along the radial direction while being bent toward the core C of the electrode assembly 80.

The number of stacked layers of the separate tabs 61 may be defined as the number of separate tabs 61 that intersect an imaginary line when the imaginary line is drawn in the winding axis direction (Y) at any radial point on the bending surface region F.

The number of stacked layers of the separate tabs 61 may be 10 or more in a radius region of at least 30%, 40% or more, 50 % or more, 60% or more, 70% or more, and/or no more than 95%, no more than 90 %, or no more than 85%, based on the radial length ($R_1$) of the winding turns including the separate tabs 61 in order to sufficiently increase the welding strength between the bending surface region F and the current collector and to prevent the separator and the active material layer from being damaged during the welding process.

The current collector may be laser-welded to the bending surface region F of the uncoated portion 43a, 43a'. Alternatively, other known welding techniques such as resistance welding may be used. When laser welding is applied, it is desirable to increase the laser power to sufficiently secure the welding strength. If the laser power is increased, the laser may penetrate through the overlapping regions of the uncoated portions 43a, 43a' into the electrode assembly 80, which may damage the separator and the active material layer. Therefore, in order to prevent laser penetration, it is preferable to increase the number of stacked layers of the uncoated portions 43a, 43a' in the welding region to a certain level or more. In order to increase the number of stacked layers of the uncoated portions 43a, 43a', the height of the separate tabs 61 must be increased. However, if the height of the separate tabs 61 is increased, the uncoated portions 43a, 43a' may be cambered during the manufacturing process of the electrode 40. Therefore, it is desirable to adjust the height of the separate tabs 61 to an appropriate level, particularly 2 mm to 10 mm.

If the radius region where the number of stacked layers of the separate tabs 61 is 10 or more is designed to be 30% or more, 40% or more, 50 % or more, 60% or more, 70% or more, and/or no more than 95%, no more than 90 %, or no more than 85%, compared to $R_1$ in the bending surface region F and the region where the separate tabs 61 are overlapped into 10 or more layers is laser-welded to the current collector, even though the power of laser is increased, the overlapping portion of the uncoated portion sufficiently masks the laser to prevent the separator and the active material layer from being damaged by the laser. In addition, since the number of stacked layers of the separate tabs 61 is large in the area where laser is irradiated, welding beads are formed with sufficient volume and thickness. Accordingly, the welding strength may be sufficiently secured and the resistance of the welding interface may also be lowered.

When welding the current collector, the laser power may be determined by a desired welding strength between the bending surface region F and the current collector. The welding strength increases in proportion to the number of stacked layers of the uncoated portions 43a, 43a'. This is because as the number of stacked layers of the uncoated portions 43a, 43a' increases, the volume of the weld beads formed by the laser increases.

The welding strength may be 2 $kgf/cm^2$ or more, more particularly 4 $kgf/cm^2$ or more. If the welding strength satisfies the above numerical range, even if severe vibration is applied to the electrode assembly 80 along the winding axis direction and/or the radial direction, the properties of the welding interface do not deteriorate, and the volume of the welding beads is sufficient to reduce the resistance of the welding interface. The power of the laser for realizing the above welding strength condition varies depending on the laser equipment, and may be appropriately adjusted in the range of 250W to 320W, or in the range of 40% to 100% of the maximum laser power specification.

The welding strength may be defined as a tensile force per unit area ($kgf/cm^2$) of the current collector when the current collector starts to separate from the bending surface region F. Specifically, after the current collector is completely welded, a tensile force is applied to the current collector, but the magnitude of the tensile force is gradually increased. As the tensile force is increased, the uncoated portions 43a, 43a' begin to separate from the welding interface. At this time, the value obtained by dividing the tensile force applied to the current collector by the area of the current collector is the welding strength.

The first electrode 40 may include a current collector (foil) 41 and an active material coating layer 42 formed on at least one surface of the current collector 41. Here, the current collector 41 may have a thickness of 10 um to 25 um, and an interval between winding turns adjacent in a radial direction of the electrode assembly 80 may be 200 um to 500 um. The current collector 41 may be made of aluminum.

The second electrode 40' may include a current collector (foil) and an active material coating layer formed on at least one surface of the current collector. Here, the current collector may have a thickness of 5 um to 20 um, and an interval between winding turns adjacent in the radial direction of the electrode assembly 80 may be 200 um to 500 um. The current collector may be made of copper.

Referring to FIGS. 4, 7a and 7b, in the winding structure of the first electrode 40, the uncoated portion of the region from the relative radial position $R_{1,1}$ of the first electrode 40 to a preset first relative radial position $R_{1,k^*}$ may have a smaller height than the uncoated portion of the region from a relative radial position $R_{1,k^*+1}$ of a $k^*+1^{th}$ winding turn to a relative radial position 1. The height of the uncoated portion of the region from the relative radial position $R_{1,1}$ to the preset first relative radial position $R_{1,k^*}$ corresponds to the height of the uncoated portion of the core-side uncoated portion A (see FIG. 4).

In the winding structure of the first electrode 40, the uncoated portion of the region from the relative radial position $R_{1,1}$ to the first relative radial position $R_{1,k^*}$ may have a smaller height than the bending surface region F formed by overlapping the bent uncoated portions.

In the winding structure of the first electrode 40, the uncoated portion of the region from the relative radial position $R_{1,1}$ to the first relative radial position $R_{1,k^*}$ may not be bent toward the core of the electrode assembly 80.

Similar to the first electrode 40, in the winding structure of the second electrode 40', the uncoated portion of the region from the relative radial position $R_{2,1}$ to the preset first relative radial position $R_{2,k^*}$ may have a smaller height than the uncoated portion of the region from the relative radial position $R_{2,k^*+1}$ of the $k^*+1^{th}$ winding turn to the relative radial position 1.

In addition, in the region from the relative radial position $R_{2,1}$ to the preset first relative radial position $R_{2,k^*}$, the uncoated portion may have a smaller height than the bending surface region F formed by overlapping the bent uncoated portions.

The uncoated portion of the region from the relative radial position $R_{2,1}$ to the first relative radial position $R_{2,k^*}$ may not be bent towards the core of the electrode assembly.

In the winding structure of the second electrode 40', the uncoated portion of the region from the relative radial position $R_{2,1}$ to the first relative radial position $R_{2,k^*}$ may have a smaller height than the uncoated portion of the region from the relative radial position $R_{2,k^*+1}$ to the relative radial position 1 and may not be bent toward the core.

In the winding structure of the first electrode 40, the bending length $fd_{1,k^*+1}$ of the uncoated portion of the relative radial position $R_{1,k^*+1}$ may be shorter than the radial length from the relative radial position $R_{1,1}$ to the relative radial position $R_{1,k^*}$. Therefore, the core C of the electrode assembly 80 may not be blocked by the bending part of the uncoated portion 43a located in the region from the relative radial position $R_{1,k^*+1}$ to the relative radial position 1.

Alternatively, the core C of the electrode assembly 80 may not be blocked by the bent portion of the uncoated portion 43a located in the region from the relative radial position $R_{1,k^*+1}$ to the relative radial position 1 by 90% or more based on its radius ($r_c$) thereof. That is, a radial region of the core C corresponding to at least 0 to 0.9 $r_c$ may not be blocked by the bent portion of the uncoated portion 43a.

The bending length $fd_{1,k^*+1}$ of the uncoated portion 43a located at the relative radial position $R_{1,k^*+1}$, the radius ($r_c$) of the core, and the distance ($d_{1,k^*+1}$) from the center of the core C to the relative radial position $R_{1,k^*+1}$ may satisfy Formula 2 below.

$$<\text{Formula 2}>$$

$$fd_{1,k^*+1} + 0.9^*r_c \leq d_{1,k^*+1}$$

In the winding structure of the second electrode 40', the uncoated portion of the region from the relative radial position $R_{2,1}$ to the first relative radial position $R_{2,k^*}$ may have a smaller height than the uncoated portion of the region from the relative radial position $R_{2,k^*+1}$ to the relative radial position 1 and may not be bent toward the core.

In the winding structure of the second electrode 40', the bending length $fd_{2,k^*+1}$ of the uncoated portion located at the relative radial position $R_{2,k*+1}$ may be shorter than the length from the relative radial position $R_{2,1}$ to the first relative radial position $R_{2,k*}$. Therefore, the core C of the electrode assembly 80 may not be blocked by the bending part of the uncoated portion located in the region from the relative radial position $R_{2,k*+1}$ to the relative radial position 1.

Alternatively, the core C of the electrode assembly 80 may not be blocked by the bent portion of the uncoated portion 43a' located at the relative radial position $R_{2,k*+1}$ by 90% or more based on its radius ($r_c$).

The bending length $fd_{2,k*+1}$ of the uncoated portion 43a' located at the relative radial position $R_{2,k*+1}$, the radius ($r_c$) of the core, and the distance ($d_{2,k*+1}$) from the center of the core C to the relative radial position $R_{2,k*+1}$ may satisfy Formula 3 below.

<Formula 3>

$$fd_{2,k*+1} + 0.9 {}^*r_c \le d_{2,k*+1}$$

In the winding structure of the first electrode 40, the uncoated portion of the second electrode 40' from a second relative radial position $R_{1,k@+1}$ of the preset $k@+1^{th}$ winding turn to the relative radial position 1 is divided into a plurality of separate tabs 61, and the height of the plurality of separate tabs 61 may be substantially the same from the relative radial position $R_{1,k@+1}$ to the relative radial position 1.

Meanwhile, in the winding structure of the first electrode 40, the uncoated portion 43a of a region from the relative radial position $R_{1,k*+1}$ to the second relative radial position $R_{1,k@}$ of a preset $k@^{th}$ winding turn is divided into a plurality of separate tabs 61, whose heights may increase stepwise or gradually toward the outer circumference. Therefore, the region from the relative radial position $R_{1,k*+1}$ to the relative radial position $R_{1,k@}$ corresponds to the height variable region.

For example, in the winding structure of the first electrode 40 with a radius of 22 mm, when the radial length of the height variable region of the separate tab is defined as $H_1$ and the ratio of $H_1$ to the radius ($R-r_c$) of the winding structure of the first electrode 40 except for the core C is defined as a height variable region ratio ($H_1/(R-r_c)$), the ratio of the height variable region may be calculated as follows by rounding off to the zero decimal place.

In Example 1, R may be 22 mm, the core radius ($r_c$) may be 5 mm, and R-$r_c$ may be 17 mm. The height of the separate tab 61 may be changed in 8 steps from 2 mm to 10 mm in the radius region of 7 mm to 15 mm. After radius 15 mm, the height of the separate tab 61 is maintained at 10 mm. Since $H_1$ is 8 mm, the height variable region ratio may be 47% (8 mm /17 mm).

In Example 2, R and $r_c$ are the same as in Example 1. The height of the separate tab 61 may be changed in 7 steps from 2 mm to 9 mm in the radius region of 7 mm to 14 mm. After radius 14 mm, the height of the separate tab 61 is maintained at 9 mm. Since $H_1$ is 7 mm, the height variable region ratio may be 41% (7 mm /17 mm).

In Example 3, R and $r_c$ are the same as in Example 1. The height of the separate tab 61 may be changed in 6 steps from 2 mm to 8 mm in the radius region of 7 mm to 13 mm. After radius 13 mm, the height of the separate tab 61 is maintained at 8 mm. Since $H_1$ is 6 mm, the height variable region ratio maybe 35% (6 mm /17 mm).

In Example 4, R and $r_c$ are the same as in Example 1. The height of the separate tab 61 may be changed in 5 steps from 2 mm to 7 mm in the radius region of 7 mm to 12 mm. After radius 12 mm, the height of the separate tab 61 is maintained at 7 mm. Since $H_1$ is 5 mm, the height variable region ratio may be 29% (5 mm /17 mm).

In Example 5, R and $r_c$ are the same as in Example 1. The height of the separate tab 61 may be changed in 4 steps from 2 mm to 6 mm in the radius region of 7 mm to 11 mm. After radius 11 mm, the height of the separate tab 61 is maintained at 6 mm. Since $H_1$ is 4 mm, the height variable region ratio may be 24% (4 mm /17 mm).

In Example 6, R and $r_c$ are the same as in Example 1. The height of the separate tab 61 may be changed in 3 steps from 2 mm to 5 mm in the radius region of 7 mm to 10 mm. After radius 10 mm, the height of the separate tab 61 is maintained at 5 mm. Since $H_1$ is 3 mm, the height variable region ratio maybe 18% (3 mm /17 mm).

In Example 7, R and $r_c$ are the same as in Example 1. The height of the separate tab 61 may be changed in 2 steps from 2 mm to 4 mm in the radius region of 7 mm to 9 mm. After radius 9 mm, the height of the separate tab 61 is maintained at 4 mm. Since $H_1$ is 2 mm, the height variable region ratio may be 12% (2 mm /17 mm).

In Example 8, R and $r_c$ are the same as in Example 1. The height of the separate tab 61 may be changed stepwise in 1 step from 2 mm to 3 mm in the radius region of 7 mm to 8 mm. After radius 8 mm, the height of the separate tab 61 is maintained at 3 mm. Since $H_1$ is 1 mm, the height variable region ratio may be 6% (1 mm /17 mm).

In summary, when R is 22 mm and $r_c$ is 5 mm, if the height of the separate tab in the radius region of 7 mm to 15 mm changes in the range of 2 mm to 10 mm in any one of one to eight steps, the height variable region ratio may be 6% to 47%.

The numerical range of the height variable region ratio may be changed according to the size of the radius ($r_c$) of the core C. Since the calculation method is similar to the above, only the results are disclosed.

In an example, when R is 22 mm and $r_c$ is 4 mm, if the height of the separate tab in the radius region of 6 mm to 14 mm changes stepwise in the range of 2 mm to 10 mm in any one of one to eight steps, the height variable region ratio may be 6% to 44%.

In another example, when R is 22 mm and $r_c$ is 3 mm, if the height of the separate tab in the radius region of 5 mm to 13 mm changes stepwise in the range of 2 mm to 10 mm in any one of one to eight steps, the height variable region ratio may be 5% to 42%.

In still another example, when R is 22 mm and $r_c$ is 2 mm, if the height of the separate tab in the radius region of 4 mm to 12 mm changes stepwise in the range of 2 mm to 10 mm in any one of one to eight steps, the height variable region ratio may be 5% to 40%.

From the above calculation examples, when the radius ($r_c$) of the core C is changed in the range of 2 mm to 5 mm, the height variable region ratio is 5% to 47%. When the radius of the electrode assembly 80 is constant, the lower and upper limits of the height variable region ratio decrease accordingly as the radius ($r_c$) of the core C decreases.

Meanwhile, the upper and lower limits of the height variable region ratio may be changed by the height change amount of the separate tab 61 per 1 mm increase in radius and the number of height changes.

In one example, when the height of the separate tab 61 changes by 0.2 mm per 1 mm increase in radius, the lower and upper limits of the height variable region ratio are 1% and 9%, respectively.

In another example, when the height of the separate tab 61 changes by 1.2 mm per 1 mm increase in radius, the lower and upper limits of the height variable region ratio are 6% and 56%, respectively.

From the above examples, the height variable region ratio is particularly 1% to 56%. If the height variable region ratio of the separate tab 61 satisfies the above numerical range, the ratio of relative radial positions where the number of stacked layers of the uncoated portion 40 is 10 or more may be at least 30% of the radial length ($R_1$) of the winding turns including the separate tab 61. As will be described later, this configuration provides useful effects in terms of welding strength and resistance of the current collector.

Referring to FIGS. 4 and 7b again, in the winding structure of the second electrode 40', the uncoated portion of the region from the relative radial position $R_{2,k*+1}$ to a second relative radial position $R_{2,k@}$ of the preset $k@^{th}$ winding turn is also divided into a plurality of separate tabs 61, the height of the plurality of separate tabs 61 may increase stepwise or progressively toward the outer circumference. Therefore, the region from the relative radial position $R_{2,k*+1}$ to the relative radial position $R_{2,k@}$ corresponds to the height variable region.

In the winding structure of the second electrode 40', when the radial length of the height variable region is defined as $H_2$ and the ratio of $H_2$ to the radius ($R-r_c$) of the winding structure of the second electrode 40' except for the core C is defined as the height variable region ratio ($H_2/(R-r_c)$), the height variable region ratio is particularly 1% to 56%, like the first electrode.

If the height variable region ratio for the separate tab 61 of the uncoated portion 43a' satisfies the above numerical range, the ratio of the radial length of the relative radial positions where the number of stacked layers of the uncoated portion 40 is 10 or more may be at least 30% compared to the radial length ($R_2$) of the winding turns including the separate tab 61.

In the winding structure of the second electrode 40', the uncoated portion of the second electrode 40' from the second relative radial position $R_{2,k@+1}$ of the preset $k@+1^{th}$ winding turn to the relative radial position 1 is divided into a plurality of separate tabs 61, and the height of the plurality of separate tabs 61 may be substantially the same from the relative radial position $R_{2,k@+1}$ to the relative radial position 1.

In the winding structure of the first electrode 40, the uncoated portion 43a bent toward the core is divided into a plurality of separate tabs 61, and at least one of a height in a winding axis direction and a width in the winding direction of the plurality of separate tabs 61 may increase gradually or stepwise from the core toward the outer circumference individually or in groups.

Similarly, in the winding structure of the second electrode 40', the uncoated portion 43a' bent toward the core is divided into a plurality of separate tabs 61, and at least one of a height in the winding axis direction and a width in the winding direction of the plurality of separate tabs 61 may increase gradually or stepwise from the core toward the outer circumference individually or in groups.

When the bending part of the uncoated portions 43a, 43a' is divided into a plurality of separate tabs 61, each of the plurality of separate tabs 61 may satisfy at least one condition among a width (D1 in FIG. 5) condition of 1 mm to 11 mm in the winding direction; a height (D2 in FIG. 5) condition of 2 mm to 10 mm in the winding axis direction; and a separation pitch (D3) condition of 0.05 mm to 1 mm in the winding direction.

A predetermined gap may be provided between the bottom portion of the cut groove of the separate tab 61 (a portion indicated by D4 in FIG. 5) and the active material layer 42. The gap may be 0.2 mm to 4 mm.

Referring to FIG. 4, when the bending part of the uncoated portions 43a, 43a' is divided into a plurality of separate tabs 61, the plurality of separate tabs 61 may form a plurality of separate tab groups from the core to the outer circumference, and separate tabs belonging to the same separate tab group may be the same as each other in terms of at least one of the width in the winding direction, the height in the winding axis direction, and the separation pitch in the winding direction.

At least a part of the plurality of separate tab groups may be disposed at the same winding turn of the electrode assembly 80. In one example, the separate tabs included in each group may constitute at least one winding turn in the winding structure of the electrode assembly 80. In another example, the separate tabs included in each group may constitute two or more winding turns in the winding structure of the electrode assembly 80.

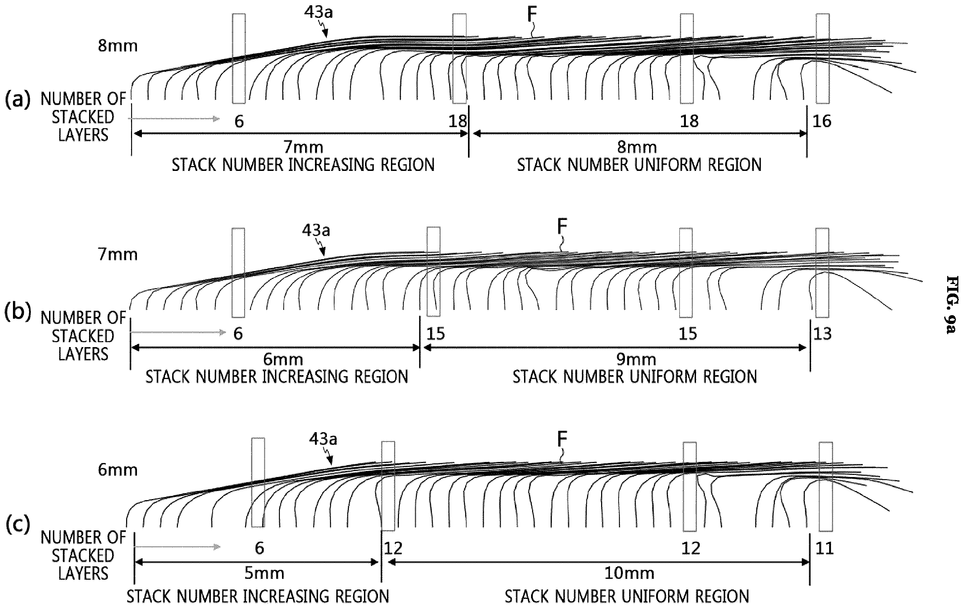

FIG. 9a is a partially sectioned view showing an electrode assembly having a radius of 22 mm and included in a cylindrical battery having a form factor of 4680, where the uncoated portion 43a of the first electrode 40 divided into a plurality of separate tabs 61 is bent from the outer circumference toward the core to form a bending surface region F, in a part of the bending surface region F, the uncoated portion 43a is overlapped into 10 or more layers along the radial direction, and the stack number increasing region and the stack number uniform region appear along the radial direction of electrode assembly 80.

Referring to FIG. 9a, the number of stacked layers of the uncoated portion 43a in the bending surface region F sequentially increases from the outer circumference of the electrode assembly 80 toward the core and reaches a maximum value, and the maximum value is maintained in a predetermined radius region and then decreases by 1 or 2 near the core.

Hereinafter, the radius region in which the number of stacked layers of the uncoated portion 43a increases sequentially from the outer circumference of the electrode assembly 80 toward the core up to the maximum value is defined as the stack number increasing region, and the region in which the number of stacked layers of the uncoated portion 43a is maintained at the maximum value and the remaining region near the core are defined as the stack number uniform region together. Since the stack number uniform region includes the region in which the number of stacked layers of the uncoated portion 43a is maintained at the maximum value, the bending surface region F is flatter than the other regions, which corresponds to an optimal welding region.

In FIG. 9a, the uncoated portion 43a is divided into separate tabs of a trapezoidal shape as shown in FIG. 5, and only the upper portion of the uncoated portion 43a is depicted based on the bottom portion 63a of the cut groove 63. The uncoated portion 43a is not shown in a portion corresponding to the cross section of the cut groove 63.

The points where the separate tabs 61 are actually bent are not exactly the same, and are spaced apart from the lower end of the cut groove 63 by a predetermined distance. As the number of stacked layers of the uncoated portion 43a increases toward the core, resistance to the overlapping occurs, so it is preferable to perform bending at a point spaced apart from the lower end of the cut groove 63 by a predetermined distance. The separation distance is 2 mm or less, particularly 1 mm or less. If there is a separation distance, the separate tabs 61 are overlapped better in the radial direction.

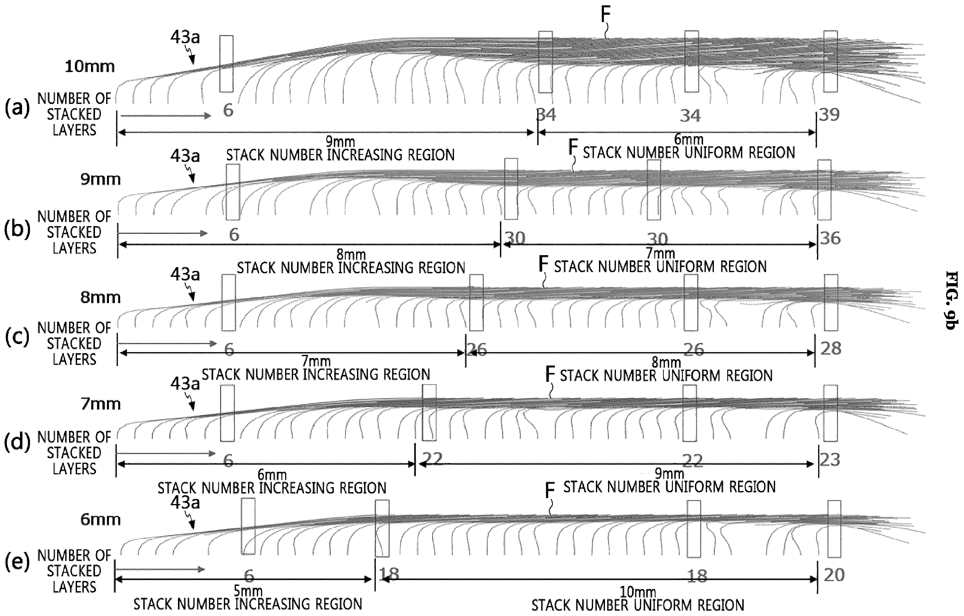

The bending surface region F is formed as the separate tabs located at different winding turns are overlapped in the radial direction of the electrode assembly 80. Shown in FIG. 9a, the separate tabs 61 are not overlapped in the circumferential direction. That is, a gap exists between the sides of the separate tabs 61 as shown in FIG. 6(a). The condition of the gap may be satisfied by adjusting width, height, separation pitch, lower internal angle, or the like of the separate tabs. The bending surface region F when the separate tabs are overlapped in the circumferential direction will be described later with reference to FIG. 9b.

The radius ($r_c$) of the core of the electrode assembly 80 is 4 mm. Also, the height of the separate tab starts from 3 mm. There is no separate tab in the uncoated portion 43a from 4 mm to 7 mm based on the radius of the electrode assembly. That is, separate tabs exist in the region with a radius of 7 mm to 22 mm among the total radius of 22 mm of the electrode assembly, and the width of the radius region where separate tab 61 exists is 15 mm. If the core is covered by the separate tab by 10% at maximum based on the radius ($r_c$) of the core, the point where separate tabs start to be disposed may be moved toward the core.

In the winding structure, a separate tab with a height of 3 mm is disposed from the winding turn with a radius of approximately 7 mm. The height of the separate tab increases from the radius 7 mm of the winding structure by 1 mm per 1 mm increase in radius from the core toward the outer circumference. The period for the height increment of the separate tab may be changed in the range of 0.2 mm to 1.2 mm per unit radius (1mm).

FIG. 9a-(a) is a case where the maximum height of the separate tab is 8 mm. In this case, the separate tab is disposed from the point where the radius of the electrode assembly becomes 7 mm from the core center. Only then, when the separate tab with a height of 3 mm is bent toward the core, the separate tab does not cover the core with a radius of 4 mm. The height of the separate tab increases in 5 steps from 3 mm to 8 mm when the radius increases from 7 mm to 12 mm. In addition, the height of the separate tab is maintained at 8 mm from 12 mm to 22 mm in radius. The height variable region of the separate tab is in the radius range of 7 mm to 12 mm, and the height variable region ratio is 28% (5/18, rounded to zero decimal place, this will be applied identically below).

FIG. 9a-(b) is a case where the maximum height of the separate tab is 7 mm. Also in this case, the separate tab is disposed from the point where the radius of the electrode assembly becomes 7 mm from the core center. Only then, when the separate tab with a height of 3 mm is bent toward the core, the separate tab does not cover the core with a radius of 4 mm. The height of the separate tab increases in 4 steps from 3 mm to 7 mm when the radius increases from 7 mm to 11 mm. In addition, the height of the separate tab is maintained at 7 mm from 11 mm to 22 mm in radius. The height variable region of the separate tab is in the radius region of 7 mm to 11 mm, and the height variable region ratio is 22% (4/18).

FIG. 9a-(c) is a case where the maximum height of the separate tab is 6 mm. Also in this case, the separate tab is disposed from the point where the radius of the electrode assembly becomes 7 mm from the core center.

Only then, when the separate tab with a height of 3 mm is bent toward the core, the separate tab does not cover the core with a radius of 4 mm. The height of the separate tab increases in 3 steps from 3 mm to 6 mm when the radius increases from 7 mm to 10 mm. In addition, the height of the separate tab is maintained at 6 mm from 10 mm to 22 mm in radius. The height variable region of the separate tab is in the radius region of 7 mm to 10 mm, and the height variable region ratio is 17% (3/18).

As shown in (a), (b) and (c) of FIG. 9a, the height variable region of the separate tab may start from a radius of 7 mm. In addition, the ratio of the height variable region is 17% to 28%. This ratio range is included in the range of 1% to 56% described above.

Referring to FIG. 9a, the number of stacked layers of the uncoated portion 43a sequentially increases from the outer circumference toward the core. Also, it may be found that even though the minimum length of the separate tab is the same as 3 mm, the maximum value of the number of stacked layers increases to 12, 15, 18 as the maximum length of the separate tab increases to 6 mm, 7 mm, and 8 mm. In addition, the thickness of the bending surface region F increases proportionally according to the number of stacked layers.

For example, when the maximum height of the separate tab is 8 mm, the number of stacked layers of the uncoated portion 43a increases up to 18 from the outer circumference of the electrode assembly 80 to the core in the 7 mm radius region and, in the 8 mm radius region toward the core from the radial location where the increasing of the number of stacked layers stops, the number of stacked layers of the uncoated portion 43a is maintained uniformly at the level of 18. In this example, in the stack number uniform region, the number of stacked layers is at least 16, and its radial width is 8 mm. The width of the stack number uniform region is 53% (8/15, rounded to zero decimal place, this will be applied identically below) compared to the radial length (15 mm) of the winding turns including the separate tab.

As another example, when the maximum height of the separate tab is 7 mm, the number of stacked layers of the uncoated portion 43a increases up to 15 from the outer circumference of the electrode assembly 80 to the core in the 6 mm radius region and, in the 9 mm radius region toward the core from the radial location where the increasing of the number of stacked layers stops, the number of stacked layers of the uncoated portion 43a is maintained uniformly at the level of 15. Therefore, the radial width of the stack number uniform region is 9 mm, and the number of stacked layers is at least 13 in the stack number uniform region. The width of the stack number uniform region is 60% (9/15) compared to the radial length (15 mm) of the winding turns including the separate tab.

As another example, when the maximum height of the separate tab is 6 mm, the number of stacked layers of the uncoated portion 43a increases up to 12 from the outer circumference of the electrode assembly 80 to the core in the 5 mm radius region, and in the 10 mm radius region toward the core from the radial location where the increasing of the number of stacked layers stops, the number of stacked layers of the uncoated portion 43a is maintained uniformly at the level of 12. Therefore, the radial width of the stack number uniform region is 10 mm, and the number of stacked layers is at least 11 in the stack number uniform region. The width of the stack number uniform region is 67% (10/15) compared to the radial length (15 mm) of the winding turns including the separate tab.

It may be understood that when the minimum length of the separate tab is 3 mm and the maximum length of the separate tab is 6 mm, 7 mm and 8 mm, the length of the stack number increasing region in which the number of stacked layers gradually increases is increased to 5 mm, 6 mm and 7 mm, respectively, and the ratio of the stack number uniform region in which the number of stacked layers of the uncoated portion 43a is 10 or more is 53% to 67%.

Meanwhile, the thickness of the bending surface region F increases in proportion to the number of stacked layers of the uncoated portion 43a. Depending on the minimum height and the maximum height of the separate tab in the height variable region, the number of stacked layers of the uncoated portion 43a may be lowered to 10 and thus the number of stacked layers of the uncoated portion 43a may be 10 to 18. In one example, when the uncoated portion 43a is aluminum and its thickness is 10 um to 25 um, the thickness of the bending surface region F may be 100 um to 450 um. In another example, when the uncoated portion 43a is copper and its thickness is 5 um to 20 um, the thickness of the bending surface region F may be 50 um to 360 um. If the thickness of the bending surface region F satisfies the condition of the above numerical range, when the current collector is welded to the bending surface region F using a laser, the bending surface region F absorbs the laser energy sufficiently. As a result, welding beads are formed in a sufficient volume on the bending surface region F to increase the welding strength. In addition, it is possible to prevent the separator or the like located under the bending surface region F from being damaged since the welding portion is perforated by the laser.

The current collector may be welded to the bending surface region F. The welding region of the current collector may at least partially lie in (overlap with and/or be associated with) the stack number uniform region based on the radial direction.

50% to 100% of the welding region of the current collector may lie in (overlap with and/or be associated with) the stack number uniform region in the radial direction of the electrode assembly. As the overlapping ratio of the welding region increases, it is preferable in terms of improving the welding strength and increasing the volume of welding beads. In the welding region of the current collector, the remaining region that does not overlap with the stack number uniform region may lie in (overlap with and/or be associated with) the stack number increasing region.

Meanwhile, as described with reference to FIG. 6, when the separate tabs 61 of the uncoated portion 43a are bent to form the bending surface region F, if the lower internal angle of the separate tab included in each separate tab group satisfies the condition of Formula 1, adjacent separate tabs 61 located at the same winding turn may lie on (overlap with, contact and or be coupled to) each other in the circumferential direction while the sides of the adjacent separate tabs 61 intersect. In this case, the number of stacked layers of the uncoated portion 43a may be further increased in the radial direction of the electrode assembly.

FIG. 9b is a cross-sectional view of the bending surface region F exemplarily showing the stack number increasing region and the stack number uniform region when separate tabs are overlapped in the circumferential direction.

Referring to FIG. 9b, the number of stacked layers of the uncoated portion 43a sequentially increases from the outer circumference toward the core. The height variable region of the separate tab starts from the radius of 7 mm (for example in FIG. 9a). The height of the separate tab starts from 3 mm and increases by 1 mm per 1 mm increase in radius. As the maximum value of the separate tab height is increased to 6 mm, 7 mm, 8 mm, 9 mm and 10 mm, the number of stacked layers at the radial position where the stack number uniform region starts increases to 18, 22, 26, 30 and 34. Under the same conditions where the maximum value of the separate tab height is 6 mm, 7 mm and 8 mm, the number of stacked layers is greater by 6 to 8 (for instance than that of the example mentioned in conjunction with FIG. 9a). This is because the separate tabs are overlapped in the circumferential direction.

Specifically, when the maximum value of the separate tab height is 10 mm, the number of stacked layers of the uncoated portion 43a increases from the outer circumference of the electrode assembly 80 to the core in the 9 mm radius region (the stack number increasing region) up to 34, and, in the 6 mm radius region toward the core from the radial location where the increasing of the number of stacked layers stops, the number of stacked layers of the uncoated portion 43a is maintained as 34, and the number of stacked layers further increases to 39 near the core. The number of stacked layers is increased near the core because the separate tabs are overlapped more in the circumferential direction as being closer to the core. In this example, in the stack number uniform region, the number of stacked layers is 34 or more, and its radial width of 6 mm. The stack number uniform region starts from the radius of 7 mm and the stack number uniform region ratio is 40% (6/15, rounded to zero decimal place, this will be applied identically below) compared to the radial length (15 mm) of the winding turns including the separate tab.

As another example, when the maximum value of the separate tab height is 9 mm, the number of stacked layers of the uncoated portion 43a increases up to 30 from the outer circumference of the electrode assembly 80 to the core in the 8 mm radius region, and, in the 7 mm radius region toward the core from the radial location where the increasing of the number of stacked layers stops, the number of stacked layers of the uncoated portion 43a is maintained as 30, and then further increases to 36 near the core. Therefore, the radial width of the stack number uniform region is 7 mm, and the number of stacked layers is 30 or more in the stack number uniform region. The stack number uniform region starts from the radius of 7 mm and the stack number uniform region ratio is 47% (7/15) compared to the radial length (15 mm) of the winding turns including the separate tab.

As still another example, when the maximum value of the separate tab height is 8 mm, the number of stacked layers of the uncoated portion 43a increases up to 26 from the outer circumference of the electrode assembly 80 to the core in the 7 mm radius region, and, in the 8 mm region toward the core from the radial location where the increasing of the number of stacked layers stops, the number of stacked layers of the uncoated portion 43a is maintained as 26, and then further increased to 28 near the core. Therefore, the radial width of the stack number uniform region is 8 mm, and the number of stacked layers is 26 or more in the stack number uniform region. The stack number uniform region starts from the radius of 7 mm and the stack number uniform region ratio is 53% (8/15) compared to the radial length (15 mm) of the winding turns including the separate tab.

As still another example, when the maximum value of the separate tab height is 7 mm, the number of stacked layers of the uncoated portion 43a increases up to 22 from the outer circumference of the electrode assembly 80 to the core in the 6 mm radius region, and, in the 9 mm radius region toward the core from the radial location where the increasing of the number of stacked layers stops, the number of stacked layers of the uncoated portion 43a is maintained as 22, and then further increased to 23 near the core. Therefore, the radial width of the stack number uniform region is 9 mm, and the number of stacked layers is 22 or more in the stack number uniform region. The stack number uniform region starts from the radius of 7 mm and the stack number uniform region ration is 60% (9/15) compared to the radial length (15 mm) of the winding turns including the separate tab.

As still another example, when the maximum value of the separate tab height is 6 mm, the number of stacked layers of the uncoated portion 43a increases up to 18 from the outer circumference of the electrode assembly 80 to the core in the 5 mm radius region, and, in the 10 mm radius region toward the core from the radial location where the increasing of the number of stacked layers stops, the number of stacked layers of the uncoated portion 43a is maintained at 18, and then further increased to 20 near the core. Therefore, the radial width of the stack number uniform region is 10 mm, and the number of stacked layers is 18 or more in the stack number uniform region. The stack number uniform region starts from the radius of 7 mm and the stack number uniform region ratio is 67% (10/15) compared to the radial length (15 mm) of the winding turns including the separate tab.

In FIG. 9b, when the minimum value of the separate tab height is 3m and the maximum value of the separate tab height is 6 mm, 7 mm, 8 mm, 9 mm and 10 mm, the length of the stack number increasing region in which the number of stacked layers gradually increases is increased to 5 mm, 6 mm, 7 mm, 8 mm and 9 mm. In addition, it may be found that the ratio of the stack number uniform region in which the number of stacked layers is 10 or more is 40% to 67%.

In FIG. 9b, the thickness of the bending surface region F increases in proportion to the number of stacked layers of the uncoated portion 43a. The number of stacked layers of the uncoated portion 43a is 18 to 39. In one example, when the uncoated portion 43a is aluminum and its thickness is 10 um to 25 um, the thickness of the bending surface region F may be 180 um to 975 um. In another example, when the uncoated portion 43a is copper and its thickness is 5 um to 20 um, the thickness of the bending surface region F may be 90 um to 780 um. If the thickness of the bending surface region F satisfies the condition of the above numerical range, when the current collector is welded to the bending surface region F using a laser, the bending surface region F absorbs the laser energy sufficiently. As a result, welding beads are formed in a sufficient volume on the bending surface region F to increase the welding strength. In addition, it is possible to prevent the separator and the like located under the bending surface region F from being damaged since the welding portion is perforated by the laser.

The welding region of the current collector may at least partially lie in (overlap with and/or be associated with) the stack number uniform region based on the radial direction. 50% to 100% of the welding region of the current collector may lie in (overlap with and/or be associated with) the stack number uniform region in the radial direction of the electrode current collector 80. As the overlapping ratio of the welding region increases, it is preferable in terms of welding strength. A region of the welding region of the current collector that does not overlap the stack number uniform region may lie in (overlap with and/or be associated with) the stack number increasing region.

Referring to FIGS. 9a and 9b, it will be apparent to those skilled in the art that the stack number uniform region of the uncoated portion 43a may be increased or decreased according to the radius (R) of the electrode assembly, the radius ($r_c$) of the core, the minimum and maximum values of the separate tab height in the separate tab height variable region, the height increase amount of the separate tab in the radial direction of the electrode assembly.

The ratio of the stack number uniform region is inversely proportional to the radius of the core ($r_c$). Also, when the minimum height of the separate tab is the same, the ratio of the stack number uniform region increases as the radial width of the height variable region decreases. Also, when the maximum height of the separate tab is the same, the ratio of the stack number uniform region increases as the radial width of the height variable region decreases.

In one example, when the diameter (R) of the electrode assembly is 22 mm, the radius ($r_c$) of the core is 2 mm and the height of the separate tab is changed from 7 mm to 10 mm in the radius of 9 mm to 12 mm, which is the height variable region of the separate tab, the ratio of the stack number uniform region may be decreased to the level of 30%.

In another example, when the diameter (R) of the electrode assembly is 22 mm, the radius ($r_c$) of the core is 2 mm and the height of the separate tab is change from 3mm to 4mm in the radius of 5 mm to 6 mm, which is the height variable region of the separate tab, the ratio of the stack number uniform region may be increased to the level of 85%.

Accordingly, the radial length of the stack number uniform region may be 30% or more, in particular 30% to 85%, 40 % to 80%, 50% to 75%, or 60% to 70%, compared to the radial length of the winding turns including the separate tab.

Meanwhile, as described by referring to FIGS. 9a and 9b, when the maximum height of the separate tab in the height uniform region of the separate tab is 6 mm to 10 mm, the number of stacked layers of the uncoated portion 43a in the stack number uniform region may be adjusted in the range of 10 to 39 by changing the minimum height of separate tab and the height increment amount of separate tab in a radial direction. The stack number uniform region of the bending surface region F includes a region formed by bending the separate tabs included in the height uniform region. The thickness of the bending surface region F varies depending on the thickness of the material constituting the uncoated portion 43a. When the uncoated portion 43a is made of aluminum and its thickness is 10 um to 25 um, the stack thickness of the uncoated portion in the bending surface region F is 100 um (0.1 mm) to 975 um (0.975 mm). In this case, the ratio of the stack thickness of the uncoated portion in the bending surface region F to the height of the separate tab in the bending surface region F formed by bending the separate tabs having height of 6 mm to 10 mm included in the height uniform region is 1.0% (0.1 mm/10 mm) to 16.3% (0.975 mm/6 mm). In another example, when the uncoated portion 43a is made of copper and its thickness is 5 um to 20 um, the stack thickness of the uncoated portion in the bending surface region F is 50 um (0.05 mm) to 780 um (0.780 mm). In this case, the ratio of the stack thickness of the uncoated portion in the bending surface region F to the height of the separate tab in the bending surface region F formed by bending the separate tabs having height of 6 mm to 10 mm included in the height uniform region is 0.5% (0.05 mm/10 mm) to 13.0% (0.780 mm/6 mm). If the thickness ratio of the bending surface region (F) to the height of the separate tabs included in the height uniform region satisfies the above numerical range, the desired welding strength may be achieved when the current collector is welded to the bending surface region F.

Various electrode assembly structures according to the embodiments (modifications) of the present disclosure may be applied to a cylindrical battery or any other batteries well known in the art.

The cylindrical battery may be, for example, a cylindrical battery whose form factor ratio (defined as a value obtained by dividing the diameter of the cylindrical battery by height, namely a ratio of diameter ($\Phi$) to height (H)) is greater than about 0.4, or greater than 0.35, or greater than 0.42, or greater than 0.45, or greater than 0.48, or greater than 0.5, or greater than 5.5, or or greater than 5.7, and smaller than 1.0, or smaller than 0.9, or smaller than 0.8, or smaller than 0.7, or smaller than 0.6. In particular, the diameter of the cylindrical battery may be between 40 mm and 50 mm, in particular 46 mm, while the height of the cylindrical battery may be between 70 mm to 90 mm, in particular 80 mm.

Here, the form factor means a value indicating the diameter and height of a cylindrical battery. The form factor of the cylindrical battery may be, for example, 46110, 4875, 48110, 4880, 4680, or the like. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collector to the bending surface region of the uncoated portion, it is necessary to sufficiently increase the number of stacked layers of the uncoated portion in order to sufficiently secure the welding strength and lower the resistance. This requirement may be achieved by the electrode and the electrode assembly according to the embodiments (modifications) of the present disclosure.

A battery may be a cylindrical battery having an approximately cylindrical shape, whose diameter is approximately 46 mm, height is approximately 110 mm, and form factor ratio is 0.418.

A battery may be a cylindrical battery having a substantially cylindrical shape, whose diameter is about 48 mm, height is about 75 mm, and form factor ratio is 0.640.

A battery may be a cylindrical battery having an approximately cylindrical shape, whose diameter is approximately 48 mm, height is approximately 110 mm, and form factor ratio is 0.436.

A battery may be a cylindrical battery having an approximately cylindrical shape, whose diameter is approximately 48 mm, height is approximately 80 mm, and form factor ratio is 0.600.

A battery may be a cylindrical battery having an approximately cylindrical shape, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

Hereinafter, the cylindrical battery will be described in detail.

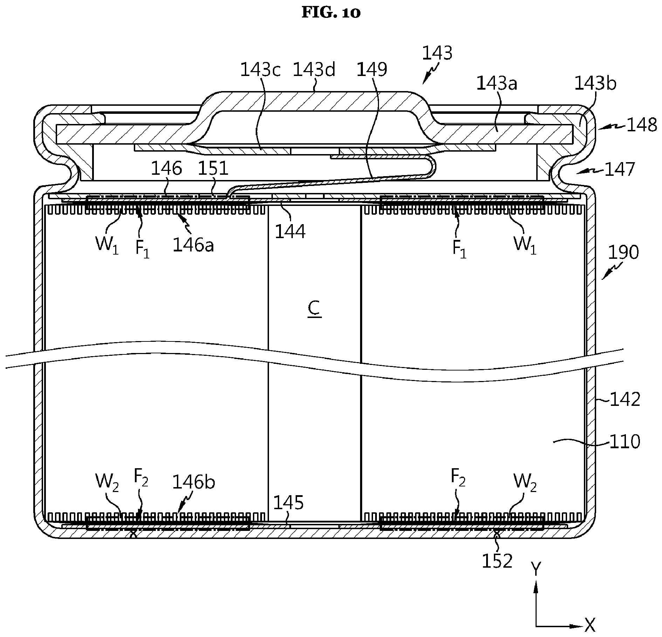

FIG. 10 is a sectional view showing a cylindrical battery 190, taken along the Y-axis direction.

Referring to FIG. 10, the cylindrical battery 190 includes an electrode assembly 110 having a first electrode, a separator and a second electrode, a battery housing 142 for accommodating the electrode assembly 110, and a sealing body 143 for sealing an open end of the battery housing 142.

The battery housing 142 is a cylindrical container with an opening at the top. The battery housing 142 is made of a conductive metal material such as aluminum or steel. The battery housing 142 accommodates the electrode assembly 110 in the inner space through the top opening and also accommodates the electrolyte.

The electrolyte may be a salt having a structure like $A^+B^-$. Here, A+ includes an alkali metal cation such as Li+, $Na^+$, or $K^+$, or a combination thereof. and $B^-$ includes at least one anion selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN- and $(CF_3CF_2SO_2)_2N^-$.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof.

The electrode assembly 110 may have a jelly-roll shape or any other rolled shapes well known in the art. The electrode assembly 110 may be manufactured by winding a laminate formed by sequentially laminating a lower separator, a first electrode, an upper separator, and a second electrode at least once, based on the winding center C, as shown in FIG. 2.

The first electrode and the second electrode have different polarities. That is, if one has positive polarity, the other has negative polarity. At least one of the first electrode and the second electrode may have an electrode structure according to the above embodiments (modifications). In addition, the other of the first electrode and the second electrode may have a conventional electrode structure or an electrode structure according to embodiments (modifications).

An uncoated portion 146a of the first electrode and an uncoated portion 146b of the second electrode protrude from the upper and lower portions of the electrode assembly 110, respectively.

The sealing body 143 may include a cap 143a, a first gasket 143b for providing airtightness between the cap 143a and the battery housing 142 and having insulation, and a connection plate 143c electrically and mechanically coupled to the cap 143a.

The cap 143a is a component made of a conductive metal material, and covers the top opening of the battery housing 142. The cap 143a is electrically connected to the uncoated portion 146a of the first electrode, and is electrically insulated from the battery housing 142 by means of the first gasket 143b. Accordingly, the cap 143a may function as a first electrode terminal of the cylindrical battery 140.

The cap 143a is placed on the beading portion 147 formed on the battery housing 142, and is fixed by a crimping portion 148. Between the cap 143a and the crimping portion 148, the first gasket 143b may be interposed to secure the airtightness of the battery housing 142 and the electrical insulation between the battery housing 142 and the cap 143a. The cap 143a may have a protrusion 143d protruding upward from the center thereof.

The battery housing 142 is electrically connected to the uncoated portion 146b of the second electrode. Therefore, the battery housing 142 has the same polarity as the second electrode. If the second electrode has negative polarity, the battery housing 142 also has negative polarity.

The battery housing 142 includes the beading portion 147 and the crimping portion 148 at the top thereof. The beading portion 147 is formed by press-fitting the periphery of the outer circumferential surface of the battery housing 142. The beading portion 147 prevents the electrode assembly 110 accommodated inside the battery housing 142 from escaping through the top opening of the battery housing 142, and may function as a support portion on which the sealing body 143 is placed.

The crimping portion 148 is formed on the beading portion 147. The crimping portion 148 has an extended and bent shape to cover the outer circumference of the cap 143a disposed on the beading portion 147 and a part of the upper surface of the cap 143a.

The cylindrical battery 140 may further include a first current collector 144 and/or a second current collector 145 and/or an insulator 146.

The first current collector 144 is coupled to the upper portion of the electrode assembly 110. The first current collector 144 is made of a conductive metal material such as aluminum, copper, nickel and so on, and is electrically connected to the bending surface region $F_1$ that is formed as the uncoated portion 146a of the first electrode is bent.

A lead 149 may be connected to the first current collector 144. The lead 149 may extend upward above the electrode assembly 110 and be coupled to the connection plate 143c or directly coupled to the lower surface of the cap 143a. The lead 149 may be connected to other components by welding.

The first current collector 144 may be integrally formed with the lead 149. In this case, the lead 149 may have an elongated plate shape extending outward near the center of the first current collector 144.

The bending surface region ($F_1$) of the uncoated portion 146a and the first current collector 144 may be coupled, for example, by laser welding. Laser welding may be performed in a manner that partially melts a base material of the current collector. Laser welding may be replaced by resistance welding, ultrasonic welding, or the like.

The uncoated portion 146a is divided into a plurality of separate tabs, and the bending surface region ($F_1$) is formed by bending the plurality of separate tabs toward the core C. In the bending surface region ($F_1$), the radial length of a region where the number of stacked layers of the uncoated portion 146a is 10 or more may be 30% or more, in particular 30% to 85%, 40 % to 80%, 50% to 75 %, or 60% to 70%, compared to the radial length of the winding turns including the separate tab.

The welding area between the bending surface region ($F_1$) of the uncoated portion 146a and the first current collector 144 may lie in and/or overlap with the stack number uniform region ($W_1$) of the bending surface region ($F_1$) by 50% or more, and it is more preferably as the overlapping ratio is higher.

When the bending surface region ($F_1$) of the uncoated portion 146a and the first current collector 144 are welded with a laser, the welding strength may be particularly 2 kgf/cm$^2$ or more, more particularly 4 kgf/cm$^2$ or more. The upper limit of the welding strength may be dependent on a specification of a laser welding equipment. As one example, the welding strength may be set to 8 kgf/cm$^2$ or less, or 6 kgf/cm$^2$ or less. The laser power for realizing the welding strength varies depending on the laser welding equipment. In one example, the laser power may be in the range of 250W to 320W. In another example, the laser power may be adjusted in the range of 40% to 100% of the maximum power specification of the laser welding equipment.

When the welding strength satisfies the above numerical range, even if severe vibration is applied to the electrode assembly 110 along the winding axis direction and/or the radial direction, the properties of the welding interface do not deteriorate, and since the volume of the welding beads is sufficient, the resistance of the welding interface may also be reduced.

The second current collector 145 may be coupled to the lower surface of the electrode assembly 110. One side of the second current collector 145 may be coupled by welding to the bending surface region ($F_2$) formed as the uncoated portion 146b of the second electrode is bent, and the other side may be coupled to the inner bottom surface of the battery housing 142 by welding.

The uncoated portion 146b is divided into a plurality of separate tabs, and the bending surface region ($F_2$) is formed by bending the plurality of separate tabs toward the core C. In the bending surface region ($F_2$), the radial length of a region where the number of stacked layers of the uncoated portion 146b is 10 or more may be 30% or more, more particularly 30% to 85%, 40 % to 80%, 50% to 75%, or 60% to 70%, compared to the radial length of the winding turns including the separate tab.

The coupling structure between the second current collector 145 and the uncoated portion 146b of the second electrode may be substantially the same as the coupling structure between the first current collector 144 and the uncoated portion 146a of the first electrode.

The welding area between the bending surface region ($F_2$) of the uncoated portion 146b and the second current collector 145 may lie in and/or overlap with the stack number uniform region ($W_2$) by 50% or more, and it is more preferable as the overlapping ratio is higher.

When the bending surface region ($F_2$) of the uncoated portion 146b and the second current collector 145 are welded with a laser, the welding strength is particularly 2 kgf/cm$^2$ or more, more particularly 4 kgf/cm$^2$ or more. The upper limit of the welding strength may be dependent on a specification of a laser welding equipment. As one example, the welding strength may be set to 8 kgf/cm$^2$ or less, or 6 kgf/cm$^2$ or less. The laser power for realizing the welding strength varies depending on the laser welding equipment. In one example, the laser power may be in the range of 250W to 320W. In another example, the laser power may be adjusted in the range of 40% to 100% of the maximum power specification of the laser welding equipment.

When the welding strength satisfies the above numerical range, even if severe vibration is applied to the electrode assembly 110 along the winding axis direction and/or the radial direction, the properties of the welding interface do not deteriorate, and since the volume of the welding beads is sufficient, the resistance of the welding interface may also be reduced.

The insulator 146 may cover the first current collector 144. The insulator 146 may cover the first current collector 144 at the upper surface of the first current collector 144, thereby preventing direct contact between the first current collector 144 and the inner circumference of the battery housing 142.

The insulator 146 has a lead hole 151 so that the lead 149 extending upward from the first current collector 144 may be withdrawn therethrough. The lead 149 is drawn upward through the lead hole 151 and coupled to the lower surface of the connection plate 143c or the lower surface of the cap 143a.

A peripheral region of the edge of the insulator 146 may be interposed between the first current collector 144 and the beading portion 147 to fix the coupled body of the electrode assembly 110 and the first current collector 144. Accordingly, the movement of the coupled body of the electrode assembly 110 and the first current collector 144 may be restricted in the height direction of the battery 140, thereby improving the assembly stability of the battery 140.

The insulator 146 may be made of an insulating polymer resin. In one example, the insulator 146 may be made of polyethylene, polypropylene, polyimide, or polybutylene terephthalate.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 190 and the internal pressure increases to a predetermined level or more, the venting portion 152 may be ruptured so that the gas generated inside the battery housing 142 is discharged to the outside.

The venting portion 152 may be formed continuously or discontinuously while drawing a circle at the lower surface of the battery housing 142. In a modification, the venting portion 152 may be formed in a straight pattern or other patterns.

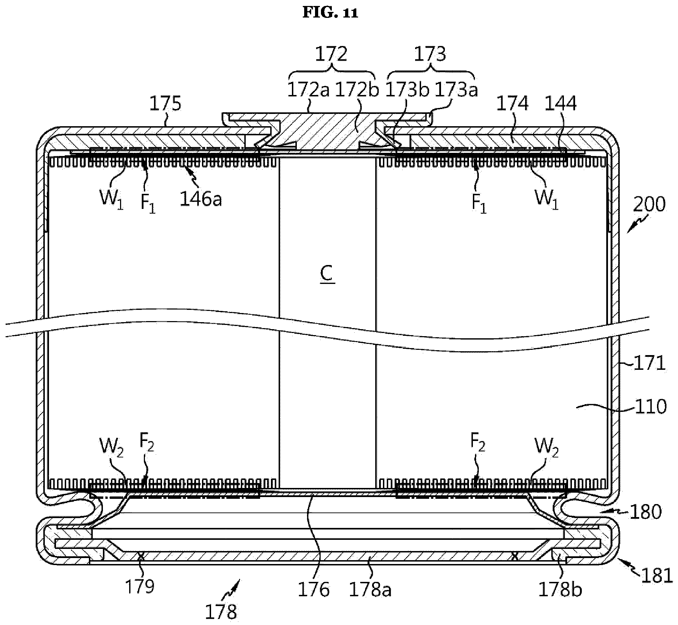

FIG. 11 is a sectional view showing a cylindrical battery 200, taken along the Y-axis.

Referring to FIG. 11, the structure of the electrode assembly of the cylindrical battery 200 is substantially the same as that of the cylindrical battery 190 of in FIG. 10, and the other structure except for the electrode assembly is changed.

Specifically, the cylindrical battery 200 includes a battery housing 171 through which a terminal 172 is installed. The terminal 172 is installed on the closed surface (the upper surface in the drawing) of the battery housing 171. The terminal 172 passes through a perforation hole of the battery housing 171 in a state where a second gasket 173 made of an insulating material is interposed therebetween. The terminal 172 is exposed to the outside in a direction opposite to the direction of gravity.

The terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed surface of the battery housing 171. The maximum diameter of the terminal exposing portion 172a may be larger than the maximum diameter of the perforation hole formed in the battery housing 171. The terminal insert portion 172b may be electrically connected to the uncoated portion 146a of the first electrode through approximately the central portion of the closed surface of the battery housing 171. The terminal insert portion 172b may be inserted and deformed onto the inner surface of the battery housing 171. The terminal insert portion may penetrate or, figuratively, may be riveted through, (the perforation hole of) the inner surface of the battery housing. That is, the lower edge of the terminal insert portion 172b may have a shape curved toward the inner surface of the battery housing 171. The maximum diameter of the end of the terminal insert portion 172b may be larger than the maximum diameter of the perforation hole of the battery housing 171.

The lower surface of the terminal insert portion 172b is substantially flat and may be welded to the center portion of the first current collector 144 connected to the uncoated portion 146a of the first electrode. An insulator 174 made of an insulating material may be interposed between the first current collector 144 and the inner surface of the battery housing 171. The insulator 174 covers the upper portion of the first current collector 144 and the top edge of the electrode assembly 110. Accordingly, it is possible to prevent the uncoated portion 146a exposed at the outer circumference of the electrode assembly 110 from contacting the inner surface of the battery housing 171 having a different polarity to cause a short circuit.

The insulator 174 is in contact with the inner surface of the closed portion of the battery housing 171 and in contact with the upper surface of the first current collector 144. To this end, the insulator 174 has a thickness corresponding to the separation distance between the inner surface of the closed portion of the battery housing 171 and the upper surface of the first current collector 144, or a thickness slightly larger than the separation distance.

The first current collector 144 may be laser-welded to the bending surface region $F_1$ of the uncoated portion 146a. At this time, welding is performed in a region including the stack number uniform region where the number of stacked layers of the uncoated portion 146a is 10 or more in the bending surface region $F_1$ of the uncoated portion 146a.

The radial length of the stack number uniform region in which the number of stacked layers of the uncoated portion 146a is 10 or more may be 30% or more, more particularly 30% to 85%, 40 % to 80%, 50% to 75 %, or 60% to 70%, compared to the radial length of the winding turns including the separate tab.

The welding area between the bending surface region ($F_1$) of the uncoated portion 146a and the first current collector 144 may lie in and/or overlap with the stack number uniform region ($W_1$) by 50% or more, and it is more preferably as the overlapping ratio is higher.

When the bending surface region ($F_1$) of the uncoated portion 146a and the first current collector 144 are welded with a laser, the welding strength may be particularly 2 kgf/cm² or more, more particularly 4 kgf/cm² or more. The upper limit of the welding strength may be dependent on a specification of a laser welding equipment. As one example, the welding strength may be set to 8 kgf/cm² or less, or 6 kgf/cm² or less. The laser power for realizing the welding strength varies depending on the laser welding equipment. In one example, the laser power may be in the range of 250W to 320W. In another example, the laser power may be adjusted in the range of 40% to 100% of the maximum power specification of the laser welding equipment.

When the welding strength satisfies the above numerical range, even if severe vibration is applied to the electrode assembly 110 along the winding axis direction and/or the radial direction, the properties of the welding interface do not deteriorate, and since the volume of the welding beads is sufficient, the resistance of the welding interface may also be reduced.

The second gasket 173 is interposed between the battery housing 171 and the terminal 172 to prevent the battery housing 171 and the terminal 172 having opposite polarities from electrically contacting each other. Accordingly, the upper surface of the battery housing 171 having an approximately flat shape may function as a second electrode terminal of the cylindrical battery 200.

The second gasket 173 includes a gasket exposing portion 173a and a gasket insert portion 173b. The gasket exposing portion 173a is interposed between the terminal exposing portion 172a of the terminal 172 and the battery housing 171. The gasket insert portion 173b is interposed between the terminal insert portion 172b of the terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation.

The gasket exposing portion 173a of the second gasket 173 may have an extended shape to cover the outer circumference of the terminal exposing portion 172a of the terminal 172. When the second gasket 173 covers the outer circumference of the terminal 172, it is possible to prevent a short circuit from occurring while an electrical connection part such as a bus bar is coupled to the upper surface of the battery housing 171 and/or the terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the terminal 172 by thermal fusion. In this case, airtightness at the coupling interface between the second gasket 173 and the terminal 172 and at the coupling interface between the second gasket 173 and the battery housing 171 may be enhanced.

Meanwhile, when the gasket exposing portion 173a of the second gasket 173 has a shape extending to the upper surface of the terminal exposing portion 172a, the terminal 172 may be integrally coupled with the second gasket 173 by insert injection molding.

In the upper surface of the battery housing 171, a remaining area 175 other than the area occupied by the terminal 172 and the second gasket 173 corresponds to the second electrode terminal having a polarity opposite to that of the terminal 172.

The second current collector 176 is coupled to the lower portion of the electrode assembly 110. The second current collector 176 is made of a conductive metal material such as aluminum, steel, copper or nickel, and is electrically connected to the uncoated portion 146b of the second electrode.

The second current collector 176 is electrically connected to the battery housing 171. To this end, at least a portion of the edge of the second current collector 176 may be interposed and fixed between the inner surface of the battery housing 171 and a first gasket 178b.

In one example, at least a portion of the edge of the second current collector 176 may be fixed to the beading portion 180 by welding in a state of being supported on the lower surface of the beading portion 180 formed at the bottom of the battery housing 171. In a modification, at least a portion of the edge of the second current collector 176 may be directly welded to the inner wall surface of the battery housing 171.

The second current collector 176 and the bending surface region $(F_2)$ of the uncoated portion 146b may be coupled by welding, for example, laser welding. At this time, welding is performed in an area including a stack number uniform region where the number of stacked layers of the uncoated portion 146b is 10 or more in the bending surface region $(F_2)$ of the uncoated portion 146b.

The radial length of the region where the number of stacked layers of the uncoated portion 146b is 10 or more may be 30% or more, more particularly 30% to 85%, 40 % to 80%, 50% to 75 %, or 60% to 70%, compared to the radial length of the winding turns including the separate tab.

The welding area between the bending surface region $(F_2)$ of the uncoated portion 146b and the second current collector 176 may lie in and/or overlap with the stack number uniform region $(W_2)$ by 50% or more, and it is more preferable as the overlapping ratio is higher.

When the bending surface region $(F_2)$ of the uncoated portion 146b and the second current collector 176 are welded with a laser, the welding strength is particularly 2 kgf/cm$^2$ or more, more particularly 4 kgf/cm$^2$ or more.

When the welding strength satisfies the above numerical range, even if severe vibration is applied to the electrode assembly 110 along the winding axis direction and/or the radial direction, the properties of the welding interface do not deteriorate, and since the volume of the welding beads is sufficient, the resistance of the welding interface may also be reduced.

A sealing body 178 for sealing the lower open end of the battery housing 171 includes a cap 178a and a first gasket 178b. The first gasket 178b electrically separates the cap 178a and the battery housing 171. A crimping portion 181 fixes the edge of the cap 178a and the first gasket 178b together. The cap 178a has a venting portion 179. The configuration of the venting portion 179 is substantially the same as the above embodiment (modification).

The cap 178a is made of a conductive metal material. However, since the first gasket 178b is interposed between the cap 178a and the battery housing 171, the cap 178a does not have electrical polarity. The sealing body 178 seals the open end of the lower portion of the battery housing 171 and functions to discharge gas when the internal pressure of the battery 200 increases over a critical value.

The terminal 172 electrically connected to the uncoated portion 146a of the first electrode is used as the first electrode terminal. In addition, in the upper surface of the battery housing 171 electrically connected to the uncoated portion 146b of the second electrode through the second current collector 176, a part 175 except for the terminal 172 is used as the second electrode terminal having a different polarity from the first electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the second electrode terminal has an approximately flat shape, a sufficient bonding area may be secured for bonding electrical connection components such as bus bars. Accordingly, the cylindrical battery 200 may reduce the resistance at the bonding portion of the electrical connection components to a desirable level.

In the present disclosure, even when the uncoated portions 146a, 146b are bent toward the core, the core C of the electrode assembly 110 may be opened upward without being blocked.

That is, as shown in FIG. 4, the height of the uncoated portion of the first and second electrodes, particularly the height of the core-side uncoated portion A, is designed to be low, and the height variable region of the separate tab 61 is disposed adjacent to the core-side uncoated portion A, so that by adjusting the height of the separate tab 61 closest to the core-side uncoated portion A, the core C of the electrode assembly 110 is not blocked even if the uncoated portion near the core of the electrode assembly 110 is bent.

If the core C is not blocked, there is no difficulty in the electrolyte injection process and the electrolyte injection efficiency is improved. In addition, by inserting a welding jig through the core C, the welding process between the current collector 145 and the bottom of the battery housing 142 or the welding process between the current collector 144 and the terminal 172 may be easily performed.

When the uncoated portions 146a, 146b have a separate tab structure, if the width and/or height and/or separation pitch of the separate tabs are adjusted to satisfy the numerical ranges of the above embodiment, the separate tabs are overlapped in multiple layers to sufficiently secure welding strength when the separate tabs are bent, and an empty space (gap) is not formed on the bending surface region ($F_1$, $F_2$).

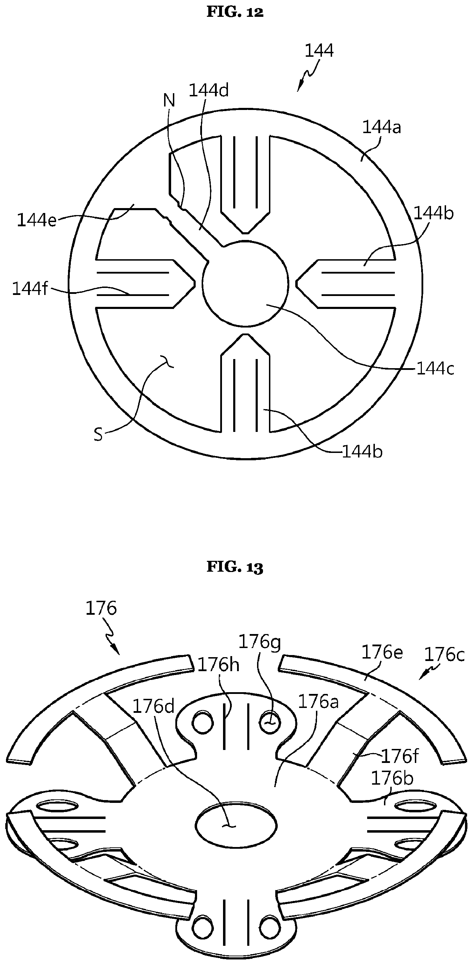

Meanwhile, the first current collector 144 and the second current collector 176 may have a new structure as shown in FIGS. 12 and 13.

FIG. 12 is a top plan view showing the structure of the first current collector 144.

Referring to FIG. 12, the first current collector 144 may include an edge portion 144a, a first uncoated portion coupling portion 144b, and a terminal coupling portion 144c. The edge portion 144a is disposed on the electrode assembly 110. The edge portion 144a may have a substantially rim shape having an empty space S formed therein. In the drawings of the present disclosure, only a case in which the edge portion 144a has a substantially circular rim shape is illustrated, but the present disclosure is not limited thereto. The edge portion 61 may have a substantially rectangular rim shape, a hexagonal rim shape, an octagonal rim shape, or other rim shapes, unlike the illustrated one.

The terminal coupling portion 144c may have a diameter equal to or greater than the diameter of the flat portion formed on the bottom surface of the terminal 172 in order to secure a welding area for coupling with the flat portion formed on the bottom surface of the terminal 172.

The first uncoated portion coupling portion 144b extends inward from the edge portion 144a and is coupled to the uncoated portion 146a. The terminal coupling portion 144c is spaced apart from the first uncoated portion coupling portion 144b and is positioned inside the edge portion 144a. The terminal coupling portion 144c may be coupled to the terminal 172 by welding. The terminal coupling portion 144c may be located, for example, approximately at the center of the inner space surrounded by the edge portion 144a. The terminal coupling portion 144c may be provided at a position corresponding to the hole formed in the core C of the electrode assembly 110. The terminal coupling portion 144c may be configured to cover the hole formed in the core C of the electrode assembly 110 so that the hole formed in the core C of the electrode assembly 110 is not exposed out of the terminal coupling portion 144c. To this end, the terminal coupling portion 144c may have a larger diameter or width than the hole formed in the core C of the electrode assembly 110.

The first uncoated portion coupling portion 144b and the terminal coupling portion 144c may not be directly connected, but may be disposed to be spaced apart from each other and indirectly connected by the edge portion 144a. Since the first current collector 144 has a structure in which the first uncoated portion coupling portion 144b and the terminal coupling portion 144c are not directly connected to each other but are connected through the edge portion 144c as above, when shock and/or vibration occurs at the cylindrical battery 200, it is possible to disperse the shock applied to the coupling portion between the first uncoated portion coupling portion 144b and the first uncoated portion 146a and the coupling portion between the terminal coupling portion 144c and the terminal 172. In the drawings of the present disclosure, only a case in which four first uncoated portion coupling portions 144b are provided is illustrated, but the present disclosure is not limited thereto. The number of the first uncoated portion coupling portions 144b may be variously determined in consideration of manufacturing difficulty according to the complexity of the shape, electric resistance, the space inside the edge portion 144a considering electrolyte impregnation, and the like.

The first current collector 144 may further include a bridge portion 144d extending inward from the edge portion 144a and connected to the terminal coupling portion 144c. At least a part of the bridge portion 144d may have a smaller sectional area compared to the first uncoated portion coupling portion 144b and the edge portion 144a. For example, at least a part of the bridge portion 144d may be formed to have a smaller width and/or thickness compared to the first uncoated portion coupling portion 144b. In this case, the electric resistance increases in the bridge portion 144d, and thus, when a current flows through the bridge portion 144d, the relatively large resistance causes a part of the bridge portion 144d to be melted due to overcurrent heating, thereby irreversibly blocking the overcurrent. The sectional area of the bridge portion 144d may be adjusted to an appropriate level in consideration of the overcurrent blocking function.

The bridge portion 144d may include a taper portion 144e whose width is gradually decreased from the inner surface of the edge portion 144a toward the terminal coupling portion 144c. When the taper portion 144e is provided, the rigidity of the component may be improved at the connection portion between the bridge portion 144d and the edge portion 144a. When the taper portion 144e is provided, in the process of manufacturing the cylindrical battery 200, for example, a transfer device and/or a worker may easily and safely transport the first current collector 144 and/or a coupled body of the first current collector 144 and the electrode assembly 110 by gripping the taper portion 144e. That is, when the taper portion 144e is provided, it is possible to prevent product defects that may occur by gripping a portion where welding is performed with other components such as the first uncoated portion coupling portion 144b and the terminal coupling portion 144c.

The first uncoated portion coupling portion 144b may be provided in plural. The plurality of first uncoated portion coupling portions 144b may be disposed substantially at regular intervals from each other in the extending direction of the edge portion 144a. An extension length of each of the plurality of first uncoated portion coupling portions 144b may be substantially equal to each other. The first uncoated portion coupling portion 144b may be coupled to the bending surface region ($F_1$) of the uncoated portion 146a by laser welding. The welding pattern 144f formed by welding between the first uncoated portion coupling portion 144b and the bending surface region ($F_1$) may have a structure to extend along the radial direction of the electrode assembly 110. The welding pattern 144f may be a line pattern or a dot array pattern.

The terminal coupling portion 144c may be disposed to be surrounded by the plurality of first uncoated portion coupling portions 144b. The terminal coupling portion 144c may be coupled to the terminal 172 by welding. The bridge portion 144d may be positioned between a pair of first uncoated portion coupling portions 144b adjacent to each other. In this case, the distance from the bridge portion 144d to any one of the pair of first uncoated portion coupling portions 144b along the extending direction of the edge portion 144a may be substantially equal to the distance from the bridge portion 144d to the other one of the pair of first uncoated portion coupling portions 144b along the extending direction of the edge portion 144a. The plurality of first uncoated portion coupling portions 144b may be formed to have substantially the same sectional area. The plurality of first uncoated portion coupling portions 144b may be formed to have substantially the same width and thickness.

Although not shown in the drawings, the bridge portion 144d may be provided in plural. Each of the plurality of bridge portions 144d may be disposed between a pair of first uncoated portion coupling portions 144b adjacent to each other. The plurality of bridge portions 144d may be disposed substantially at regular intervals to each other in the extending direction of the edge portion 144a. A distance from each of the plurality of bridge portions 144d to one of the pair of first uncoated portion coupling portions 144b adjacent to each other along the extending direction of the edge portion 144a may be substantially equal to a distance from each of the plurality of the bridge portion 144d to the other first uncoated portion coupling portion 144b.

In the case where the first uncoated portion coupling portion 144b and/or the bridge portion 144d is provided in plural as described above, if the distance between the first uncoated portion coupling portions 144b and/or the distance between the bridge portions 144d and/or the distance between the first uncoated portion coupling portion 144b and the bridge portion 144d is uniformly formed, a current flowing from the first uncoated portion coupling portion 144b toward the bridge portion 144d or a current flowing from the bridge portion 144d toward the first uncoated portion coupling portion 144b may be smoothly and uniformly formed.

Meanwhile, the first current collector 144 and the bending surface region ($F_1$) of the uncoated portion 146a may be coupled by welding. In this case, laser welding, ultrasonic welding, spot welding, or the like may be applied, for example. The welding region may lie in and/or overlap with the stack number uniform region ($W_1$) of the bending surface region ($F_1$) by 50% or more.

The bridge portion 144d may include a notching portion N formed to partially reduce a sectional area of the bridge portion 144d. The sectional area of the notching portion N may be adjusted, for example, by partially reducing the width and/or thickness of the bridge portion 144d. When the notching portion N is provided, electric resistance is increased in the region where the notching portion N is formed, thereby enabling rapid current interruption when overcurrent occurs.

The notching portion N is particularly provided in a region corresponding to the overlapping layer number uniform region of the electrode assembly 110 in order to prevent foreign substances generated during rupturing from flowing into the electrode assembly 110. This is because, in this region, the number of overlapping layers of the separate tabs of the uncoated portion 146a is maintained to the maximum and thus the overlapped separate tabs may function as a mask. For example, the notching portion N may be provided in a region in which the number of stacked layers of the uncoated portion 146a is maximum in the stack number uniform region.

FIG. 13 is a top plan view showing the structure of the second current collector 176.

Referring to FIG. 13, the second current collector 176 is disposed below the electrode assembly 110. In addition, the second current collector 176 may be configured to electrically connect the uncoated portion 146b of the electrode assembly 110 and the battery housing 171. The second current collector 176 is made of a metal material with conductivity and is electrically connected to the uncoated portion 146b. In addition, the second current collector 176 is electrically connected to the battery housing 171. The second current collector 176 may be interposed and fixed between the inner surface of the battery housing 171 and the first gasket 178b. Specifically, the second current collector 176 may be interposed between the lower surface of the beading portion 180 of the battery housing 171 and the first gasket 178b. However, the present disclosure is not limited thereto, and the second current collector 176 may be welded to the inner wall surface of the battery housing 171 in a region where the beading portion 180 is not formed.

The second current collector 176 may include a support portion 176a disposed below the electrode assembly 110, a second uncoated portion coupling portion 176b extending from the support portion 176a approximately along the radial direction of the electrode assembly 110 and coupled to the bending surface region ($F_2$) of the uncoated portion 146b, and a housing coupling portion 176c extending from the support portion 176a approximately along the radial direction of the electrode assembly 110 and coupled to the inner surface of the battery housing 171. The second uncoated portion coupling portion 176b and the housing coupling portion 176c are indirectly connected through the support portion 176a, and are not directly connected to each other. Therefore, when an external shock is applied to the cylindrical battery 200 of the present disclosure, it is possible to minimize the possibility of damage to the coupling portion of the second current collector 176 and the electrode assembly 110 and the coupling portion of the second current collector 176 and the battery housing 171. However, the second current collector 176 of the present disclosure is not limited to the structure where the second uncoated portion coupling portion 176b and the housing coupling portion 176c are only indirectly connected. For example, the second current collector 176 may have a structure that does not include the support portion 176a for indirectly connecting the second uncoated portion coupling portion 176b and the housing coupling portion 176c and/or a structure in which the uncoated portion 146b and the housing coupling portion 176c are directly connected to each other.

The support portion 176a and the second uncoated portion coupling portion 176b are disposed below the electrode assembly 110. The second uncoated portion coupling portion 176b is coupled to the bending surface region ($F_2$) of the uncoated portion 146b. In addition to the second uncoated portion coupling portion 176b, the support portion 176a may also be coupled to the uncoated portion 146b. The second uncoated portion coupling portion 176b and the uncoated portion 146b may be coupled by welding. The support portion 176a and the second uncoated portion coupling portion 176b are located higher than the beading portion 180 when the beading portion 180 is formed on the battery housing 171.

The support portion 176a has a current collector hole 176d formed at a location corresponding to the hole formed at the core C of the electrode assembly 110. The core C of the electrode assembly 110 and the current collector hole 176d communicating with each other may function as a passage for inserting a welding rod for welding between the terminal 172 and the terminal coupling portion 144c of the first current collector 144 or for irradiating a laser beam. The current collector hole 176d may have a diameter substantially equal to or greater than the hole formed in the core C of the electrode assembly 110. When the second uncoated portion coupling portion 176b is provided in plural, the plurality of second uncoated portion coupling portions 176b may have a shape extending approximately radially from the support portion 176a of the second current collector 176 toward the sidewall of the battery housing 171. The plurality of second uncoated portion coupling portions 176b may be positioned to be spaced apart from each other along the periphery of the support portion 176a.

The housing coupling portion 176c may be provided in plural. In this case, the plurality of housing coupling portions 176c may have a shape extending approximately radially from the center of the second current collector 176 toward the sidewall of the battery housing 171. Accordingly, the electrical connection between the second current collector 176 and the battery housing 171 may be made at a plurality of points. Since the coupling for electrical connection is made at a plurality of points, the coupling area may be maximized, thereby minimizing electric resistance. The plurality of housing coupling portions 176c may be positioned to be spaced apart from each other along the periphery of the support portion 176a. At least one housing coupling portion 176c may be positioned between the second uncoated portion coupling portions 176b adjacent to each other. The plurality of housing coupling portions 176c may be coupled to, for example, the beading portion 180 in the inner surface of the battery housing 171. The housing coupling portions 176c may be coupled, particularly, to the lower surface of the beading portion 180 by welding. The welding may employ, for example, laser welding, ultrasonic welding, or spot welding. By coupling the housing coupling portions 176c on the beading portion 180 by welding in this way, the resistance level of the cylindrical battery 200 may be limited to about 4 milliohms or less, 3 milliohms or less, 2 milliohms or less, or 0.5 milliohm or less. The resistance level of the cylindrical battery 200 may be at least 0.5 milliohm or at least 1.0 milliohm. In addition, as the lower surface of the beading portion 180 has a shape extending in a direction approximately parallel to the upper surface of the battery housing 171, namely in a direction approximately perpendicular to the sidewall of the battery housing 171, and the housing coupling portion 176c also has a shape extending in the same direction, namely in the radial direction and the circumferential direction, the housing coupling portion 176c may be stably in contact with the beading portion 180. In addition, as the housing coupling portion 176c is stably in contact with the flat portion of the beading portion 180, the two components may be welded smoothly, thereby improving the coupling force between the two components and minimizing the increase in resistance at the coupling portion.

The housing coupling portion 176c may include a contact portion 176e coupled onto the inner surface of the battery housing 171 and a connection portion 176f for connecting the support portion 176a and the contact portion 176e.

The contact portion 176e is coupled onto the inner surface of the battery housing 171. In the case where the beading portion 180 is formed on the battery housing 171, the contact portion 176e may be coupled onto the beading portion 180 as described above. More specifically, the contact portion 176e may be electrically coupled to the flat portion formed at the lower surface of the beading portion 180 formed on the battery housing 171, and may be interposed between the lower surface of the beading portion 180 and the first gasket 178b. In this case, for stable contact and coupling, the contact portion 176e may have a shape extending from the beading portion 180 by a predetermined length along the circumferential direction of the battery housing 171.

Meanwhile, the maximum distance from the center of the second current collector 176 to the end of the second uncoated portion coupling portion 176b along the radial direction of the electrode assembly 110 is particularly equal to or smaller than the inner diameter of the battery housing 171 in a region where the beading portion 180 is formed, namely the minimum inner diameter of the battery housing 171. This is to prevent the second current collector 176 from being interfered by the beading portion 180 during the sizing process of compressing the battery housing 171 along the height direction, and thus to prevent the electrode assembly 110 from being pressed by the second current collector 176.

The second uncoated portion coupling portion 176b includes a hole 176g. The hole 176g may be used as a passage through which the electrolyte may move. The welding pattern 176h formed by welding between the second uncoated portion coupling portion 176b and the bending surface region ($F_2$) may have a structure to extend along the radial direction of the electrode assembly 110. The welding pattern 176h may be a line pattern or a dot array pattern.

The cylindrical battery 200 have an advantage in that electrical connection can be performed at the upper portion thereof.

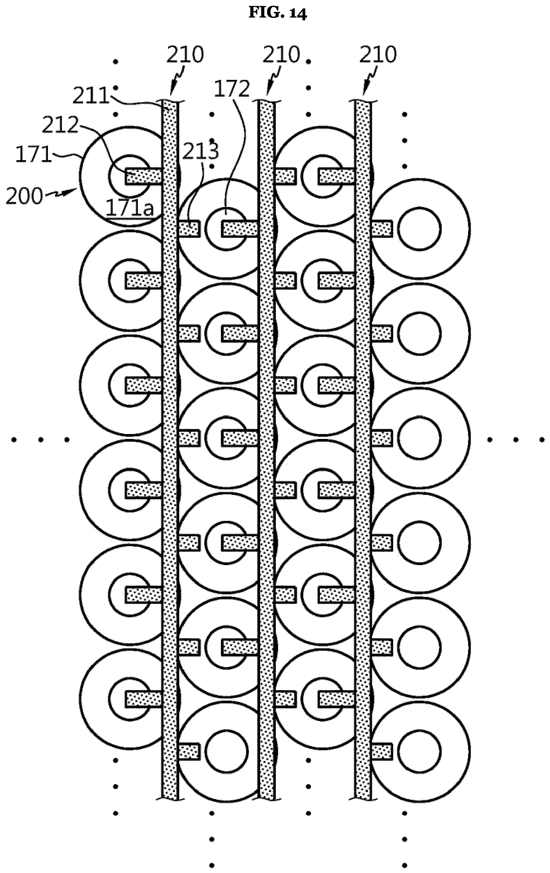

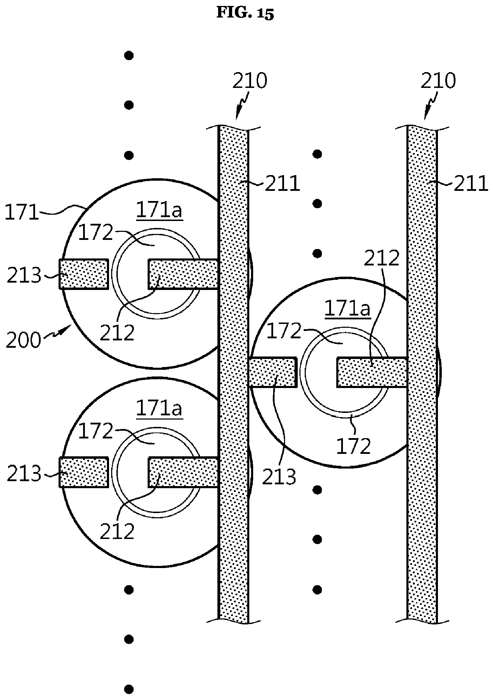

FIG. 14 is a top plan view illustrating a state in which a plurality of cylindrical batteries 200 are electrically connected, and FIG. 15 is a partially enlarged view of FIG. 14.

Referring to FIGS. 14 and 15, a plurality of cylindrical batteries 200 may be connected in series and in parallel at an upper portion of the cylindrical batteries 200 using a bus bar 210. The number of cylindrical batteries 200 may be increased or decreased in consideration of the capacity of the battery pack.

In each cylindrical battery 200, the terminal 172 may have a positive polarity, and the flat surface 171a around the terminal 172 of the battery housing 171 may have a negative polarity, or vice versa.

The plurality of cylindrical batteries 200 may be arranged in a plurality of columns and rows. Columns are provided in a vertical direction with respect to the drawing, and rows are provided in a left and right direction with respect to the drawing. In addition, in order to maximize space efficiency, the cylindrical batteries 200 may be arranged in a closest packing structure. The closest packing structure is formed when an equilateral triangle is formed by connecting the centers of the terminals 172 exposed out of the battery housing 171 to each other. The bus bar 210 connects the cylindrical batteries 200 arranged in the same column in parallel to each other, and connects the cylindrical batteries 200 arranged in two neighboring columns in series with each other.

The bus bar 210 may include a body portion 211, a plurality of first bus bar terminals 212 and a plurality of second bus bar terminals 213 for serial and parallel connection. The body portion 211 may extend along the column of the cylindrical battery 200 between neighboring terminals 172. Alternatively, the body portion 211 may extend along the row of the cylindrical batteries 1 and may be regularly bent like a zigzag shape.

The plurality of first bus bar terminals 212 may extend from one side of the body portion 211 and may be electrically coupled to the terminal 172 of the cylindrical battery 200 located in the extending direction. The electrical connection between the first bus bar terminal 212 and the terminal 172 may be achieved by laser welding, ultrasonic welding, or the like.

The plurality of second bus bar terminals 213 may extend from the other side of the body portion 211 and may be electrically coupled to the flat surface 171a around the terminal 172 located in the extending direction. The electrical coupling between the second bus bar terminal 213 and the flat surface 171a may be performed by laser welding, ultrasonic welding, or the like.

The body portion 211, the plurality of first bus bar terminals 212 and the plurality of second bus bar terminals 213 may be made of one conductive metal plate. The metal plate may be, for example, an aluminum plate or a copper plate, but the present disclosure is not limited thereto. In a modified example, the body portion 211, the plurality of first bus bar terminals 212 and the second bus bar terminals 213 may be manufactured as separate pieces and then coupled to each other by welding or the like.

The cylindrical battery 200 of the present disclosure as described above has a structure in which resistance is minimized by enlarging the welding area by means of the bending surface region $F_1$ and $F_2$, multiplexing current paths by means of the second current collector 176, minimizing a current path length, or the like. The AC resistance of the cylindrical battery 200 measured through a resistance meter between the positive electrode and the negative electrode, namely between the terminal 172 and the flat surface 171a around the terminal 172, may be about 4 milliohms or below suitable for fast charging. The AC resistance of the cylindrical battery 200 measured through a resistance meter between the positive electrode and the negative electrode, namely between the terminal 172 and the flat surface 171a around the terminal 172, may be 4 milliohms or less, 3 milliohms or less, 2 milliohms or less, or 0.5 milliohm or less, and/or at least 0.5 milliohm or at least 1.0 milliohm.

In the cylindrical battery 200 according to the present disclosure, since the terminal 172 having a positive polarity and the flat surface 171a having a negative polarity are located in the same direction, it is easy to electrically connect the cylindrical batteries 200 using the bus bar 210.

In addition, since the terminal 172 of the cylindrical battery 200 and the flat surface 171a around the terminal 172 have a large area, the coupling area of the bus bar 210 may be sufficiently secured to sufficiently reduce the resistance of the battery pack including the cylindrical battery 200.

The cylindrical battery may be used to manufacture a battery pack.

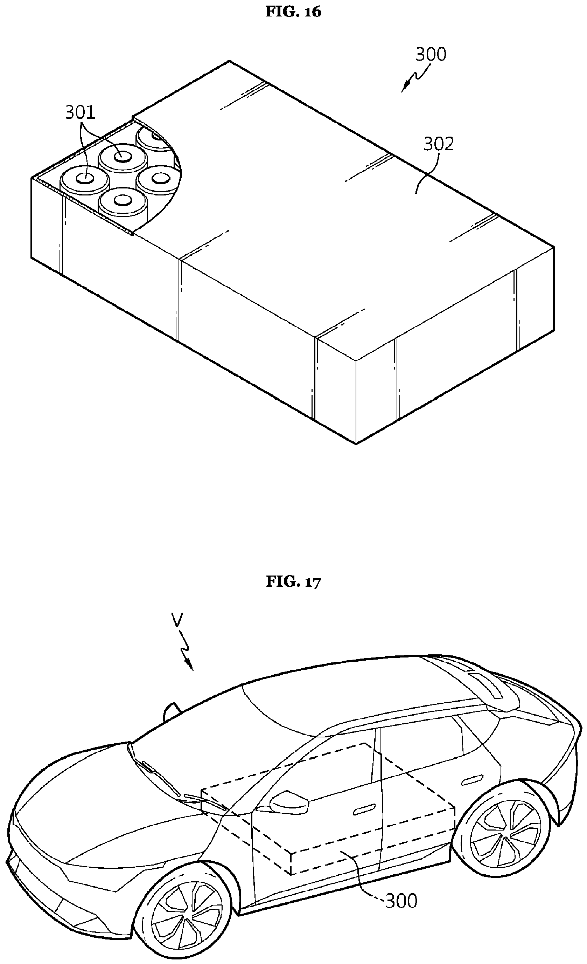

FIG. 16 is a diagram schematically showing a battery pack. The battery pack comprises one or more cylindrical batteries as described above. The cylindrical batteries may be arranged in one or more columns. The cylindrical battery cells may be arranged such that their electrode terminals and the second end faces of the battery cans of the cylindrical battery cells are on top. In other words, the electrode terminal and the outer surface of the bottom of the battery can of each cylindrical battery cell may be disposed to face upward.

Referring to FIG. 16, a battery pack 300 includes an aggregate in which cylindrical batteries 301 are electrically connected, and a pack housing 302 for accommodating the aggregate. The cylindrical battery 301 may be any one of the batteries according to the above embodiments (modifications). In the drawing, components such as a bus bar, a cooling unit, and an external terminal for electrical connection of the cylindrical batteries 301 are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 17 is a diagram schematically showing a vehicle including the battery pack 300 of FIG. 16.

Referring to FIG. 17, a vehicle V may include the battery pack 300 as described hereinabove. The vehicle V operates by receiving power from the battery pack 300.

When bending the uncoated portions exposed at both ends of the electrode assembly, it is possible to prevent the separator or the active material layer from being damaged when welding the current collector by sufficiently securing an area where the uncoated portion is overlapped into 10 or more layers in the radial direction of the electrode assembly.

Since the structure of the uncoated portion adjacent to the core of the electrode assembly is improved, it is possible to prevent the cavity in the core of the electrode assembly from being blocked when the uncoated portion is bent. Thus, the electrolyte injection process and the process of welding the battery housing and the current collector may be carried out easily.

Since the bending surface region of the uncoated portion is directly welded to the current collector instead of a strip-shaped electrode tab, it is possible to provide an electrode assembly with improved energy density and reduced resistance.

It is possible to provide a cylindrical battery having a structure that has a low internal resistance and improves welding strength between the current collector and the uncoated portion, and a battery pack and a vehicle including the cylindrical battery.

**Claims**

1. An electrode assembly (80) in which a first electrode (10; 11), a second electrode (10; 11), and a separator (12) interposed therebetween are wound based on an axis to define a core (C) and an outer circumference,

   wherein the first electrode (10; 11) includes an uncoated portion (43) adjacent to an edge of the first electrode (10; 11), wherein the uncoated portion (43) extends beyond the separator (12) along a winding axis direction of the electrode assembly (80), and
   a part of the uncoated portion (43) is bent in a radial direction of the electrode assembly (80) to form a bending surface region (F) that includes overlapping layers of the uncoated portion (43), wherein in a partial region of the bending surface region (F), the number of stacked layers of the uncoated portion (43) is 10 or more in the winding axis direction of the electrode assembly (80),
   wherein the partial region of the bending surface region (F) extends circularly around a winding axis or is an annular region.

2. The electrode assembly according to claim 1, wherein when the number of total winding turns of the first electrode (10, 11) is defined as $n_1$ and wherein a value obtained by dividing a winding turn index k (a natural number of 1 to $n_1$) at a $k^{th}$ winding turn location by the number of total winding turns $n_1$ is defined as a relative radial position $R_{1,k}$ of the winding turn index k, wherein a length ratio of a radial region of $R_{1,k}$ satisfying a condition that the number of stacked layers of the uncoated portion (43) is 10 or more is 30% or more, in particular 30% to 85 %, based on a relative radial position region in which the uncoated portion (43) is bent.

3. The electrode assembly (80) according to claim 2,

   wherein in the winding structure of the first electrode (10; 11), the uncoated portion (43) of a region from a relative radial position $R_{1,1}$ of a $1^{st}$ winding turn to a first relative radial position $R_{1,k^*}$ of a preset $k^{*th}$ winding turn has a smaller height than the uncoated portion (43) of a region from a relative radial position $R_{1,k^*+1}$ of a $k^*+1^{th}$ winding turn to a relative radial position 1, and/or
   wherein in the winding structure of the first electrode (10; 11), the uncoated portion (43) of a region from a relative radial position $R_{1,1}$ of a $1^{st}$ winding turn to a first relative radial position $R_{1,k^*}$ of a preset $k^{*th}$ winding turn has a smaller height than the bending surface region (F) formed by overlapping of the bent uncoated portions (43), and/or
wherein in the winding structure of the first electrode (10; 11), the uncoated portion (43) of a region from a relative radial position $R_{1,1}$ of a 1st winding turn to a first relative radial position $R_{1,k^*}$ of a $k^{*th}$ winding turn is not bent toward the core (C) of the electrode assembly (80).

4. The electrode assembly (80) according to claim 2 or 3,
wherein in the winding structure of the first electrode (10; 11), the uncoated portion (43) of a region from a relative radial position $R_{1,1}$ of a 1st winding turn to a first relative radial position $R_{1,k^*}$ of a $k^{*th}$ winding turn has a smaller height than the uncoated portion (43) of a region from a relative radial position $R_{1,k^*+1}$ of a $k^*+1^{th}$ winding turn to a relative radial position 1, and is not bent toward the core (C).

5. The electrode assembly (80) according to claim 4, wherein a length of the first electrode (10; 11) corresponding to the region from the relative radial position $R_{1,1}$ to the first relative radial position $R_{1,k^*}$ is 1% to 30% compared to a length of the first electrode (10; 11) corresponding to the region from the relative radial position $R_{1,k^*+1}$ to the relative radial position 1.

6. The electrode assembly (80) according to any of claims 2 to 4,
wherein in the winding structure of the first electrode (10; 11), a bending length $fd_{1,k^*+1}$ of the uncoated portion (43) at a relative radial position $R_{1,k^*+1}$ of a $k^*+1^{th}$ winding turn is shorter than a radial length from a relative radial position $R_{1,1}$ of a 1st winding turn to a relative radial position $R_{1,k^*}$ of a $k^{*th}$ winding turn.

7. The electrode assembly (80) according to any of claims 2 to 6,
wherein in the winding structure of the first electrode (10; 11), when a radius of the core (C) of the electrode assembly (80) is defined as $r_c$, a region from a center of the core (C) to $0.90r_c$ is not blocked by a bent portion of the uncoated portion (43) located in a region from a relative radial position $R_{1,k^*+1}$ of a $k^*+1^{th}$ winding turn to a relative radial position 1, wherein the core (C) is a cavity at the winding center of the electrode assembly (80) and corresponded to the 1st winding turn of the winding structure comprising a plurality of winding turns.

8. The electrode assembly (80) according to claim 7, wherein a bending length $fd_{1,k^*+1}$ of the uncoated portion (43) at a relative radial position $R_{1,k^*+1}$ of a $k^*+1^{th}$ winding turn, the radius $r_c$ of the core (C), and a distance $d_{1,k^*+1}$ from a center of the electrode assembly (80) to the relative radial position $R_{1,k^*+1}$ satisfy the following formula:

$$fd_{1,k^*+1} + 0.90^*r_c \leq d_{1,k^*+1}.$$

9. The electrode assembly (80) according to any of claims 2 to 8,
wherein in the winding structure of the first electrode (10; 11), the uncoated portion (43) of a region from a relative radial position $R_{1,k^*+1}$ of a $k^*+1^{th}$ winding turn to a second relative radial position $R_{1,k@}$ of a preset $k@^{th}$ winding turn is divided into a plurality of separate tabs (61), whose heights increase continuously or stepwise along one direction parallel to the winding direction.

10. The electrode assembly (80) according to claim 9, wherein a radial length of the region from the relative radial position $R_{1,k^*+1}$ to the second relative radial position $R_{1,k@}$ is 1% to 56% compared to a radius of the winding structure of the first electrode (10; 11) except for the core (C) of the electrode assembly (80).

11. The electrode assembly (80) according to any of claims 2 to 10,
wherein in the winding structure of the first electrode (10; 11), the uncoated portion (43) of a region from a relative radial position $R_{1,k@+1}$ of a preset $k@+1^{th}$ winding turn to a relative radial position 1 is divided into a plurality of separate tabs (61), and the plurality of separate tabs (61) have substantially the same height from the relative radial position $R_{1,k@+1}$ to the relative radial position 1.

12. The electrode assembly (80) according to any of the preceding claims,

wherein in the winding structure of the first electrode (10; 11), the uncoated portion (43) bent in the radial direction of the electrode assembly (80) is divided into a plurality of separate tabs (61) that are independently bendable, and at least one of a height of the plurality of separate tabs (61) in the winding axis direction and a width thereof in the winding direction increases continuously or stepwise along one direction parallel to the winding direction individually or in groups.

13. The electrode assembly (80) according to any of the preceding claims,

wherein the bending surface region (F) formed by the uncoated portion (43) of the first electrode (10; 11) includes a stack number increasing region and a stack number uniform region from the outer circumference of the electrode assembly (80) to the core (C) thereof, the stack number increasing region is defined as a region in which the number of stacked layers of the uncoated portion (43) increases toward to the core (C) of the electrode assembly (80), and the stack number uniform region is defined as a region from a radial position where the increasing of the number of stacked layers of the uncoated portion (43) stops to a radial position where the uncoated portion (43) starts bending, and

a radial length of the stack number uniform region is 30% or more compared to a radial length from a winding turn where the uncoated portion (43) starts bending to a winding turn where the uncoated portion (43) ends bending.

14. The electrode assembly (80) according to any of the preceding claims,

wherein the uncoated portion (43) of the first electrode (10; 11) has a thickness of 10 um to 25 um.

15. The electrode assembly (80) according to any of the preceding claims,

wherein in the partial region of the bending surface region (F) formed by the uncoated portion (43) of the first electrode (10; 11), a total stack thickness of overlapping layers of the uncoated portion (43) is 100 um to 975 um.

16. The electrode assembly (80) according to claim 15,

wherein the uncoated portion (43) of the first electrode (10; 11) is divided into a plurality of separate tab (61) that are independently bendable, the first electrode (10; 11) includes a height variable region in which heights of separate tabs (61) are variable and a height uniform region in which heights of separate tabs (61) are uniform, and in a region formed by bending the separate tabs (61) included in the height uniform region along the radial direction of the electrode assembly (80) in the bending surface region (F), a ratio of a stack thickness of the uncoated portion (43) of the bending surface region (F) to the height of the separate tab (61) is 1.0% to 16.3%.

17. The electrode assembly (80) according any of the preceding claims,

wherein the second electrode (10; 11) includes an uncoated portion (43) adjacent to an edge of the second electrode (10; 11), wherein the uncoated portion (43) extends beyond the separator (12) along the winding axis direction of the electrode assembly (80), and

a part of the uncoated portion (43) is bent in the radial direction of the electrode assembly (80) to form a bending surface region (F) that includes overlapping layers of the uncoated portion (43), wherein in a partial region of the bending surface region (F), the number of stacked layers of the uncoated portion (43) is 10 or more in the winding axis direction of the electrode assembly (80).

18. The electrode assembly (80) according to claim 17, wherein when the number of total winding turns of the second electrode (10; 11) is defined as $n_2$ and wherein a value obtained by dividing a winding turn index k (a natural number of 1 to $n_2$) at a $k^{th}$ winding turn location by the number of total winding turns $n_2$ is defined as a relative radial position $R_{2,k}$ of the winding turn index k, wherein a length ratio of a radial region of $R_{2,k}$ satisfying a condition that the number of stacked layers of the uncoated portion (43) is 10 or more is 30% or more, in particular 30% to 85%, based on a relative radial position region in which the uncoated portion (43) is bent.

19. The electrode assembly (80) according to claim 18,

wherein in the winding structure of the second electrode (10; 11), the uncoated portion (43) of a region from a relative radial position $R_{2,1}$ of a $1^{st}$ winding turn to a first relative radial position $R_{2,k^*}$ of a preset $k^{*th}$ winding turn has a smaller height than the uncoated portion (43) of a region from a relative radial position $R_{2,k^*+1}$ of a $k^*+1^{th}$ winding turn to a relative radial position 1, and/or wherein in the winding structure of the second electrode (10; 11), the uncoated portion (43) of a region from a relative radial position $R_{2,1}$ of a $1^{st}$ winding turn to a first relative radial position $R_{2,k^*}$ of a preset $k^{*th}$ winding turn has a smaller height than the bending surface region (F) formed by overlapping of the bent uncoated portions (43), and/or wherein in the winding structure of the second electrode (10; 11), the uncoated portion (43) of a region from a relative radial position $R_{2,1}$ of a $1^{st}$ winding turn to a first relative radial position $R_{2,k^*}$ of a preset $k^{*th}$ winding turn is not bent toward the core (C) of the electrode assembly (80).

20. The electrode assembly (80) according to claim 18 or 19,

wherein in the winding structure of the second electrode (10; 11), the uncoated portion (43) of a region from a relative radial position $R_{2,1}$ of a $1^{st}$ winding turn to a first relative radial position $R_{2,k^*}$ of a preset $k^{*th}$ winding turn has a smaller height than the uncoated portion (43) of a region from a relative radial position $R_{2,k^*+1}$ of a $k^*+1^{th}$ winding turn to a relative radial position 1, and is not bent toward the core (C).

21. The electrode assembly (80) according to claim 20, wherein a length of the second electrode (10; 11) corresponding to the region from the relative radial position $R_{2,1}$ to the first relative radial position $R_{2,k*}$ is 1% to 30% compared to a length of the second electrode (10; 11) corresponding to the region from the relative radial position $R_{2,k*+1}$ to the relative radial position 1.

22. The electrode assembly (80) according to any one of the claims 19 to 21,
wherein in the winding structure of the second electrode (10; 11), a bending length $fd_{2,k*+1}$ of the uncoated portion (43) at a relative radial position $R_{2,k*+1}$ of a k*+1$^{th}$ winding turn is shorter than a radial length from a relative radial position $R_{2,1}$ of a 1$^{st}$ winding turn to a relative radial position $R_{1,k*}$ of a k*$^{th}$ winding turn.

23. The electrode assembly (80) according to any one of the claims 19 to 22,
wherein in the winding structure of the second electrode (10; 11), when a radius of the core (C) of the electrode assembly (80) is defined as $r_c$, a region from a center of the core (C) to $0.90r_c$ is not blocked by a bent portion of the uncoated portion (43) of the second electrode (10; 11) located in a region from a relative radial position $R_{2,k*+1}$ of a k*+1$^{th}$ winding turn to a relative radial position 1.

24. The electrode assembly (80) according to claim 23,
wherein a bending length $fd_{2,k*+1}$ of the uncoated portion (43) at a relative radial position $R_{2,k*+1}$ of a k*+1$^{th}$ winding turn, the radius $r_c$ of the core (C), and a distance $d_{2,k*+1}$ from a center of the electrode assembly (80) to the relative radial position $R_{2,k*+1}$ satisfy the following formula:

$$fd_{2,k*+1} + 0.90^* r_c \le d_{2,k*+1}, ,$$

wherein in particular the gap has a length of 0.2 mm to 4 mm.

25. The electrode assembly (80) according to any one of the claims 19 to 24,
wherein in the winding structure of the second electrode (10; 11), the uncoated portion (43) of a region from a relative radial position $R_{2,k*+1}$ of a k*+1$^{th}$ winding turn to a second relative radial position $R_{2,k@}$ of a preset k@$^{th}$ winding turn is divided into a plurality of separate tabs (61), whose heights increase stepwise or continuously along one direction parallel to the winding direction.

26. The electrode assembly (80) according to claim 25,
wherein a radial length of the region from the relative radial position $R_{2,k*+1}$ to the second relative radial position $R_{2,k@}$ is 1% to 56% compared to a radius of the winding structure of the second electrode except for the core (C) of the electrode assembly (80).

27. The electrode assembly (80) according to any one of the claims 19 to 26,
wherein in the winding structure of the second electrode (10; 11), the uncoated portion (43) of the second electrode (10; 11) of a region from a relative radial position $R_{2,k@+1}$ of a k@+1$^{th}$ winding turn to a relative radial position 1 is divided into a plurality of separate tabs (61), and the plurality of separate tabs (61) have substantially the same height from the relative radial position $R_{2,k@+1}$ to the relative radial position 1.

28. The electrode assembly (80) according to any one of the claims 19 to 27,
wherein the bending surface region (F) formed by the uncoated portion (43) of the second electrode (10; 11) includes a stack number increasing region and a stack number uniform region from the outer circumference of the electrode assembly (80) to the core (C) thereof,
the stack number increasing region is defined as a region in which the number of stacked layers of the uncoated portion (43) increases toward to the core (C) of the electrode assembly (80), and the stack number uniform region is defined as a region from a radial position where the increasing of the number of stacked layers of the uncoated portion (43) stops to a radial position where the uncoated portion (43) starts bending, and
a radial length of the stack number uniform region is 30% or more compared to a radial length from a winding turn where the uncoated portion (43) starts bending to a winding turn where the uncoated portion (43) ends bending.

29. The electrode assembly (80) according to any one of the claims 18 to 28,
wherein in the winding structure of the second electrode (10; 11), the uncoated portion (43) bent in the radial direction of the electrode assembly (80) is divided into a plurality of separate tabs (61) that are independently bendable, and at least one of a height of the plurality of separate tabs (61) in the winding axis direction and a width thereof in the winding direction increases continuously or stepwise along one direction parallel to the winding direction individually or in groups.

30. The electrode assembly (80) according to any one of the claims 18 to 29,
wherein the first electrode (10; 11) and the second electrode (10; 11) have a thickness of 80 um to 250 um, and

an interval of the uncoated portions (43) located at winding turns adjacent in the radial direction of the electrode assembly (80) is 200 um to 500 um.

**31.** The electrode assembly (80) according to any one of the claims 18 to 29,
wherein the uncoated portion (43) of the second electrode (10; 11) has a thickness of 5 um to 20 um.

**32.** The electrode assembly (80) according to any one of the claims 18 to 30,
wherein in the partial region of the bending surface region (F) formed by the uncoated portion (43) of the second electrode (10; 11), a total stack thickness of overlapping layers of the uncoated portion (43) is 50 um to 780 um.

**33.** The electrode assembly (80) according to claim 32,
wherein the uncoated portion (43) of the second electrode (10; 11) is divided into a plurality of separate tabs (61) that are independently bendable, the second electrode (10; 11) includes a height variable region in which heights of separate tabs (61) are variable and a height uniform region in which heights of separate tabs (61) are uniform, and in a region formed by bending the separate tabs (61) included in the height uniform region along the radial direction of the electrode assembly (80) in the bending surface region (F), a ratio of a stack thickness of the uncoated portion (43) of the bending surface region (F) to the height of the separate tab (61) is 0.5% to 13.0%

**34.** The electrode assembly (80) according to one of the preceding claims,
wherein the uncoated portion (43) of the first electrode (10; 11) and/or of the second electrode (10; 11) is divided into a plurality of separate tabs (61) that are independently bendable.

**35.** The electrode assembly (80) according to claim 34,

wherein each of the plurality of separate tabs (61) has a geometric shape which uses a bending line thereof as a base, and
the geometric shape is formed by connecting one or more straight lines, one or more curves, or a combination thereof.

**36.** The electrode assembly (80) according to claim 35,

wherein the geometric shape has a width decreasing stepwise or continuously from the base to the top,
wherein a lower internal angle of the geometric shape between the base and a side intersecting the base is 60 degrees to 85 degrees,
wherein in particular the lower internal angles of the plurality of separate tabs (61) increase stepwise or continuously along one direction parallel to the winding direction of the electrode assembly (80).

**37.** The electrode assembly (80) according to claim 35 or 36,

wherein each separate tab (61) of the plurality of separate tabs (61) has a geometric shape which uses a bending line thereof as a base, and when a radius of a winding turn in which the separate tab (61) is disposed based on a core center of the electrode assembly (80) is r, an arc length of a winding turn corresponding to a lower portion of the separate tab (61) is $L_{arc}$, and a lower internal angle of the separate tab (61) in the assumption that sides of a pair of separate tabs (61) adjacently disposed in the winding turn having the radius of r is $\theta_{assumption}$, an actual lower internal angle $\theta_{real}$ of the pair of separate tabs (61) adjacently disposed satisfies the following formula:

$$\theta_{real} > \theta_{assumption}$$

$$\theta_{assumption} = 90° - 360°*(L_{arc}/2\pi r)*0.5.$$

**38.** The electrode assembly (80) according to claim 37,

wherein a circumferential angle corresponding to the arc length $L_{arc}$ of the winding turn corresponding to the lower portion of the separate tab (61) based on the core center of the electrode assembly (80) is 45 degrees or less, and/or
wherein when an overlapping ratio of the separate tab (61) adjacently disposed in the winding turn having the radius of r based on the core center of the electrode assembly (80) is defined using a formula $(\theta_{real}/\theta_{assumptoin}-1)$, the overlapping ratio of the separate tabs (61) is greater than 0 and equal to or smaller than 0.05.

**39.** The electrode assembly (80) according to any one of the claims 35 to 38,
wherein when a virtual circle passing through a pair of separate tabs (61) adjacently disposed in the winding turn having the radius of r based on the core center of the electrode assembly (80) is drawn, a pair of arcs $(e_1\text{-}e_2; e_3\text{-}e_4)$ passing through each of the pair of adjacent separate tabs (61) overlap with each other, wherein in particular when a ratio of a length of the overlapping arc to a length of the arc passing through each separate tab (61) is defined as an overlapping ratio, the overlapping ratio of the separate tab (61) is greater than 0 and equal to or smaller than 0.05.

40. The electrode assembly (80) according to any one of the claims 34 to 39,
wherein each of the plurality of separate tabs (61) satisfies at least one condition among a width condition of 1 mm to 11 mm in the winding direction; a height condition of 2 mm to 10 mm in the winding axis direction; and a separation pitch condition of 0.05 mm to 1 mm in the winding direction.

41. The electrode assembly (80) according to claim any one of the claims 34 to 40,

    wherein a cut groove is interposed between the plurality of separate tabs (61), and
    a predetermined gap is provided between a bottom of the cut groove and the active material layer of the first electrode (10; 11) or the second electrode (10; 11).

42. The electrode assembly (80) according to any one of the claims 34 to 41,
wherein the plurality of separate tabs (61) form a plurality of tab groups along the winding direction of the electrode assembly (80), and segments belonging to the same segment group are substantially the same as each other in terms of at least one of a width in the winding direction, a height in the winding axis direction, and a separation pitch in the winding direction.

43. The electrode assembly (80) according to claim 42,

    wherein the segments belonging to the same segment group are configured such that at least one of the width in the winding direction, the height in the winding axis direction, and the separation pitch in the winding direction increases continuously or stepwise along one direction parallel to the winding direction of the electrode assembly (80), and/or
    wherein at least a part of the plurality of tab groups are disposed at the same winding turn of the electrode assembly (80).

44. An electrode assembly (80) in which a first electrode (10; 11), a second electrode (10; 11), and a separator (12) interposed therebetween are wound based on an axis to define a core (C) and an outer circumference,

    wherein the first electrode (10; 11) includes a first uncoated portion (43) adjacent to an edge of the first electrode (10; 11), wherein the first uncoated portion (43) extends beyond the separator (12) along a winding axis direction of the electrode assembly (80), and
a part of the first uncoated portion (43) is bent in a radial direction of the electrode assembly (80) to form a first bending surface region (F), and in a partial region of the first bending surface region (F), a stack thickness of overlapping layers of the first uncoated portion (43) is 100 um to 975 um,
wherein the partial region of the bending surface region (F) extends circularly around a winding axis or is an annular region.

45. The electrode assembly (80) according to claim 44, wherein the first uncoated portion (43) of the first electrode (10; 11) is divided into a plurality of separate tabs (61) that are independently bendable, the first electrode (10; 11) includes a height variable region in which heights of separate tabs (61) are variable and a height uniform region in which heights of separate tabs (61) are uniform, and in a region formed by bending the separate tabs (61) included in the height uniform region along the radial direction of the electrode assembly (80) in the bending surface region (F), a ratio of a stack thickness of the uncoated portion (43) of the bending surface region (F) to the height of the separate tab (61) is 1.0% to 16.3%.

46. The electrode assembly (80) according to claim 44 or 45,

    wherein the second electrode (10; 11) includes a second uncoated portion (43) adjacent to an edge of the second electrode (10; 11), wherein the second uncoated portion (43) extends beyond the separator (12) along the winding axis direction of the electrode assembly (80),
    a part of the second uncoated portion (43) is bent in the radial direction of the electrode assembly (80) to form a second bending surface region (F), and
    in a partial region of the second bending surface region (F), a stack thickness of the second uncoated portion (43) is 50 um to 780 um.

47. The electrode assembly (80) according to claim 46, wherein the second uncoated portion (43) of the second electrode (10; 11) is divided into a plurality of separate tabs (61) that are independently bendable, the second electrode (10; 11) includes a height variable region in which heights of separate tabs (61) are variable and a height uniform region in which heights of separate tabs (61) are uniform, and in a region formed by bending the separate tabs (61) included in the height uniform region along the radial direction of the electrode assembly (80) in the bending surface region (F), a ratio of a stack thickness of the uncoated portion (43) of the bending surface re-

gion (F) to the height of the separate tab (61) is 0.5% to 13.0%

**48.** A battery, comprising:

an electrode assembly (80) in which a first electrode (10; 11), a second electrode (10; 11), and a separator (12) interposed therebetween are wound based on an axis to define a core (C) and an outer circumference, wherein at least one of the first electrode (10; 11) and the second electrode (10; 11) includes an uncoated portion (43) adjacent to an edge of the respective electrode (10; 11), wherein the uncoated portion (43) extends beyond the separator (12) along a winding axis direction of the electrode assembly (80), and wherein at least a part of the uncoated portion (43) is bent in a radial direction of the electrode assembly (80) to form a bending surface region (F), wherein in a partial region of the bending surface region (F), the number of stacked layers of the uncoated portion (43) is 10 or more;
a battery housing (142) configured to accommodate the electrode assembly (80) and electrically connected to one of the first electrode (10; 11) and the second electrode (10; 11) to have a first polarity;
a sealing body (143) configured to seal an open end of the battery housing (142);
a terminal (172) electrically connected to the other of the first electrode (10; 11) and the second electrode (10; 11) to have a second polarity and configured to have a surface exposed to the outside; and
a current collector (144; 145) welded to the bending surface region (F) and electrically connected to any one of the battery housing (142) and the terminal (172),
wherein the welding region of the current collector (144; 145) overlaps with the bending surface region (F) in which the number of stacked layers of the uncoated portion (43) is 10 or more,
wherein the partial region of the bending surface region (F) extends circularly around a winding axis or is an annular region.

**49.** The battery according to claim 48,

wherein the first electrode (10; 11) includes a first uncoated portion (43) adjacent to an edge of the first electrode (10; 11) wherein the second uncoated portion (43) extends beyond the separator (12) along the winding axis direction of the electrode assembly (80), and
wherein the number of total winding turns of the first electrode (10; 11) is defined as $n_1$ and wherein a value obtained by dividing a winding turn index k (a natural number of 1 to $n_1$) at a $k^{th}$ winding turn location by the number of total winding turns $n_1$ is defined as a relative radial position $R_{1,k}$ of the winding turn index k, wherein a length ratio of a radial region of $R_{1,k}$ satisfying a condition that the number of stacked layers of the first uncoated portion (43) is 10 or more is 30% or more based on a relative radial position region in which the first uncoated portion (43) is bent.

**50.** The battery according to claim 48 or 49,

wherein the second electrode (10; 11) includes a second uncoated portion (43) adjacent to an edge of the second electrode (10; 11) wherein the second uncoated portion (43) extends beyond the separator (12) along the winding axis direction of the electrode assembly (80), and wherein the number of total winding turns of the second electrode (10; 11) is defined as $n_2$ and wherein a value obtained by dividing a winding turn index k (a natural number of 1 to $n_2$) at a $k^{th}$ winding turn location by the number of total winding turns $n_2$ is defined as a relative radial position $R_{2,k}$ of the winding turn index k, wherein a length ratio of a radial region of $R_{2,k}$ satisfying a condition that the number of stacked layers of the second uncoated portion (43) is 10 or more is 30% or more based on a relative radial position region in which the second uncoated portion (43) is bent.

**51.** The battery according to claim any one of the claims 48 to 50,

wherein the welding region of the current collector (144; 145) overlaps with the bending surface region (F) in which the number of stacked layers of the uncoated portion (43) is 10 or more by 50% or more,
wherein the welding strength of the current collector (144; 145) is in the range of 0.196133 MPa (2kgf/cm$^2$) or more.

**52.** A battery, comprising:

an electrode assembly (80) in which a first electrode (10; 11), a second electrode (10; 11), and a separator (12) interposed therebetween are wound based on an axis to define a core (C) and an outer circumference, wherein the first electrode (10; 11) includes a first uncoated portion (43) adjacent to an edge of the respective electrode (10; 11), wherein the first uncoated portion (43) extends beyond the separator (12) along a winding axis direction of the electrode assembly (80), and wherein a part of the first uncoated portion (43) is bent in a radial direction of the electrode assembly (80) to form a first bending surface region (F), wherein in a partial region of the first bending surface region (F), a stack thickness of overlapping layers of the first uncoated portion (43) is 100 um to 975 um,

a battery housing (142) configured to accommodate the electrode assembly (80) and electrically connected to one of the first electrode (10; 11) and the second electrode (10; 11) to have a first polarity;

a sealing body (143) configured to seal an open end of the battery housing (142);

a terminal (172) electrically connected to the other of the first electrode (10; 11) and the second electrode (10; 11) to have a second polarity and configured to have a surface exposed to the outside; and

a first current collector (144) welded to the first bending surface region (F) and electrically connected to any one of the battery housing (142) and the terminal (172),

wherein the welding region of the first current collector (144) overlaps with the partial region of the first bending surface region (F) in which the stack thickness of the first uncoated portion (43) is 100 um to 975 um,

wherein the partial region of the bending surface region (F) extends circularly around a winding axis or is an annular region.

53. The battery according to claim 52,

   wherein the first uncoated portion (43) of the first electrode (10; 11) is divided into a plurality of separate tabs (61) that are independently bendable, the first electrode (10; 11) includes a height variable region in which heights of separate tabs (61) are variable and a height uniform region in which heights of separate tabs (61) are uniform, and in a region formed by bending the segments included in the height uniform region along the radial direction of the electrode assembly (80) in the first bending surface region (F), a ratio of a stack thickness of the uncoated portion (43) of the first bending surface region (F) to the height of the separate tab (61) is 1.0% to 16.3%, and/or

   wherein the welding strength of the first current collector (144) is in the range of 0.196133 MPa (2 kgf/cm$^2$) or more.

54. The battery according to claim 52 or 53,

   wherein the second electrode (10; 11) includes a second uncoated portion (43) adjacent to an edge of the second electrode (10; 11) wherein the second uncoated portion (43) extends beyond the separator (12) along the winding axis direction of the electrode assembly (80), wherein a part of the second uncoated portion (43) is bent in the radial direction of the electrode assembly (80) to form a second bending surface region (F), and wherein in a partial region of the second bending surface region (F), a stack thickness of the second uncoated portion (43) is 50 um to 780 um,

the battery comprises a second current collector (145) welded to the second bending surface region (F) and electrically connected to any one of the battery housing (142) and the terminal (172), and

the welding region of the second current collector (145) overlaps with the partial region of the second bending surface region (F) in which the stack thickness of the second uncoated portion (43) is 50 um to 780 um.

55. The battery according to claim 54,

   wherein the second uncoated portion (43) of the second electrode (10; 11) is divided into a plurality of separate tabs (61) that are independently bendable, the second electrode (10; 11) includes a height variable region in which heights of separate tabs (61) are variable and a height uniform region in which heights of separate tabs (61) are uniform, and in a region formed by bending the segments included in the height uniform region along the radial direction of the electrode assembly (80) in the second bending surface region (F), a ratio of a stack thickness of the uncoated portion (43) of the second bending surface region (F) to the height of the separate tab (61) is 0.5% to 13.0%, and/or

   wherein the welding strength of the second current collector (145) is in the range of 0.196133 MPa (2kgf/cm$^2$) or more, and/or

   wherein the welding region of the second current collector (145) overlaps with the partial region of the second bending surface region (F) in which the stack thickness of the second uncoated portion (43) is 50 um to 780 um by 50% or more.

56. The battery according to claim 55,
   wherein the welding region of the first current collector (144) overlaps with the partial region of the first bending surface region (F) in which the stack thickness of the first uncoated portion (43) is 100 um to 975 um by 50% or more.

57. A battery pack (300), comprising the battery according to any one of claims 48 to 56.

58. A vehicle (V), comprising the battery pack (300) according to claim 57.

**Patentansprüche**

1. Elektrodenanordnung (80), in der eine erste Elektrode (10; 11), eine zweite Elektrode (10; 11) und ein dazwischen angeordneter Separator (12) bezüglich einer Achse gewickelt sind und dadurch einen Kern (C) und einen Außenumfang definieren,

   wobei die erste Elektrode (10; 11) einen unbeschichteten Abschnitt (43) benachbart zu einem Rand der ersten Elektrode (10; 11) aufweist, wobei sich der unbeschichtete Abschnitt (43) entlang einer Wicklungsachsenrichtung der Elektrodenanordnung (80) über den Separator (12) hinaus erstreckt, und
   wobei ein Teil des unbeschichteten Abschnitts (43) in einer radialen Richtung der Elektrodenanordnung (80) gebogen ist und dadurch einen Biegeflächenbereich (F) bildet, der überlappende Schichten des unbeschichteten Abschnitts (43) aufweist, wobei in einem Teilbereich des Biegeflächenbereichs (F) die Anzahl der gestapelten Schichten des unbeschichteten Abschnitts (43) in der Wicklungsachsenrichtung der Elektrodenanordnung (80) 10 oder mehr beträgt,
   wobei sich der Teilbereich des Biegeflächenbereichs (F) kreisförmig um eine Wicklungsachse erstreckt oder ein ringförmiger Bereich ist.

2. Elektrodenanordnung nach Anspruch 1,
   wobei, wenn die Anzahl der Gesamtwicklungswindungen der ersten Elektrode (10, 11) als $n_1$ definiert ist und wobei ein Wert, der durch Dividieren eines Wicklungswindungsindex k (eine natürliche Zahl von 1 bis $n_1$) an einer k-ten Wicklungswindungsposition durch die Anzahl der Gesamtwicklungswindungen $n_1$ erhalten wird, als eine relative radiale Position $R_{1,k}$ des Wicklungswindungsindex k definiert ist, wobei ein Längenverhältnis eines radialen Bereichs von $R_{1,k}$, der eine Bedingung erfüllt, dass die Anzahl der gestapelten Schichten des unbeschichteten Abschnitts (43) 10 oder mehr beträgt, 30 % oder mehr, insbesondere 30 % bis 85 %, bezogen auf einen relativen radialen Positionsbereich, in dem der unbeschichtete Abschnitt (43) gebogen ist, beträgt.

3. Elektrodenanordnung (80) nach Anspruch 2,

   wobei in der Wicklungsstruktur der ersten Elektrode (10; 11) der unbeschichtete Abschnitt (43) eines Bereichs von einer relativen radialen Position $R_{1,1}$ einer ersten Wicklungswindung zu einer ersten relativen radialen Position $R_{1,k^*}$ einer voreingestellten $k^*$-ten Wicklungswindung eine kleinere Höhe aufweist als der unbeschichtete Abschnitt (43) eines Bereichs von einer relativen radialen Position $R_{1,k^*+1}$ einer $k^*+1$-ten Wicklungswindung zu einer relativen radialen Position 1, und/oder
   wobei in der Wicklungsstruktur der ersten Elektrode (10; 11) der unbeschichtete Abschnitt (43) eines Bereichs von einer relativen radialen Position $R_{1,1}$ einer 1-ten Wicklungswindung zu einer ersten relativen radialen Position $R_{1,k^*}$ einer voreingestellten $k^*$-ten Wicklungswindung eine kleinere Höhe aufweist als der Biegeflächenbereich (F), der durch Überlappen der gebogenen unbeschichteten Abschnitte (43) gebildet wird, und/oder
   wobei in der Wicklungsstruktur der ersten Elektrode (10; 11) der unbeschichtete Abschnitt (43) eines Bereichs von einer relativen radialen Position $R_{1,1}$ einer 1-ten Wicklungswindung zu einer ersten relativen radialen Position $R_{1,k^*}$ einer $k^*$-ten Wicklungswindung nicht in Richtung des Kerns (C) der Elektrodenanordnung (80) gebogen ist.

4. Elektrodenanordnung (80) nach Anspruch 2 oder 3, wobei, in der Wicklungsstruktur der ersten Elektrode (10; 11), der unbeschichtete Abschnitt (43) eines Bereichs von einer relativen radialen Position $R_{1,1}$ einer 1-ten Wicklungswindung zu einer ersten relativen radialen Position $R_{1,k^*}$ einer $k^*$-ten Wicklungswindung eine kleinere Höhe aufweist als der unbeschichtete Abschnitt (43) eines Bereichs von einer relativen radialen Position $R_{1,k^*+1}$ einer $k^*+1$-ten Wicklungswindung zu einer relativen radialen Position 1 und nicht in Richtung des Kerns (C) gebogen ist.

5. Elektrodenanordnung (80) nach Anspruch 4,
   wobei eine Länge der ersten Elektrode (10; 11), die dem Bereich von der relativen radialen Position $R_{1,1}$ zu der ersten relativen radialen Position $R_{1,k^*}$ entspricht, 1 % bis 30 % beträgt, verglichen mit einer Länge der ersten Elektrode (10; 11), die dem Bereich von der relativen radialen Position $R_{1,k^*+1}$ zu der relativen radialen Position 1 entspricht.

6. Elektrodenanordnung (80) nach einem der Ansprüche 2 bis 4,
   wobei, in der Wicklungsstruktur der ersten Elektrode (10; 11), eine Biegelänge $fd_{1,k^*+1}$ des unbeschichteten Abschnitts (43) an einer relativen radialen Position $R_{1,k^*+1}$ einer $k^*+1$-ten Wicklungswindung kürzer ist als eine radiale Länge von einer relativen radialen Position $R_{1,1}$ einer 1-ten Wicklungswindung zu einer relativen radialen Position $R_{1,k^*}$ einer $k^*$-ten Wicklungswindung.

7. Elektrodenanordnung (80) nach einem der Ansprüche 2 bis 6,
   wobei, in der Wicklungsstruktur der ersten Elektrode (10; 11), wenn ein Radius des Kerns (C) der Elektrodenanordnung (80) als $r_c$ definiert ist, ein Bereich von einer Mitte des Kerns (C) bis $0{,}90 r_c$ nicht durch einen gebogenen Abschnitt des unbeschichteten Abschnitts (43) blockiert ist, der sich in einem Bereich von einer relativen radialen Position $R_{1,k*+1}$ einer $k*+1$-ten Wicklungswindung zu einer relativen radialen Position 1 befindet, wobei der Kern (C) ein Hohlraum an der Wicklungsmitte der Elektrodenanordnung (80) ist und der 1-ten Wicklungswindung der Wicklungsstruktur entspricht, die eine Mehrzahl von Wicklungswindungen umfasst.

8. Elektrodenanordnung (80) nach Anspruch 7, wobei eine Biegelänge $fd_{1,k*+1}$ des unbeschichteten Abschnitts (43) an einer relativen radialen Position $R_{1,k*+1}$ einer $k*+1$-ten Wicklungswindung, der Radius $r_c$ des Kerns (C) und ein Abstand $d_{1,k*+1}$ von einer Mitte der Elektrodenanordnung (80) zu der relativen radialen Position $R_{1,k*+1}$ die folgende Formel erfüllen:

$$fd_{1,k*+1} + 0{,}90 * r_c \ \le \ d_{1,k*+1}.$$

9. Elektrodenanordnung (80) nach einem der Ansprüche 2 bis 8, wobei, in der Wicklungsstruktur der ersten Elektrode (10; 11), der unbeschichtete Abschnitt (43) eines Bereichs von einer relativen radialen Position $R_{1,k*+1}$ einer $k*+1$-ten Wicklungswindung zu einer zweiten relativen radialen Position $R_{1,k@}$ einer voreingestellten $k@$-ten Wicklungswindung in mehrere separate Laschen (61) unterteilt ist, deren Höhen kontinuierlich oder schrittweise entlang einer Richtung parallel zu der Wicklungsrichtung zunehmen.

10. Elektrodenanordnung (80) nach Anspruch 9, wobei eine radiale Länge des Bereichs von der relativen radialen Position $R_{1,k*+1}$ zu der zweiten relativen radialen Position $R_{1,k@}$ 1 % bis 56 % beträgt, verglichen mit einem Radius der Wicklungsstruktur der ersten Elektrode (10; 11) mit Ausnahme des Kerns (C) der Elektrodenanordnung (80).

11. Elektrodenanordnung (80) nach einem der Ansprüche 2 bis 10, wobei, in der Wicklungsstruktur der ersten Elektrode (10; 11), der unbeschichtete Abschnitt (43) eines Bereichs von einer relativen radialen Position $R_{1,k@+1}$ einer voreingestellten $k@+1$-ten Wicklungswindung zu einer relativen radialen Position 1 in mehrere separate Laschen (61) unterteilt ist, und die mehreren separaten Laschen (61) im Wesentlichen die gleiche Höhe von der relativen radialen Position $R_{1,k@+1}$ zu der relativen radialen Position 1 aufweisen.

12. Elektrodenanordnung (80) nach einem der vorhergehenden Ansprüche,

wobei, in der Wicklungsstruktur der ersten Elektrode (10; 11), der unbeschichtete Abschnitt (43), der in der radialen Richtung der Elektrodenanordnung (80) gebogen ist, in mehrere separate Laschen (61) unterteilt ist, die unabhängig biegbar sind, und
mindestens eine von einer Höhe der mehreren separaten Laschen (61) in der Wicklungsachsenrichtung und einer Breite davon in der Wicklungsrichtung kontinuierlich oder schrittweise entlang einer Richtung parallel zu der Wicklungsrichtung einzeln oder in Gruppen zunimmt.

13. Elektrodenanordnung (80) nach einem der vorhergehenden Ansprüche,

wobei der Biegeflächenbereich (F), der durch den unbeschichteten Abschnitt (43) der ersten Elektrode (10; 11) gebildet ist, einen Stapelanzahlzunahmebereich und einen Stapelanzahluniformbereich von dem Außenumfang der Elektrodenanordnung (80) zu dem Kern (C) davon aufweist,
der Stapelanzahlzunahmebereich als ein Bereich definiert ist, in dem die Anzahl der gestapelten Schichten des unbeschichteten Abschnitts (43) in Richtung des Kerns (C) der Elektrodenanordnung (80) zunimmt, und der Stapelanzahluniformbereich als ein Bereich von einer radialen Position, an der die Zunahme der Anzahl der gestapelten Schichten des unbeschichteten Abschnitts (43) aufhört, zu einer radialen Position, an der der unbeschichtete Abschnitt (43) zu biegen beginnt, definiert ist, und
eine radiale Länge des Stapelanzahluniformbereichs 30 % oder mehr beträgt, verglichen mit einer radialen Länge von einer Wicklungswindung, an der der unbeschichtete Abschnitt (43) zu biegen beginnt, zu einer Wicklungswindung, an der der unbeschichtete Abschnitt (43) zu biegen aufhört.

14. Elektrodenanordnung (80) nach einem der vorhergehenden Ansprüche, wobei der unbeschichtete Abschnitt (43) der ersten Elektrode (10; 11) eine Dicke von 10 $\mu$m bis 25 $\mu$m aufweist.

15. Elektrodenanordnung (80) nach einem der vorhergehenden Ansprüche, wobei, in dem Teilbereich des Biegeflächenbereichs (F), der durch den unbeschichteten Abschnitt (43) der ersten Elektrode (10; 11) gebildet ist, eine Gesamtstapeldicke der überlappenden Schichten des unbeschichteten Abschnitts (43) 100 $\mu$m bis 975 $\mu$m beträgt.

16. Elektrodenanordnung (80) nach Anspruch 15,

wobei der unbeschichtete Abschnitt (43) der ersten Elektrode (10; 11) in mehrere separate Laschen (61) unterteilt ist, die unabhängig biegbar sind, wobei die erste Elektrode (10; 11) einen höhenvariablen Bereich, in dem die Höhen der separaten Laschen (61) variabel sind, und einen höhenuniformen Bereich aufweist, in dem die Höhen der separaten Laschen (61) uniform sind, und in einem Bereich, der durch Biegen der separaten Laschen (61) gebildet ist, die in dem höhenuniformen Bereich entlang der radialen Richtung der Elektrodenanordnung (80) in dem Biegeflächenbereich (F) enthalten sind, ein Verhältnis einer Stapeldicke des unbeschichteten Abschnitts (43) des Biegeflächenbereichs (F) zu der Höhe der separaten Lasche (61) 1,0 % bis 16,3 % beträgt.

17. Elektrodenanordnung (80) nach einem der vorhergehenden Ansprüche,

    wobei die zweite Elektrode (10; 11) einen unbeschichteten Abschnitt (43) benachbart zu einem Rand der zweiten Elektrode (10; 11) aufweist, wobei sich der unbeschichtete Abschnitt (43) entlang der Wicklungsachsenrichtung der Elektrodenanordnung (80) über den Separator (12) hinaus erstreckt, und
    wobei ein Teil des unbeschichteten Abschnitts (43) in der radialen Richtung der Elektrodenanordnung (80) gebogen ist und dadurch einen Biegeflächenbereich (F) bildet, der überlappende Schichten des unbeschichteten Abschnitts (43) aufweist, wobei in einem Teilbereich des Biegeflächenbereichs (F) die Anzahl der gestapelten Schichten des unbeschichteten Abschnitts (43) in der Wicklungsachsenrichtung der Elektrodenanordnung (80) 10 oder mehr beträgt.

18. Elektrodenanordnung (80) nach Anspruch 17, wobei, wenn die Anzahl der Gesamtwicklungswindungen der zweiten Elektrode (10; 11) als $n_2$ definiert ist und wobei ein Wert, der durch Dividieren eines Wicklungswindungsindex k (eine natürliche Zahl von 1 bis $n_2$) an einer k-ten Wicklungswindungsposition durch die Anzahl der Gesamtwicklungswindungen $n_2$ erhalten wird, als eine relative radiale Position $R_{2,k}$ des Wicklungswindungsindex k definiert ist, wobei ein Längenverhältnis eines radialen Bereichs von $R_{2,k}$, der eine Bedingung erfüllt, dass die Anzahl der gestapelten Schichten des unbeschichteten Abschnitts (43) 10 oder mehr beträgt, 30 % oder mehr, insbesondere 30 % bis 85 % beträgt, bezogen auf einen relativen radialen Positionsbereich, in dem der unbeschichtete Abschnitt (43) gebogen ist.

19. Elektrodenanordnung (80) nach Anspruch 18,

    wobei, in der Wicklungsstruktur der zweiten Elektrode (10; 11), der unbeschichtete Abschnitt (43) eines Bereichs von einer relativen radialen Position $R_{2,1}$ einer 1-ten Wicklungswindung zu einer ersten relativen radialen Position $R_{2,k^*}$ einer voreingestellten k*-ten Wicklungswindung eine kleinere Höhe aufweist als der unbeschichtete Abschnitt (43) eines Bereichs von einer relativen radialen Position $R_{2,k^*+1}$ einer k*+1-ten Wicklungswindung zu einer relativen radialen Position 1, und/oder
    wobei, in der Wicklungsstruktur der zweiten Elektrode (10; 11), der unbeschichtete Abschnitt (43) eines Bereichs von einer relativen radialen Position $R_{2,1}$ einer 1-ten Wicklungswindung zu einer ersten relativen radialen Position $R_{2,k^*}$ einer voreingestellten k*-ten Wicklungswindung eine kleinere Höhe aufweist als der Biegeflächenbereich (F), der durch Überlappen der gebogenen unbeschichteten Abschnitte (43) gebildet wird, und/oder
    wobei, in der Wicklungsstruktur der zweiten Elektrode (10; 11), der unbeschichtete Abschnitt (43) eines Bereichs von einer relativen radialen Position $R_{2,1}$ einer 1-ten Wicklungswindung zu einer ersten relativen radialen Position $R_{2,k^*}$ einer voreingestellten k*-ten Wicklungswindung nicht in Richtung des Kerns (C) der Elektrodenanordnung (80) gebogen ist.

20. Elektrodenanordnung (80) nach Anspruch 18 oder 19,
    wobei, in der Wicklungsstruktur der zweiten Elektrode (10; 11), der unbeschichtete Abschnitt (43) eines Bereichs von einer relativen radialen Position $R_{2,1}$ einer 1-ten Wicklungswindung zu einer ersten relativen radialen Position $R_{2,k^*}$ einer voreingestellten k*-ten Wicklungswindung eine kleinere Höhe aufweist als der unbeschichtete Abschnitt (43) eines Bereichs von einer relativen radialen Position $R_{2,k^*+1}$ einer k*+1-ten Wicklungswindung zu einer relativen radialen Position 1, und nicht hin zu dem Kern (C) gebogen ist.

21. Elektrodenanordnung (80) nach Anspruch 20,
    wobei eine Länge der zweiten Elektrode (10; 11), die dem Bereich von der relativen radialen Position $R_{2,1}$ zu der ersten relativen radialen Position $R_{2,k^*}$ entspricht, 1 % bis 30 % beträgt, verglichen mit einer Länge der zweiten Elektrode (10; 11), die dem Bereich von der relativen radialen Position $R_{2,k^*+1}$ zu der relativen radialen Position 1 entspricht.

22. Elektrodenanordnung (80) nach einem der Ansprüche 19 bis 21,
    wobei, in der Wicklungsstruktur der zweiten Elektrode (10; 11), eine Biegelänge $fd_{2,k^*+1}$ des unbeschichteten Abschnitts (43) an einer relativen radialen Position $R_{2,k^*+1}$ einer k*+1-ten Wicklungswindung kürzer ist als eine radiale Länge von einer relativen radialen Position $R_{2,1}$ einer 1-ten Wicklungswindung zu einer relativen radialen Position $R_{1,k^*}$ einer k*-ten Wicklungswindung.

23. Elektrodenanordnung (80) nach einem der Ansprüche 19 bis 22,
    wobei, in der Wicklungsstruktur der zweiten Elektrode (10; 11), wenn ein Radius des Kerns (C) der Elektrodenanordnung (80) als $r_c$ definiert ist, ein Bereich von einer Mitte des Kerns (C) bis $0,90 r_c$ nicht durch einen gebogenen Abschnitt des unbeschichteten Abschnitts (43) der zweiten Elektrode (10; 11) blockiert ist, der sich in einem Bereich von einer relativen radialen Position $R_{2,k^*+1}$ einer k*+1-ten Wicklungswindung bis zu einer relativen radialen Position 1 befindet.

24. Elektrodenanordnung (80) nach Anspruch 23,

    wobei eine Biegelänge $fd_{2,k^*+1}$ des unbeschichteten Abschnitts (43) an einer relativen radialen Position $R_{2,k^*+1}$ einer k*+1-ten Wicklungswindung, der Radius $r_c$ des Kerns (C) und ein Abstand $d_{2,k^*+1}$ von einer Mitte der Elektrodenanordnung (80) zu der relativen radialen Position $R_{2,k^*+1}$ die folgende Formel erfüllen:

    $$fd_{2,k^*+1} + 0,90^* r_c \leq d_{2,k^*+1},$$

    wobei insbesondere der Spalt eine Länge von 0,2 mm bis 4 mm aufweist.

25. Elektrodenanordnung (80) nach einem der Ansprüche 19 bis 24,
    wobei, in der Wicklungsstruktur der zweiten Elektrode (10; 11), der unbeschichtete Abschnitt (43) eines Bereichs von einer relativen radialen Position $R_{2,k^*+1}$ einer k*+1-ten Wicklungswindung zu einer zweiten relativen radialen Position $R_{2,k@}$ einer voreingestellten $k_@$-ten Wicklungswindung in mehrere separate Laschen (61) unterteilt ist, deren Höhen kontinuierlich oder schrittweise entlang einer Richtung parallel zu der Wicklungsrichtung zunehmen.

26. Elektrodenanordnung (80) nach Anspruch 25,
    wobei eine radiale Länge des Bereichs von der relativen radialen Position $R_{2,k^*+1}$ zu der zweiten relativen radialen Position $R_{2,k@}$ 1 % bis 56 % beträgt, verglichen mit einem Radius der Wicklungsstruktur der zweiten Elektrode mit Ausnahme des Kerns (C) der Elektrodenanordnung (80).

27. Elektrodenanordnung (80) nach einem der Ansprüche 19 bis 26,
    wobei, in der Wicklungsstruktur der zweiten Elektrode (10; 11), der unbeschichtete Abschnitt (43) der zweiten Elektrode (10; 11) eines Bereichs von einer relativen radialen Position $R_{2,k@+1}$ einer k@+1-ten Wicklungswindung zu einer relativen radialen Position 1 in mehrere separate Laschen (61) unterteilt ist, und die mehreren separaten Laschen (61) im Wesentlichen die gleiche Höhe von der relativen radialen Position $R_{2,k@+1}$ zu der relativen radialen Position 1 aufweisen.

28. Elektrodenanordnung (80) nach einem der Ansprüche 19 bis 27,

    wobei der Biegeflächenbereich (F), der durch den unbeschichteten Abschnitt (43) der zweiten Elektrode (10; 11) gebildet ist, einen Stapelanzahlzunahmebereich und einen Stapelanzahluniformbereich von dem Außenumfang der Elektrodenanordnung (80) bis zu dem Kern (C) aufweist,
    der Stapelanzahlzunahmebereich als ein Bereich definiert ist, in dem die Anzahl der gestapelten Schichten des unbeschichteten Abschnitts (43) in Richtung des Kerns (C) der Elektrodenanordnung (80) zunimmt, und der Stapelanzahluniformbereich als ein Bereich von einer radialen Position, an der die Zunahme der Anzahl der gestapelten Schichten des unbeschichteten Abschnitts (43) aufhört, bis zu einer radialen Position, an der der unbeschichtete Abschnitt (43) zu biegen beginnt, definiert ist, und eine radiale Länge des Stapelanzahluniformbereichs 30 % oder mehr beträgt, verglichen mit einer radialen Länge von einer Wicklungswindung, an der der unbeschichtete Abschnitt (43) zu biegen beginnt, bis zu einer Wicklungswindung, an der der unbeschichtete Abschnitt (43) zu biegen aufhört.

29. Elektrodenanordnung (80) nach einem der Ansprüche 18 bis 28,

    wobei, in der Wicklungsstruktur der zweiten Elektrode (10; 11), der unbeschichtete Abschnitt (43), der in der radialen Richtung der Elektrodenanordnung (80) gebogen ist, in mehrere separate Laschen (61) unterteilt ist, die unabhängig biegbar sind, und mindestens eine von einer Höhe der mehreren separaten Laschen (61) in der Wicklungsachsenrichtung und einer Breite davon in der Wicklungsrichtung kontinuierlich oder schrittweise entlang einer Richtung parallel zu der Wicklungsrichtung einzeln oder in Gruppen zunimmt.

30. Elektrodenanordnung (80) nach einem der Ansprüche 18 bis 29,

    wobei die erste Elektrode (10; 11) und die zweite Elektrode (10; 11) eine Dicke von 80 μm bis 250 μm aufweisen, und

ein Intervall der unbeschichteten Abschnitte (43), die sich an Wicklungswindungen benachbart in der radialen Richtung der Elektrodenanordnung (80) befinden, 200 μm bis 500 μm beträgt.

31. Elektrodenanordnung (80) nach einem der Ansprüche 18 bis 29,
wobei der unbeschichtete Abschnitt (43) der zweiten Elektrode (10; 11) eine Dicke von 5 μm bis 20 μm aufweist.

32. Elektrodenanordnung (80) nach einem der Ansprüche 18 bis 30,
wobei, in dem Teilbereich des Biegeflächenbereichs (F), der durch den unbeschichteten Abschnitt (43) der zweiten Elektrode (10; 11) gebildet ist, eine Gesamtstapeldicke der überlappenden Schichten des unbeschichteten Abschnitts (43) 50 μm bis 780 μm beträgt.

33. Elektrodenanordnung (80) nach Anspruch 32,
wobei der unbeschichtete Abschnitt (43) der zweiten Elektrode (10; 11) in mehrere separate Laschen (61) unterteilt ist, die unabhängig biegbar sind, wobei die zweite Elektrode (10; 11) einen höhenvariablen Bereich, in dem die Höhen der separaten Laschen (61) variabel sind, und einen höhenuniformen Bereich aufweist, in dem die Höhen der separaten Laschen (61) uniform sind, und in einem Bereich, der durch Biegen der separaten Laschen (61) gebildet ist, die in dem höhenuniformen Bereich entlang der radialen Richtung der Elektrodenanordnung (80) in dem Biegeflächenbereich (F) enthalten sind, ein Verhältnis einer Stapeldicke des unbeschichteten Abschnitts (43) zu der Höhe der separaten Lasche (61) 0,5 % bis 13,5 % beträgt.

34. Elektrodenanordnung (80) nach einem der vorhergehenden Ansprüche,
wobei der unbeschichtete Abschnitt (43) der ersten Elektrode (10; 11) und/oder der zweiten Elektrode (10; 11) in mehrere separate Laschen (61) unterteilt ist, die unabhängig voneinander biegbar sind.

35. Elektrodenanordnung (80) nach Anspruch 34,

wobei jede der mehreren separaten Laschen (61) eine geometrische Form aufweist, die eine Biegelinie davon als Basis verwendet, und die geometrische Form durch Verbinden einer oder mehrerer gerader Linien, einer oder mehrerer Kurven oder einer Kombination davon gebildet ist.

36. Elektrodenanordnung (80) nach Anspruch 35,

wobei die geometrische Form eine Breite aufweist, die schrittweise oder kontinuierlich von der Basis zu der Oberseite abnimmt,
wobei ein unterer Innenwinkel der geometrischen Form zwischen der Basis und einer Seite, die die Basis schneidet, 60 Grad bis 85 Grad beträgt,
wobei insbesondere die unteren Innenwinkel der mehreren separaten Laschen (61) schrittweise oder kontinuierlich entlang einer Richtung parallel zu der Wicklungsrichtung der Elektrodenanordnung (80) zunehmen.

37. Elektrodenanordnung (80) nach Anspruch 35 oder 36,

wobei jede separate Lasche (61) der mehreren separaten Laschen (61) eine geometrische Form aufweist, die eine Biegelinie davon als Basis verwendet, und
wenn ein Radius einer Wicklungswindung, in der die separate Lasche (61) basierend auf einer Kernmitte der Elektrodenanordnung (80) angeordnet ist, r ist, eine Bogenlänge einer Wicklungswindung, die einem unteren Abschnitt der separaten Lasche (61) entspricht, $L_{arc}$ ist, und ein unterer Innenwinkel der separaten Lasche (61) unter der Annahme, dass Seiten eines Paars separater Laschen (61), die benachbart in der Wicklungswindung angeordnet sind, die den Radius von r aufweist, $\theta_{assumption}$ ist, ein tatsächlicher unterer Innenwinkel $\theta_{real}$ des Paars separater Laschen (61), die benachbart angeordnet sind, die folgende Formel erfüllt:

$$\theta_{real} > \theta_{assumption}$$

$$\theta_{assumption} = 90° - 360°*(L_{arc}/2\pi r)*0{,}5.$$

38. Elektrodenanordnung (80) nach Anspruch 37,

wobei ein Umfangswinkel, der der Bogenlänge $L_{arc}$ der Wicklungswindung entspricht, die dem unteren Abschnitt der separaten Lasche (61) basierend auf der Kernmitte der Elektrodenanordnung (80) entspricht, 45 Grad oder weniger beträgt, und/oder
wobei, wenn ein Überlappungsverhältnis der separaten Lasche (61), die benachbart in der Wicklungswindung angeordnet ist, die den Radius von r aufweist, basierend auf der Kernmitte der Elektrodenanordnung (80) unter Verwendung einer Formel $(\theta_{real}/\theta_{assumptoin}-1)$ definiert ist, das Überlappungsverhältnis der separaten Laschen (61) größer als 0 und gleich oder kleiner als 0,05 ist.

**39.** Elektrodenanordnung (80) nach einem der Ansprüche 35 bis 38,
wobei, wenn ein virtueller Kreis, der durch ein Paar separater Laschen (61) verläuft, die in der Wicklungswindung benachbart angeordnet sind, welche den Radius von r aufweist, bezüglich der Kernmitte der Elektrodenanordnung (80) gebildet wird, ein Paar Bögen ($e_1$-$e_2$; $e_3$-$e_4$), die durch jede des Paars benachbarter separater Laschen (61) verlaufen, einander überlappen, wobei insbesondere, wenn ein Verhältnis einer Länge des überlappenden Bogens zu einer Länge des Bogens, der durch jede separate Lasche (61) verläuft, als ein Überlappungsverhältnis definiert ist, das Überlappungsverhältnis der separaten Lasche (61) größer als 0 und gleich oder kleiner als 0,05 ist.

**40.** Elektrodenanordnung (80) nach einem der Ansprüche 34 bis 39,
wobei jede der mehreren separaten Laschen (61) mindestens eine Bedingung unter einer Breitenbedingung von 1 mm bis 11 mm in der Wicklungsrichtung; einer Höhenbedingung von 2 mm bis 10 mm in der Wicklungsachsenrichtung; und einer Trennungsteilungsbedingung von 0,05 mm bis 1 mm in der Wicklungsrichtung erfüllt.

**41.** Elektrodenanordnung (80) nach einem der Ansprüche 34 bis 40,

wobei eine Schnittnut zwischen den mehreren separaten Laschen (61) angeordnet ist, und ein vorbestimmter Spalt zwischen einem Boden der Schnittnut und der Aktivmaterialschicht der ersten Elektrode (10; 11) oder der zweiten Elektrode (10; 11) vorgesehen ist.

**42.** Elektrodenanordnung (80) nach einem der Ansprüche 34 bis 41,
wobei die mehreren separaten Laschen (61) mehrere Laschengruppen entlang der Wicklungsrichtung der Elektrodenanordnung (80) bilden und Segmente, die zu derselben Segmentgruppe gehören, hinsichtlich mindestens einer von einer Breite in der Wicklungsrichtung, einer Höhe in der Wicklungsachsenrichtung und einer Trennungsteilung in der Wicklungsrichtung im Wesentlichen gleich sind.

**43.** Elektrodenanordnung (80) nach Anspruch 42,

wobei die Segmente, die zu derselben Segmentgruppe gehören, derart konfiguriert sind, dass mindestens eine von der Breite in der Wicklungsrichtung, der Höhe in der Wicklungsachsenrichtung und der Trennungsteilung in der Wicklungsrichtung kontinuierlich oder schrittweise entlang einer Richtung parallel zu der Wicklungsrichtung der Elektrodenanordnung (80) zunimmt, und/oder
wobei mindestens ein Teil der mehreren Laschengruppen an derselben Wicklungswindung der Elektrodenanordnung (80) angeordnet sind.

**44.** Elektrodenanordnung (80), in der eine erste Elektrode (10; 11), eine zweite Elektrode (10; 11) und ein dazwischen angeordneter Separator (12) bezüglich einer Achse gewickelt sind und dadurch einen Kern (C) und einen Außenumfang definieren,

wobei die erste Elektrode (10; 11) einen ersten unbeschichteten Abschnitt (43) benachbart zu einem Rand der ersten Elektrode (10; 11) aufweist, wobei sich der erste unbeschichtete Abschnitt (43) entlang einer Wicklungsachsenrichtung der Elektrodenanordnung (80) über den Separator (12) hinaus erstreckt, und
wobei ein Teil des ersten unbeschichteten Abschnitts (43) in einer radialen Richtung der Elektrodenanordnung (80) gebogen ist und dadurch einen ersten Biegeflächenbereich (F) bildet, und in einem Teilbereich des ersten Biegeflächenbereichs (F) eine Stapeldicke der überlappenden Schichten des ersten unbeschichteten Abschnitts (43) 100 $\mu$m bis 975 $\mu$m beträgt,
wobei sich der Teilbereich des Biegeflächenbereichs (F) kreisförmig um eine Wicklungsachse erstreckt oder ein ringförmiger Bereich ist.

**45.** Elektrodenanordnung (80) nach Anspruch 44,
wobei der erste unbeschichtete Abschnitt (43) der ersten Elektrode (10; 11) in mehrere separate Laschen (61) unterteilt ist, die unabhängig biegbar sind, wobei die erste Elektrode (10; 11) einen höhenvariablen Bereich, in dem die Höhen der separaten Laschen (61) variabel sind, und einen höhenuniformen Bereich aufweist, in dem die Höhen der separaten Laschen (61) uniform sind, und in einem Bereich, der durch Biegen der separaten Laschen (61) gebildet ist, die in dem höhenuniformen Bereich entlang der radialen Richtung der Elektrodenanordnung (80) in dem Biegeflächenbereich (F) enthalten sind, ein Verhältnis einer Stapeldicke des unbeschichteten Abschnitts (43) zu der Höhe der separaten Lasche (61) 1,0 % bis 16,3 % beträgt.

**46.** Elektrodenanordnung (80) nach Anspruch 44 oder 45,

wobei die zweite Elektrode (10; 11) einen zweiten unbeschichteten Abschnitt (43) benachbart zu einem Rand der zweiten Elektrode (10; 11) aufweist, wobei sich der zweite unbeschichtete Abschnitt (43) entlang der Wicklungsachsenrichtung der Elektrodenanordnung (80) über den Separator (12) hinaus erstreckt,
wobei ein Teil des zweiten unbeschichteten Abschnitts (43) in der radialen Richtung der Elektrodenanordnung (80) gebogen ist und dadurch einen zweiten Biegeflächenbereich (F) bildet, und

in einem Teilbereich des zweiten Biegeflächenbereichs (F) eine Stapeldicke des zweiten unbeschichteten Abschnitts (43) 50 μm bis 780 μm beträgt.

**47.** Elektrodenanordnung (80) nach Anspruch 46, wobei der zweite unbeschichtete Abschnitt (43) der zweiten Elektrode (10; 11) in mehrere separate Laschen (61) unterteilt ist, die unabhängig biegbar sind, wobei die zweite Elektrode (10; 11) einen höhenvariablen Bereich, in dem die Höhen der separaten Laschen (61) variabel sind, und einen höhenuniformen Bereich aufweist, in dem die Höhen der separaten Laschen (61) uniform sind, und in einem Bereich, der durch Biegen der separaten Laschen (61) gebildet ist, die in dem höhenuniformen Bereich entlang der radialen Richtung der Elektrodenanordnung (80) in dem Biegeflächenbereich (F) enthalten sind, ein Verhältnis einer Stapeldicke des unbeschichteten Abschnitts (43) zu der Höhe der separaten Lasche (61) 0,5 % bis 13,0 % beträgt.

**48.** Batterie, umfassend:

eine Elektrodenanordnung (80), in der eine erste Elektrode (10; 11), eine zweite Elektrode (10; 11) und ein dazwischen angeordneter Separator (12) bezüglich einer Achse gewickelt sind und dadurch einen Kern (C) und einen Außenumfang definieren, wobei mindestens eine von der ersten Elektrode (10; 11) und der zweiten Elektrode (10; 11) einen unbeschichteten Abschnitt (43) benachbart zu einem Rand der jeweiligen Elektrode (10; 11) aufweist, wobei sich der unbeschichtete Abschnitt (43) über den Separator (12) hinaus entlang einer Wicklungsachsenrichtung der Elektrodenanordnung (80) erstreckt, und wobei mindestens ein Teil des unbeschichteten Abschnitts (43) in einer radialen Richtung der Elektrodenanordnung (80) gebogen ist, um einen Biegeflächenbereich (F) zu bilden, wobei in einem Teilbereich des Biegeflächenbereichs (F) die Anzahl der gestapelten Schichten des unbeschichteten Abschnitts (43) 10 oder mehr beträgt;

ein Batteriegehäuse (142), das konfiguriert ist, um die Elektrodenanordnung (80) aufzunehmen, und elektrisch mit einer von der ersten Elektrode (10; 11) und der zweiten Elektrode (10; 11) verbunden ist und dadurch eine erste Polarität aufweist;

einen Verschlusskörper (143), der konfiguriert ist, um ein offenes Ende des Batteriegehäuses (142) zu verschließen;

einen Anschluss (172), der elektrisch mit der anderen von der ersten Elektrode (10; 11) und der zweiten Elektrode (10; 11) verbunden ist und dadurch eine zweite Polarität aufweist und konfiguriert ist, um eine nach außen freiliegende Fläche aufzuweisen; und

einen Stromabnehmer (144; 145), der an den Biegeflächenbereich (F) geschweißt und elektrisch mit einem von dem Batteriegehäuse (142) und dem Anschluss (172) verbunden ist, wobei der Schweißbereich des Stromabnehmers (144; 145) den Biegeflächenbereich (F) überlappt, in dem die Anzahl der gestapelten Schichten des unbeschichteten Abschnitts (43) 10 oder mehr beträgt, wobei sich der Teilbereich des Biegeflächenbereichs (F) kreisförmig um eine Wicklungsachse erstreckt oder ein ringförmiger Bereich ist.

**49.** Batterie nach Anspruch 48,

wobei die erste Elektrode (10; 11) einen ersten unbeschichteten Abschnitt (43) benachbart zu einem Rand der ersten Elektrode (10; 11) aufweist, wobei sich der zweite unbeschichtete Abschnitt (43) entlang der Wicklungsachsenrichtung der Elektrodenanordnung (80) über den Separator (12) hinaus erstreckt, und wobei die Anzahl der Gesamtwicklungswindungen der ersten Elektrode (10; 11) als $n_1$ definiert ist und wobei ein Wert, der durch Dividieren eines Wicklungswindungsindex k (eine natürliche Zahl von 1 bis $n_1$) an einer k-ten Wicklungswindungsposition durch die Anzahl der Gesamtwicklungswindungen $n_1$ erhalten wird, als eine relative radiale Position $R_{1,k}$ des Wicklungswindungsindex k definiert ist, wobei ein Längenverhältnis eines radialen Bereichs von $R_{1,k}$, der eine Bedingung erfüllt, dass die Anzahl der gestapelten Schichten des ersten unbeschichteten Abschnitts (43) 10 oder mehr beträgt, 30 % oder mehr beträgt, bezogen auf einen relativen radialen Positionsbereich, in dem der erste unbeschichtete Abschnitt (43) gebogen ist.

**50.** Batterie nach Anspruch 48 oder 49,

wobei die zweite Elektrode (10; 11) einen zweiten unbeschichteten Abschnitt (43) benachbart zu einem Rand der zweiten Elektrode (10; 11) aufweist, wobei sich der zweite unbeschichtete Abschnitt (43) entlang der Wicklungsachsenrichtung der Elektrodenanordnung (80) über den Separator (12) hinaus erstreckt, und wobei die Anzahl der Gesamtwicklungswindungen der zweiten Elektrode (10; 11) als $n_2$ definiert ist und wobei ein Wert, der durch Dividieren eines Wicklungswindungsindex k (eine natürliche Zahl von 1 bis $n_2$) an einer k-ten Wicklungswindungsposition durch die Anzahl der Gesamtwicklungswindungen $n_2$ erhalten wird, als eine relative radiale Position $R_{2,k}$ des Wicklungswindungsindex k definiert ist, wobei ein Längenverhältnis eines radialen Bereichs von $R_{2,k}$, der eine Bedingung erfüllt, dass die Anzahl der gestapelten Schichten des zweiten unbeschichteten Abschnitts (43) 10 oder mehr beträgt, 30 % oder mehr beträgt, bezogen auf einen relativen radialen Positionsbereich, in dem der zweite unbeschichtete Abschnitt (43) gebogen ist.

51. Batterie nach einem der Ansprüche 48 bis 50,

wobei der Schweißbereich des Stromabnehmers (144; 145) den Biegeflächenbereich (F) überlappt, in dem die Anzahl der gestapelten Schichten des unbeschichteten Abschnitts (43) um 50 % oder mehr 10 oder mehr beträgt, wobei die Schweißfestigkeit des Stromabnehmers (144; 145) in einem Bereich von 0,196133 MPa (2 kgf/cm$^2$) oder mehr liegt.

52. Batterie, umfassend:

eine Elektrodenanordnung (80), in der eine erste Elektrode (10; 11), eine zweite Elektrode (10; 11) und ein dazwischen angeordneter Separator (12) bezüglich einer Achse gewickelt sind und dadurch einen Kern (C) und einen Außenumfang definieren, wobei die erste Elektrode (10; 11) einen ersten unbeschichteten Abschnitt (43) benachbart zu einem Rand der jeweiligen Elektrode (10; 11) aufweist, wobei sich der erste unbeschichtete Abschnitt (43) über den Separator (12) hinaus entlang einer Wicklungsachsenrichtung der Elektrodenanordnung (80) erstreckt, und wobei ein Teil des ersten unbeschichteten Abschnitts (43) in einer radialen Richtung der Elektrodenanordnung (80) gebogen ist, um einen ersten Biegeflächenbereich (F) zu bilden, wobei in einem Teilbereich des ersten Biegeflächenbereichs (F) eine Stapeldicke der überlappenden Schichten des ersten unbeschichteten Abschnitts (43) 100 μm bis 975 μm beträgt, ein Batteriegehäuse (142), das konfiguriert ist, um die Elektrodenanordnung (80) aufzunehmen, und elektrisch mit einer von der ersten Elektrode (10; 11) und der zweiten Elektrode (10; 11) verbunden ist und dadurch eine erste Polarität aufweist; einen Verschlusskörper (143), der konfiguriert ist, um ein offenes Ende des Batteriegehäuses (142) zu verschließen; einen Anschluss (172), der elektrisch mit der anderen von der ersten Elektrode (10; 11) und der zweiten Elektrode (10; 11) verbunden ist und dadurch eine zweite Polarität aufweist und konfiguriert ist, um eine nach außen freiliegende Fläche aufzuweisen; und einen ersten Stromabnehmer (144), der an den ersten Biegeflächenbereich (F) geschweißt und elektrisch mit einem von dem Batteriegehäuse (142) und dem Anschluss (172) verbunden ist, wobei der Schweißbereich des ersten Stromabnehmers (144) den Teilbereich des ersten Biegeflächenbereichs (F) überlappt, in dem die Stapeldicke des ersten unbeschichteten Abschnitts (43) 100 μm bis 975 μm beträgt, wobei sich der Teilbereich des Biegeflächenbereichs (F) kreisförmig um eine Wicklungsachse erstreckt oder ein ringförmiger Bereich ist.

53. Batterie nach Anspruch 52,

wobei der erste unbeschichtete Abschnitt (43) der ersten Elektrode (10; 11) in mehrere separate Laschen (61) unterteilt ist, die unabhängig biegbar sind, wobei die erste Elektrode (10; 11) einen höhenvariablen Bereich, in dem die Höhen der separaten Laschen (61) variabel sind, und einen höhenuniformen Bereich aufweist, in dem die Höhen der separaten Laschen (61) uniform sind, und in einem Bereich, der durch Biegen der Segmente gebildet ist, die in dem höhenuniformen Bereich entlang der radialen Richtung der Elektrodenanordnung (80) in dem ersten Biegeflächenbereich (F) enthalten sind, ein Verhältnis einer Stapeldicke des unbeschichteten Abschnitts (43) zu der Höhe der separaten Lasche (61) 1,3 % bis 16,0 % beträgt. wobei die Schweißfestigkeit des ersten Stromabnehmers (144) in einem Bereich von 0,196133 MPa (2 kgf/cm$^2$) oder mehr liegt.

54. Batterie nach Anspruch 52 oder 53,

wobei die zweite Elektrode (10; 11) einen zweiten unbeschichteten Abschnitt (43) benachbart zu einem Rand der zweiten Elektrode (10; 11) aufweist, wobei sich der zweite unbeschichtete Abschnitt (43) entlang der Wicklungsachsenrichtung der Elektrodenanordnung (80) über den Separator (12) hinaus erstreckt, wobei ein Teil des zweiten unbeschichteten Abschnitts (43) in der radialen Richtung der Elektrodenanordnung (80) gebogen ist und dadurch einen zweiten Biegeflächenbereich (F) bildet, und in einem Teilbereich des zweiten Biegeflächenbereichs (F) eine Stapeldicke des zweiten unbeschichteten Abschnitts (43) 50 μm bis 780 μm beträgt, die Batterie einen zweiten Stromabnehmer (145) umfasst, der an den zweiten Biegeflächenbereich (F) geschweißt und elektrisch mit einem von dem Batteriegehäuse (142) und dem Anschluss (172) verbunden ist, und

der Schweißbereich des zweiten Stromabnehmers (145) den Teilbereich des zweiten Biegeflächenbereichs (F) überlappt, in dem die Stapeldicke des zweiten unbeschichteten Abschnitts (43) 50 µm bis 780 µm beträgt.

**55.** Batterie nach Anspruch 54,

wobei der zweite unbeschichtete Abschnitt (43) der zweiten Elektrode (10; 11) in mehrere separate Laschen (61) unterteilt ist, die unabhängig biegbar sind, wobei die zweite Elektrode (10; 11) einen höhenvariablen Bereich, in dem die Höhen der separaten Laschen (61) variabel sind, und einen höhenuniformen Bereich aufweist, in dem die Höhen der separaten Laschen (61) uniform sind, und in einem Bereich, der durch Biegen der Segmente gebildet ist, die in dem höhenuniformen Bereich entlang der radialen Richtung der Elektrodenanordnung (80) in dem zweiten Biegeflächenbereich (F) enthalten sind, ein Verhältnis einer Stapeldicke des zweiten unbeschichteten Abschnitts (43) zu der Höhe der separaten Lasche (61) 0,5 % bis 13,0 % beträgt.

wobei die Schweißfestigkeit des zweiten Stromabnehmers (145) in einem Bereich von 0,196133 MPa (2 kgf/cm$^2$) oder mehr liegt, und/oder

wobei der Schweißbereich des zweiten Stromabnehmers (145) den Teilbereich des zweiten Biegeflächenbereichs (F) überlappt, in dem die Stapeldicke des zweiten unbeschichteten Abschnitts (43) 50 µm bis 780 µm um 50 % oder mehr beträgt.

**56.** Batterie nach Anspruch 55,
wobei der Schweißbereich des ersten Stromabnehmers (144) den Teilbereich des ersten Biegeflächenbereichs (F) überlappt, in dem die Stapeldicke des ersten unbeschichteten Abschnitts (43) 100 µm bis 975 µm um 50 % oder mehr beträgt.

**57.** Batteriepack (300), umfassend die Batterie nach einem der Ansprüche 48 bis 56.

**58.** Fahrzeug (V), umfassend den Batteriepack (300) nach Anspruch 57.

**Revendications**

**1.** Ensemble d'électrodes (80) dans lequel une première électrode (10 ; 11), une deuxième électrode (10 ; 11), et un séparateur (12) interposé entre celles-ci, sont enroulés sur un axe pour définir un noyau (C) et une circonférence extérieure,

dans lequel la première électrode (10 ; 11) inclut une partie non revêtue (43) adjacente à un bord de la première électrode (10 ; 11), dans lequel la partie non revêtue (43) s'étend au-delà du séparateur (12) le long d'une direction d'axe d'enroulement de l'ensemble d'électrodes (80), et une partie de la partie non revêtue (43) est pliée dans une direction radiale de l'ensemble d'électrodes (80) pour former une région de surface de pliage (F) qui inclut des couches chevauchantes de la partie non revêtue (43), dans lequel dans une région partielle de la région de surface de pliage (F), le nombre de couches empilées de la partie non revêtue (43) est égal ou supérieur à 10 dans la direction d'axe d'enroulement de l'ensemble d'électrodes (80), dans lequel la région partielle de la région de surface de pliage (F) s'étend circulairement autour d'un axe d'enroulement ou est une région annulaire.

**2.** Ensemble d'électrodes selon la revendication 1, dans lequel quand le nombre total de spires de la première électrode (10, 11) est défini comme étant $n_1$ et dans lequel une valeur obtenue en divisant un indice de spire k (un nombre naturel de 1 à $n_1$) à un k$^{ème}$ emplacement de spire par le nombre total de spires $n_1$ est définie comme étant une position radiale relative $R_{1,k}$ de l'indice de spire k, dans lequel un rapport de longueur d'une région radiale de $R_{1,k}$ satisfaisant à une condition où le nombre de couches empilées de la partie non revêtue (43) est égal ou supérieur à 10, est égal ou supérieur à 30 %, en particulier entre 30 % et 85 %, sur la base d'une région de position radiale relative dans laquelle la partie non revêtue (43) est pliée.

**3.** Ensemble d'électrodes (80) selon la revendication 2,

dans lequel dans la structure d'enroulement de la première électrode (10 ; 11), la partie non revêtue (43) d'une région depuis une position radiale relative $R_{1,1}$ d'une 1$^{ère}$ spire à une première position radiale relative $R_{1,k^*}$ d'une k$^{*ème}$ spire préréglée a une hauteur inférieure à la partie non revêtue (43) d'une région depuis une position radiale relative $R_{1,k^*+1}$ d'une k*+1$^{ère}$ spire à une position radiale relative 1, et/ou dans lequel dans la structure d'enroulement de la première électrode (10 ; 11), la partie non revêtue (43) d'une région depuis une position radiale relative $R_{1,1}$ d'une 1$^{ère}$ spire à une première position radiale relative $R_{1,k^*}$ d'une k$^{*ème}$ spire préréglée a une hauteur inférieure à la région de surface de pliage (F) formée en faisant chevaucher les parties non revêtues pliées (43), et/ou

dans lequel dans la structure d'enroulement de la première électrode (10 ; 11), la partie non revêtue (43) d'une région depuis une position radiale relative $R_{1,1}$ d'une 1ere spire à une première position radiale relative $R_{1,k^*}$ d'une k*ème spire n'est pas pliée vers le noyau (C) de l'ensemble d'électrodes (80).

4. Ensemble d'électrodes (80) selon la revendication 2 ou 3,

dans lequel dans la structure d'enroulement de la première électrode (10 ; 11), la partie non revêtue (43) d'une région depuis une position radiale relative $R_{1,1}$ d'une 1ere spire à une première position radiale relative $R_{1,k^*}$ d'une k*ème spire a une hauteur inférieure à la partie non revêtue (43) d'une région depuis une position radiale relative $R_{1,k^*+1}$ d'une k*+1ère spire à une position radiale relative 1, et n'est pas pliée vers le noyau (C).

5. Ensemble d'électrodes (80) selon la revendication 4, dans lequel une longueur de la première électrode (10 ; 11) correspondant à la région depuis la position radiale relative $R_{1,1}$ à la première position radiale relative $R_{1,k^*}$ est comprise entre 1 % et 30 %, comparé à une longueur de la première électrode (10 ; 11) correspondant à la région depuis la position radiale relative $R_{1,k^*+1}$ à la position radiale relative 1.

6. Ensemble d'électrodes (80) selon l'une quelconque des revendications 2 à 4,

dans lequel dans la structure d'enroulement de la première électrode (10 ; 11), une longueur de pliage $fd_{1,k^*+1}$ de la partie non revêtue (43) à une position radiale relative $R_{1,k^*+1}$ d'une k*+1ère spire est plus courte qu'une longueur radiale depuis une position radiale relative $R_{1,1}$ d'une 1ère spire à une position radiale relative $R_{1,k^*}$ d'une k*ème spire.

7. Ensemble d'électrodes (80) selon l'une quelconque des revendications 2 à 6,

dans lequel dans la structure d'enroulement de la première électrode (10 ; 11), quand un rayon du noyau (C) de l'ensemble d'électrodes (80) est défini comme étant $r_c$, une région depuis un centre du noyau (C) à $0{,}90r_c$ n'est pas bloquée par une partie pliée de la partie non revêtue (43) située dans une région d'une position radiale relative $R_{1,k^*+1}$ d'une k*+1ère spire à une position radiale relative 1, dans lequel le noyau (C) est une cavité au centre d'enroulement de l'ensemble d'électrodes (80) et correspondait à la 1ère spire de la structure d'enroulement comprenant une pluralité de spires.

8. Ensemble d'électrodes (80) selon la revendication 7, dans lequel une longueur de pliage $fd_{1,k^*+1}$ de la partie non revêtue (43) à une position radiale relative $R_{1,k^*+1}$ d'une k*+1ère spire, le rayon $r_c$ du noyau (C) et une distance $d_{1,k^*+1}$ depuis un centre de l'ensemble d'électrodes (80) à la position radiale relative $R_{1,k^*+1}$ satisfont à la formule suivante :

$$fd_{1,k^*+1} + 0.90^*r_c \leq d_{1,k^*+1}.$$

9. Ensemble d'électrodes (80) selon l'une quelconque des revendications 2 à 8,

dans lequel dans la structure d'enroulement de la première électrode (10 ; 11), la partie non revêtue (43) d'une région depuis une position radiale relative $R_{1,k^*+1}$ d'une k*+1ère spire à une deuxième position radiale relative $R_{1,k@}$ d'une k@ème spire préréglée est divisée en une pluralité de languettes distinctes (61), dont les hauteurs augmentent en continu ou par étapes le long d'une direction parallèle à la direction d'enroulement.

10. Ensemble d'électrodes (80) selon la revendication 9, dans lequel une longueur radiale de la région depuis la position radiale relative $R_{1,k^*+1}$ à la deuxième position radiale relative $R_{1,k@}$ est comprise entre 1 % et 56 %, comparé à un rayon de la structure d'enroulement de la première électrode (10 ; 11) sauf le noyau (C) de l'ensemble d'électrodes (80).

11. Ensemble d'électrodes (80) selon l'une quelconque des revendications 2 à 10,

dans lequel dans la structure d'enroulement de la première électrode (10 ; 11), la partie non revêtue (43) d'une région depuis une position radiale relative $R_{1,k@+1}$ d'une k@+1ère spire préréglée à une position radiale relative 1 est divisée en une pluralité de languettes distinctes (61), et la pluralité de languettes distinctes (61) ont sensiblement la même hauteur depuis la position radiale relative $R_{1,k@+1}$ à la position radiale relative 1.

12. Ensemble d'électrodes (80) selon l'une quelconque des revendications précédentes,

dans lequel dans la structure d'enroulement de la première électrode (10 ; 11), la partie non revêtue (43) pliée dans la direction radiale de l'ensemble d'électrodes (80) est divisée en une pluralité de languettes distinctes (61) qui sont pliables individuellement, et au moins soit une hauteur de la pluralité de languettes distinctes (61) dans la direction d'axe d'enroulement, soit une largeur de celles-ci dans la direction d'enroulement, augmente en continu ou par étapes le long d'une direction parallèle à la direction d'enroulement individuellement ou en groupes.

**13.** Ensemble d'électrodes (80) selon l'une quelconque des revendications précédentes,

dans lequel la région de surface de pliage (F) formée par la partie non revêtue (43) de la première électrode (10 ; 11) inclut une région ayant un nombre croissant de piles et une région ayant un nombre uniforme de piles depuis la circonférence extérieure de l'ensemble d'électrodes (80) au noyau (C) de celui-ci, la région ayant un nombre croissant de piles est définie comme étant une région dans laquelle le nombre de couches empilées de la partie non revêtue (43) augmente vers le noyau (C) de l'ensemble d'électrodes (80), et la région ayant un nombre uniforme de piles est définie comme étant une région depuis une position radiale où l'augmentation du nombre de couches empilées de la partie non revêtue (43) cesse à une position radiale où la partie non revêtue (43) commence à se plier, et une longueur radiale de la région ayant un nombre uniforme de piles est égale ou supérieure à 30 %, comparé à une longueur radiale d'une spire où la partie non revêtue (43) commence à se plier à une spire où la partie non revêtue (43) finit de se plier.

**14.** Ensemble d'électrodes (80) selon l'une quelconque des revendications précédentes, dans lequel la partie non revêtue (43) de la première électrode (10 ; 11) a une épaisseur comprise entre 10 μm et 25 μm.

**15.** Ensemble d'électrodes (80) selon l'une quelconque des revendications précédentes, dans lequel dans la région partielle de la région de surface de pliage (F) formée par la partie non revêtue (43) de la première électrode (10 ; 11), une épaisseur de pile totale de couches chevauchantes de la partie non revêtue (43) est comprise entre 100 μm et 975 μm.

**16.** Ensemble d'électrodes (80) selon la revendication 15, dans lequel la partie non revêtue (43) de la première électrode (10 ; 11) est divisée en une pluralité de languettes distinctes (61) qui sont pliables individuellement, la première électrode (10 ; 11) inclut une région de hauteurs variables dans laquelle les hauteurs de languettes distinctes (61) sont variables et une région de hauteurs uniformes dans laquelle les hauteurs de languettes distinctes (61) sont uniformes, et dans une région formée en pliant les languettes distinctes (61) inclues dans la région de hauteurs uniformes le long de la direction radiale de l'ensemble d'électrodes (80) dans la région de surface de pliage (F), un rapport d'une épaisseur de pile de la partie non revêtue (43) de la région de surface de pliage (F) à la hauteur de la languette distincte (61) est compris entre 1,0 % et 16,3 %.

**17.** Ensemble d'électrodes (80) selon l'une quelconque des revendications précédentes,

dans lequel la deuxième électrode (10 ; 11) inclut une partie non revêtue (43) adjacente à un bord de la deuxième électrode (10 ; 11), dans lequel la partie non revêtue (43) s'étend au-delà du séparateur (12) le long de la direction d'axe d'enroulement de l'ensemble d'électrodes (80), et une partie de la partie non revêtue (43) est pliée dans la direction radiale de l'ensemble d'électrodes (80) pour former une région de surface de pliage (F) qui inclut des couches chevauchantes de la partie non revêtue (43), dans lequel dans une région partielle de la région de surface de pliage (F), le nombre de couches empilées de la partie non revêtue (43) est égal ou supérieur à 10 dans la direction d'axe d'enroulement de l'ensemble d'électrodes (80).

**18.** Ensemble d'électrodes (80) selon la revendication 17, dans lequel quand le nombre total de spires de la deuxième électrode (10 ; 11) est défini comme étant $n_2$ et dans lequel une valeur obtenue en divisant un indice de spire k (un nombre naturel de 1 à $n_2$) à un $k^{ème}$ emplacement de spire par le nombre total de spires $n_2$ est définie comme étant une position radiale relative $R_{2,k}$ de l'indice de spire k, dans lequel un rapport de longueur d'une région radiale de $R_{2,k}$ satisfaisant à une condition où le nombre de couches empilées de la partie non revêtue (43) est égal ou supérieur à 10, est égal ou supérieur à 30 %, en particulier entre 30 % et 85 %, sur la base d'une région de position radiale relative dans laquelle la partie non revêtue (43) est pliée.

**19.** Ensemble d'électrodes (80) selon la revendication 18,

dans lequel dans la structure d'enroulement de la deuxième électrode (10 ; 11), la partie non revêtue (43) d'une région depuis une position radiale relative $R_{2,1}$ d'une 1 ère spire à une première position radiale relative $R_{2,k*}$ d'une $k*^{ème}$ spire préréglée a une hauteur inférieure à la partie non revêtue (43) d'une région depuis une position radiale relative $R_{2,k*+1}$ d'une $k*+1^{ère}$ spire à une position radiale relative 1, et/ou dans lequel dans la structure d'enroulement de la deuxième électrode (10 ; 11), la partie non revêtue (43) d'une région depuis une position radiale relative $R_{2,1}$ d'une $1^{ere}$ spire à une première position radiale relative $R_{2,k^*}$ d'une $k^{*ème}$ spire préréglée a une hauteur inférieure à la région de surface de pliage (F) formée en faisant chevaucher les parties non revêtues pliées (43), et/ou

dans lequel dans la structure d'enroulement de la deuxième électrode (10 ; 11), la partie non revêtue (43) d'une région depuis une position radiale relative $R_{2,1}$ d'une 1ere spire à une première position radiale relative $R_{2,k^*}$ d'une $k^{*ème}$ spire préréglée n'est pas pliée vers le noyau (C) de l'ensemble d'électrodes (80).

20. Ensemble d'électrodes (80) selon la revendication 18 ou 19,
dans lequel dans la structure d'enroulement de la deuxième électrode (10 ; 11), la partie non revêtue (43) d'une région depuis une position radiale relative $R_{2,1}$ d'une 1ere spire à une première position radiale relative $R_{2,k^*}$ d'une $k^{*ème}$ spire préréglée a une hauteur inférieure à la partie non revêtue (43) d'une région depuis une position radiale relative $R_{2,k^*+1}$ d'une $k^*+1^{ère}$ spire à une position radiale relative 1, et n'est pas pliée vers le noyau (C).

21. Ensemble d'électrodes (80) selon la revendication 20,
dans lequel une longueur de la deuxième électrode (10 ; 11) correspondant à la région depuis la position radiale relative $R_{2,1}$ à la première position radiale relative $R_{2,k^*}$ est comprise entre 1 % et 30 %, comparé à une longueur de la deuxième électrode (10 ; 11) correspondant à la région depuis la position radiale relative $R_{2,k^*+1}$ à la position radiale relative 1.

22. Ensemble d'électrodes (80) selon l'une quelconque des revendications 19 à 21,
dans lequel dans la structure d'enroulement de la deuxième électrode (10 ; 11), une longueur de pliage $fd_{2,k^*+1}$ de la partie non revêtue (43) à une position radiale relative $R_{2,k^*+1}$ d'une $k^*+1^{ère}$ spire est plus courte qu'une longueur radiale depuis une position radiale relative $R_{2,1}$ d'une 1ère spire à une position radiale relative $R_{1,k^*}$ d'une $k^{*ème}$ spire.

23. Ensemble d'électrodes (80) selon l'une quelconque des revendications 19 à 22,
dans lequel dans la structure d'enroulement de la deuxième électrode (10 ; 11), quand un rayon du noyau (C) de l'ensemble d'électrodes (80) est défini comme étant $r_c$, une région depuis un centre du noyau (C) à $0,90 r_c$ n'est pas bloquée par une partie pliée de la partie non revêtue (43) de la deuxième électrode (10 ; 11) située dans une région depuis une position radiale relative $R_{2,k^*+1}$ d'une $k^*+1^{ère}$ spire à une position radiale relative 1.

24. Ensemble d'électrodes (80) selon la revendication 23,
dans lequel une longueur de pliage $fd_{2,k^*+1}$ de la partie non revêtue (43) à une position radiale relative $R_{2,k^*+1}$ d'une $k^*+1^{ère}$ spire, le rayon $r_c$ du noyau (C) et une distance $d_{2,k^*+1}$ depuis un centre de l'ensemble d'électrodes (80) à la position radiale relative $R_{2,k^*+1}$ satisfont à la formule suivante :

$$fd_{2,k^*+1} + 0.90^*r_c \leq d_{2,k^*+1},$$

dans lequel, en particulier, l'espace a une longueur comprise entre 0,2 mm et 4 mm.

25. Ensemble d'électrodes (80) selon l'une quelconque des revendications 19 à 24,
dans lequel dans la structure d'enroulement de la deuxième électrode (10 ; 11), la partie non revêtue (43) d'une région depuis une position radiale relative $R_{2,k^*+1}$ d'une $k^*+1^{ère}$ spire à une deuxième position radiale relative $R_{2,k@}$ d'une $k^*+1^{ère}$ spire préréglée $k@^{ème}$ est divisée en une pluralité de languettes distinctes (61), dont les hauteurs augmentent en continu ou par étapes le long d'une direction parallèle à la direction d'enroulement.

26. Ensemble d'électrodes (80) selon la revendication 25,
dans lequel une longueur radiale depuis la région de la position radiale relative $R_{2,k^*+1}$ à la deuxième position radiale relative $R_{2,k@}$ est comprise entre 1 % et 56 %, comparé à un rayon de la structure d'enroulement de la deuxième électrode sauf le noyau (C) de l'ensemble d'électrodes (80).

27. Ensemble d'électrodes (80) selon l'une quelconque des revendications 19 à 26,
dans lequel dans la structure d'enroulement de la deuxième électrode (10 ; 11), la partie non revêtue (43) de la deuxième électrode (10 ; 11) d'une région depuis une position radiale relative $R_{2,k@+1}$ d'une $k^*+1^{ère}$ spire préréglée $k@+1^{ère}$ à une position radiale relative 1 est divisée en une pluralité de languettes distinctes (61), et la pluralité de languettes distinctes (61) ont sensiblement la même hauteur depuis la position radiale relative $R_{2,k@+1}$ à la position radiale relative 1.

28. Ensemble d'électrodes (80) selon l'une quelconque des revendications 19 à 27,
dans lequel la région de surface de pliage (F) formée par la partie non revêtue (43) de la deuxième électrode (10 ; 11) inclut une région ayant un nombre croissant de piles et une région ayant un nombre uniforme de piles depuis la circonférence extérieure de l'ensemble d'électrodes (80) au noyau (C) de celui-ci,

la région ayant un nombre croissant de piles est définie comme étant une région dans laquelle le nombre de couches empilées de la partie non revêtue (43) augmente vers le noyau (C) de l'ensemble d'électrodes (80), et la région ayant un nombre uniforme de piles est définie comme étant une région depuis une position radiale où l'augmentation du nombre de couches empilées de la partie non revêtue (43) cesse à une position radiale où la partie non revêtue (43) commence à se plier, et

une longueur radiale de la région ayant un nombre uniforme de piles est égal ou supérieur à 30 %, comparé à une longueur radiale d'une spire où la partie non revêtue (43) commence à se plier à une spire où la partie non revêtue (43) finit de se plier.

29. Ensemble d'électrodes (80) selon l'une quelconque des revendications 18 à 28,

    dans lequel dans la structure d'enroulement de la deuxième électrode (10 ; 11), la partie non revêtue (43) pliée dans la direction radiale de l'ensemble d'électrodes (80) est divisée en une pluralité de languettes distinctes (61) qui sont pliables individuellement, et

    au moins soit une hauteur de la pluralité de languettes distinctes (61) dans la direction d'axe d'enroulement, soit une largeur de celles-ci dans la direction d'enroulement, augmente en continu ou par étapes le long d'une direction parallèle à la direction d'enroulement individuellement ou en groupes.

30. Ensemble d'électrodes (80) selon l'une quelconque des revendications 18 à 29,

    dans lequel la première électrode (10 ; 11) et la deuxième électrode (10 ; 11) ont une épaisseur comprise entre 80 μm et 250 μm, et

    un intervalle des parties non revêtues (43) situé à des spires adjacentes dans la direction radiale de l'ensemble d'électrodes (80) est compris entre 200 μm et 500 μm.

31. Ensemble d'électrodes (80) selon l'une quelconque des revendications 18 à 29, dans lequel la partie non revêtue (43) de la deuxième électrode (10 ; 11) a une épaisseur comprise entre 5 μm et 20 μm.

32. Ensemble d'électrodes (80) selon l'une quelconque des revendications 18 à 30, dans lequel dans la région partielle de la région de surface de pliage (F) formée par la partie non revêtue (43) de la deuxième électrode (10 ; 11), une épaisseur de pile totale de couches chevauchantes de la partie non revêtue (43) est comprise entre 50 μm et 780 μm.

33. Ensemble d'électrodes (80) selon la revendication 32,

    dans lequel la partie non revêtue (43) de la deuxième électrode (10 ; 11) est divisée en une pluralité de languettes distinctes (61) qui sont pliables individuellement, la deuxième électrode (10 ; 11) inclut une région de hauteurs variables dans laquelle les hauteurs de languettes distinctes (61) sont variables et une région de hauteurs uniformes dans laquelle les hauteurs de languettes distinctes (61) sont uniformes, et dans une région formée en pliant les languettes distinctes (61) inclues dans la région de hauteurs uniformes le long de la direction radiale de l'ensemble d'électrodes (80) dans la région de surface de pliage (F), un rapport d'une épaisseur de pile de la partie non revêtue (43) de la région de surface de pliage (F) à la hauteur de la languette distincte (61) est compris entre 0,5 % et 130 %.

34. Ensemble d'électrodes (80) selon l'une quelconque des revendications précédentes,

    dans lequel la partie non revêtue (43) de la première électrode (10 ; 11) et/ou de la deuxième électrode (10 ; 11) est divisée en une pluralité de languettes distinctes (61) qui sont pliables individuellement.

35. Ensemble d'électrodes (80) selon la revendication 34,

    dans lequel la pluralité de languettes distinctes (61) ont chacune une forme géométrique qui utilise une ligne de pliage de celles-ci comme base, et

    la forme géométrique est formée en raccordant une ou plusieurs lignes droites, une ou plusieurs courbes, ou une combinaison de celles-ci.

36. Ensemble d'électrodes (80) selon la revendication 35,

    dans lequel la forme géométrique a une largeur diminuant par étapes ou en continu de la base à la partie supérieure,

    dans lequel une angle interne le plus bas de la forme géométrique entre la base et un côté coupant la base est compris entre 60 degrés et 85 degrés,

    dans lequel, en particulier, les angles internes les plus bas de la pluralité de languettes distinctes (61) augmentent par étapes ou en continu le long d'une direction parallèle à la direction d'enroulement de l'ensemble d'électrodes (80).

**37.** Ensemble d'électrodes (80) selon la revendication 35 ou 36,

dans lequel chaque languette distincte (61) de la pluralité de languettes distinctes (61) a une forme géométrique qui utilise une ligne de pliage de celles-ci comme base, et

quand un rayon d'une spire dans laquelle la languette distincte (61) est disposée sur la base d'un centre de noyau de l'ensemble d'électrodes (80) est r, une longueur d'arc d'une spire correspondant à une partie inférieure de la languette distincte (61) est $L_{arc}$, et un angle interne le plus bas de la languette distincte (61) dans l'hypothèse où des côtés d'une paire de languettes distinctes (61) disposés de manière adjacente dans la spire ayant le rayon de r est $\theta_{hypothèse}$, un angle interne réel le plus bas $\theta_{réel}$ de la paire de languettes distinctes (61) disposées de manière adjacente satisfait à la formule suivante :

$$\theta_{réel} > \theta_{hypothèse}$$

$$\theta_{hypothèse} = 90° - 360° * (L_{arc}/2\pi r) * 0{,}5.$$

**38.** Ensemble d'électrodes (80) selon la revendication 37,

dans lequel un angle circonférentiel correspondant à la longueur d'arc $L_{arc}$ de la spire correspondant à la partie inférieure de la languette distincte (61) sur la base du centre du noyau de l'ensemble d'électrodes (80) est égal ou inférieur à 45 degrés, et/ou

dans lequel quand un rapport de chevauchement de la languette distincte (61) disposée de manière adjacente dans la spire ayant le rayon de r sur la base du centre du noyau de l'ensemble d'électrodes (80) est défini en utilisant une formule ($\theta_{réel}/\theta_{hypothèse}$-1), le rapport de chevauchement des languettes distinctes (61) est supérieur à 0 et égal ou inférieur à 0,05.

**39.** Ensemble d'électrodes (80) selon l'une quelconque des revendications 35 à 38,
dans lequel quand un cercle virtuel traversant une paire de languettes distinctes (61) disposées de manière adjacente dans la spire ayant le rayon de r sur la base du centre du noyau de l'ensemble d'électrodes (80) est tracé, une paire d'arcs ($e_1$-$e_2$ ; $e_3$-$e_4$) traversant chaque languette de la paire de languettes distinctes adjacentes (61) se chevauchent, dans lequel, en particulier, quand un rapport d'une longueur de l'arc de chevauchement à une longueur de l'arc traversant chaque languette distincte (61) est défini comme étant un rapport de chevauchement, le rapport de chevauchement de la languette distincte (61) est supérieur à 0 et égal ou inférieur à 0,05.

**40.** Ensemble d'électrodes (80) selon l'une quelconque des revendications 34 à 39,
dans lequel la pluralité de languettes distinctes (61) satisfont chacune à au moins une condition parmi une condition de largeur comprise entre 1 mm et 11 mm dans la direction d'enroulement ; une condition de hauteur comprise entre 2 mm et 10 mm dans la direction d'axe d'enroulement ; et une condition de pas de séparation compris entre 0,05 mm et 1 mm dans la direction d'enroulement.

**41.** Ensemble d'électrodes (80) selon l'une quelconque des revendications 34 à 40,

dans lequel une rainure découpée est interposée entre la pluralité de languettes distinctes (61), et

un espace prédéterminé est fourni entre une partie inférieure de la rainure découpée et la couche de matériau active de la première électrode (10 ; 11) ou de la deuxième électrode (10 ; 11).

**42.** Ensemble d'électrodes (80) selon l'une quelconque des revendications 34 à 41,
dans lequel la pluralité de languettes distinctes (61) forment une pluralité de groupes de languettes le long de la direction d'enroulement de l'ensemble d'électrodes (80), et des segments appartenant au même groupe de segments sont sensiblement identiques les uns aux autres en termes d'au moins soit une largeur dans la direction d'enroulement, soit une hauteur dans la direction d'axe d'enroulement, soit un pas de séparation dans la direction d'enroulement.

**43.** Ensemble d'électrodes (80) selon la revendication 42,

dans lequel les segments appartenant au même groupe de segments sont configurés de telle sorte qu'au moins soit la largeur dans la direction d'enroulement, soit la hauteur dans la direction d'axe d'enroulement, soit le pas de séparation dans la direction d'enroulement, augmente en continu ou par étapes le long d'une direction parallèle à la direction d'enroulement de l'ensemble d'électrodes (80), et/ou

dans lequel au moins une partie de la pluralité de groupes de languettes sont disposés à la même spire de l'ensemble d'électrodes (80).

**44.** Ensemble d'électrodes (80) dans lequel une première électrode (10 ; 11), une deuxième électrode (10 ; 11), et un séparateur (12) interposé entre celles-ci, sont enroulés sur un axe pour définir un noyau (C) et une circonférence extérieure,

dans lequel la première électrode (10 ; 11) inclut une première partie non revêtue (43) adjacente à un bord de la première électrode (10 ; 11), dans lequel la première partie non revêtue (43) s'étend au-delà du séparateur (12) le long d'une direction d'axe d'enroulement de l'ensemble d'électrodes (80), et

une partie de la première partie non revêtue (43) est pliée dans une direction radiale de l'ensemble d'électrodes (80) pour former une première région de surface de pliage (F) et, dans une région partielle de la première région de surface de pliage (F), une épaisseur de pile de couches chevauchantes de la première partie non revêtue (43) est comprise entre 100 $\mu$m et 975 $\mu$m, dans lequel la région partielle de la région de surface de pliage (F) s'étend circulairement autour d'un axe d'enroulement ou est une région annulaire.

45. Ensemble d'électrodes (80) selon la revendication 44,
dans lequel la première partie non revêtue (43) de la première électrode (10 ; 11) est divisée en une pluralité de languettes distinctes (61) qui sont pliables individuellement, la première électrode (10 ; 11) inclut une région de hauteurs variables dans laquelle les hauteurs de languettes distinctes (61) sont variables et une région de hauteurs uniformes dans laquelle les hauteurs de languettes distinctes (61) sont uniformes et, dans une région formée en pliant les languettes distinctes (61) inclues dans la région de hauteurs uniformes le long de la direction radiale de l'ensemble d'électrodes (80) dans la région de surface de pliage (F), un rapport d'une épaisseur de pile de la partie non revêtue (43) de la région de surface de pliage (F) à la hauteur de la languette distincte (61) est compris entre 1,0 % et 16,3 %.

46. Ensemble d'électrodes (80) selon la revendication 44 ou 45,

dans lequel la deuxième électrode (10 ; 11) inclut une deuxième partie non revêtue (43) adjacente à un bord de la deuxième électrode (10 ; 11), dans lequel la deuxième partie non revêtue (43) s'étend au-delà du séparateur (12) le long de la direction d'axe d'enroulement de l'ensemble d'électrodes (80),
une partie de la deuxième partie non revêtue (43) est pliée dans la direction radiale de l'ensemble d'électrodes (80) pour former une deuxième région de surface de pliage (F), et
dans une région partielle de la deuxième région de surface de pliage (F), une épaisseur de pile de la deuxième partie non revêtue (43) est comprise entre 50 $\mu$m et 780 $\mu$m.

47. Ensemble d'électrodes (80) selon la revendication 46,
dans lequel la deuxième partie non revêtue (43) de la deuxième électrode (10 ; 11) est divisée en une pluralité de languettes distinctes (61) qui sont pliables individuellement, la deuxième électrode (10 ; 11) inclut une région de hauteurs variables dans laquelle les hauteurs de languettes distinctes (61) sont variables et une région de hauteurs uniformes dans laquelle les hauteurs de languettes distinctes (61) sont uniformes et, dans une région formée en pliant les languettes distinctes (61) inclues dans la région de hauteurs uniformes le long de la direction radiale de l'ensemble d'électrodes (80) dans la région de surface de pliage (F), un rapport d'une épaisseur de pile de la partie non revêtue (43) de la région de surface de pliage (F) à la hauteur de la languette distincte (61) est compris entre 0,5 % et 130 %

48. Batterie, comprenant :

un ensemble d'électrodes (80) dans laquelle une première électrode (10 ; 11), une deuxième électrode (10 ; 11), et un séparateur (12) interposé entre celles-ci, sont enroulés sur un axe pour définir un noyau (C) et une circonférence extérieure, dans laquelle au moins soit la première électrode (10 ; 11), soit la deuxième électrode (10 ; 11), inclut une partie non revêtue (43) adjacente à un bord de l'électrode respective (10 ; 11), dans laquelle la partie non revêtue (43) s'étend au-delà du séparateur (12) le long d'une direction d'axe d'enroulement de l'ensemble d'électrodes (80), et dans laquelle au moins une partie de la partie non revêtue (43) est pliée dans une direction radiale de l'ensemble d'électrodes (80) pour former une région de surface de pliage (F), dans laquelle dans une région partielle de la région de surface de pliage (F), le nombre de couches empilées de la partie non revêtue (43) est égal ou supérieur à 10 ;
un boîtier de batterie (142) configuré pour accueillir l'ensemble d'électrodes (80) et connecté électriquement soit à la première électrode (10 ; 11), soit à la deuxième électrode (10 ; 11) pour avoir une première polarité ;
un corps d'étanchéité (143) configuré pour étanchéiser une extrémité ouverte du boîtier de batterie (142) ;
une borne (172) connectée électriquement à l'autre de la première électrode (10 ; 11) et la deuxième électrode (10 ; 11) pour avoir une deuxième polarité et configurée pour avoir une surface exposée à l'extérieur ; et
un collecteur de courant (144 ; 145) soudé à la région de surface de pliage (F) et connecté électriquement soit au boîtier de batterie, (142), soit à la borne (172),

dans laquelle la région de soudure du collecteur de courant (144 ; 145) chevauche la région de surface de pliage (F) dans laquelle le nombre de couches empilées de la partie non revêtue (43) est égal ou supérieur à 10,

dans laquelle la région partielle de la région de surface de pliage (F) s'étend circulairement autour d'un axe d'enroulement ou est une région annulaire.

49. Batterie selon la revendication 48,

dans laquelle la première électrode (10 ; 11) inclut une première partie non revêtue (43) adjacente à un bord de la première électrode (10 ; 11) dans laquelle la deuxième partie non revêtue (43) s'étend au-delà du séparateur (12) le long de la direction d'axe d'enroulement de l'ensemble d'électrodes (80), et

dans laquelle le nombre total de spires de la première électrode (10 ; 11) est défini comme étant $n_1$ et dans laquelle une valeur obtenue en divisant un indice de spire k (un nombre naturel de 1 à $n_1$) à un $k^{ème}$ emplacement de spire par le nombre total de spires $n_1$ est définie comme étant une position radiale relative $R_{1,k}$ de l'indice de spire k, dans laquelle un rapport de longueur d'une région radiale de $R_{1,k}$ satisfaisant à une condition où le nombre de couches empilées de la première partie non revêtue (43) est égal ou supérieur à 10, est égal ou supérieur à 30 % sur la base d'une région de position radiale relative dans laquelle la première partie non revêtue (43) est pliée.

50. Batterie selon la revendication 48 ou 49,

dans laquelle la deuxième électrode (10 ; 11) inclut une deuxième partie non revêtue (43) adjacente à un bord de la deuxième électrode (10 ; 11) dans laquelle la deuxième partie non revêtue (43) s'étend au-delà du séparateur (12) le long de la direction d'axe d'enroulement de l'ensemble d'électrodes (80), et

dans laquelle le nombre total de spires de la deuxième électrode (10 ; 11) est défini comme étant $n_2$ et dans laquelle une valeur obtenue en divisant un indice de spire k (un nombre naturel de 1 à $n_2$) à un $k^{ème}$ emplacement de spire par le nombre total de spires $n_2$ est définie comme étant une position radiale relative $R_{2,k}$ de l'indice de spire k, dans laquelle un rapport de longueur d'une région radiale de $R_{2,k}$ satisfaisant à une condition où le nombre de couches empilées de la deuxième partie non revêtue (43) est égal ou supérieur à 10, est égal ou supérieur à 30 % sur la base d'une région de position radiale relative dans laquelle la deuxième partie non revêtue (43) est pliée.

51. Batterie selon l'une quelconque des revendications 48 à 50,

dans laquelle la région de soudure du collecteur de courant (144 ; 145) chevauche de 50 % ou plus, la région de surface de pliage (F) dans laquelle le nombre de couches empilées de la partie non revêtue (43) est égal ou supérieur à 10, dans laquelle la résistance de soudure du collecteur de courant (144 ; 145) est égale ou supérieure à 0,196133 MPa (2 kgf/cm$^2$).

52. Batterie, comprenant :

un ensemble d'électrodes (80) dans laquelle une première électrode (10 ; 11), une deuxième électrode (10 ; 11), et un séparateur (12) interposé entre celles-ci, sont enroulés sur un axe pour définir un noyau (C) et une circonférence extérieure, dans lequel la première électrode (10; 11) inclut une première partie non revêtue (43) adjacente à un bord de l'électrode respective (10 ; 11), dans laquelle la première partie non revêtue (43) s'étend au-delà du séparateur (12) le long d'une direction d'axe d'enroulement de l'ensemble d'électrodes (80), et dans laquelle une partie de la première partie non revêtue (43) est pliée dans une direction radiale de l'ensemble d'électrodes (80) pour former une première région de surface de pliage (F), dans laquelle dans une région partielle de la première région de surface de pliage (F), une épaisseur de pile de couches chevauchantes de la première partie non revêtue (43) est comprise entre 100 $\mu$m et 975 $\mu$m,

un boîtier de batterie (142) configuré pour accueillir l'ensemble d'électrodes (80) et connecté électriquement soit à la première électrode (10 ; 11), soit à la deuxième électrode (10 ; 11) pour avoir une première polarité ;

un corps d'étanchéité (143) configuré pour étanchéiser une extrémité ouverte du boîtier de batterie (142) ;

une borne (172) connectée électriquement à l'autre de la première électrode (10 ; 11) et la deuxième électrode (10 ; 11) pour avoir une deuxième polarité et configurée pour avoir une surface exposée à l'extérieur ; et

un premier collecteur de courant (144) soudé à la première région de surface de pliage (F) et connecté électriquement soit au boîtier de batterie, (142), soit à la borne (172),

dans laquelle la région de soudure du premier collecteur de courant (144) chevauche la région partielle de la première région de surface de pliage (F) dans laquelle l'épaisseur de pile de la première partie non revêtue (43) est comprise entre 100 μm et 975 μm,

dans laquelle la région partielle de la région de surface de pliage (F) s'étend circulairement autour d'un axe d'enroulement ou est une région annulaire.

53. Batterie selon la revendication 52,

dans laquelle la première partie non revêtue (43) de la première électrode (10 ; 11) est divisée en une pluralité de languettes distinctes (61) qui sont pliables individuellement, la première électrode (10 ; 11) inclut une région de hauteurs variables dans laquelle les hauteurs de languettes distinctes (61) sont variables et une région de hauteurs uniformes dans laquelle les hauteurs de languettes distinctes (61) sont uniformes et, dans une région formée en pliant les segments inclus dans la région de hauteurs uniformes le long de la direction radiale de l'ensemble d'électrodes (80) dans la première région de surface de pliage (F), un rapport d'une épaisseur de pile de la partie non revêtue (43) de la première région de surface de pliage (F) à la hauteur de la languette distincte (61) est compris entre 1,0 % et 16,3 %, et/ou

dans laquelle la résistance de soudure du premier collecteur de courant (144) est égale ou supérieure à 0,196133 MPa (2 kgf/cm$^2$).

54. Batterie selon la revendication 52 ou 53,

dans laquelle la deuxième électrode (10 ; 11) inclut une deuxième partie non revêtue (43) adjacente à un bord de la deuxième électrode (10 ; 11), dans laquelle la deuxième partie non revêtue (43) s'étend au-delà du séparateur (12) le long de la direction d'axe d'enroulement de l'ensemble d'électrodes (80), dans laquelle une partie de la deuxième partie non revêtue (43) est pliée dans la direction radiale de l'ensemble d'électrodes (80) pour former une deuxième région de surface de pliage (F), et dans laquelle dans une région partielle de la deuxième région de surface de pliage (F), une épaisseur de pile de la deuxième partie non revêtue (43) est comprise entre 50 μm et 780 μm,

la batterie comprend un deuxième collecteur de courant (145) soudé à la deuxième région de surface de pliage (F) et connecté électriquement soit au boîtier de batterie, (142), soit à la borne (172), et

la région de soudure du deuxième collecteur de courant (145) chevauche la région partielle de la deuxième région de surface de pliage (F) dans laquelle l'épaisseur de pile de la deuxième partie non revêtue (43) est comprise entre 50 μm et 780 μm.

55. Batterie selon la revendication 54,

dans laquelle la deuxième partie non revêtue (43) de la deuxième électrode (10 ; 11) est divisée en une pluralité de languettes distinctes (61) qui sont pliables individuellement, la deuxième électrode (10 ; 11) inclut une région de hauteurs variables dans laquelle les hauteurs de languettes distinctes (61) sont variables et une région de hauteurs uniformes dans laquelle les hauteurs de languettes distinctes (61) sont uniformes, et dans une région formée en pliant les segments inclus dans la région de hauteurs uniformes le long de la direction radiale de l'ensemble d'électrodes (80) dans la deuxième région de surface de pliage (F), un rapport d'une épaisseur de pile de la partie non revêtue (43) de la deuxième région de surface de pliage (F) à la hauteur de la languette distincte (61) est compris entre 0,5 % et 13,0 %, et/ou

dans laquelle la résistance de soudure du deuxième collecteur de courant (145) est égale ou supérieure à 0,196133 MPa (2 kgf/cm$^2$), et/ou

dans laquelle la région de soudure du deuxième collecteur de courant (145) chevauche de 50 % ou plus, la région partielle de la deuxième région de surface de pliage (F) dans laquelle l'épaisseur de pile de la deuxième partie non revêtue (43) est comprise entre 50 μm et 780 μm.

56. Batterie selon la revendication 55,
dans laquelle la région de soudure du premier collecteur de courant (144) chevauche de 50 % ou plus, la région partielle de la première région de surface de pliage (F) dans laquelle l'épaisseur de pile de la première partie non revêtue (43) est comprise entre 100 μm et 975 μm.

57. Bloc-batterie (300), comprenant la batterie selon l'une quelconque des revendications 48 à 56.

58. Véhicule (V), comprenant le bloc-batterie (300) selon la revendication 57.

**FIG. 1**

**FIG. 2**

**FIG. 3**

FIG. 4

EP 4 047 702 B1

**FIG. 5**

**FIG. 6**

(a)

(b)

**FIG. 7a**

$n_1^{TH}$ WINDING
TURN
$n_1/n_1(1)$

$k@^{TH}$ WINDING
TURN
$R_{1,k@}=k@/n_1$

$1^{ST}$ WINDING
TURN
$R_{1,1}=1/n_1$

$k^{TH}$ WINDING
TURN
$R_{1,k}=k/n_1$

$k*^{TH}$ WINDING
TURN
$R_{1,k*}=k*/n_1$

EP 4 047 702 B1

**FIG. 7b**

68

**FIG. 8a**

**FIG. 8b**

FIG. 9a

(a) NUMBER OF STACKED LAYERS

8mm

43a

F

6 | 18 | 18 | 16

7mm
STACK NUMBER INCREASING REGION

8mm
STACK NUMBER UNIFORM REGION

(b) NUMBER OF STACKED LAYERS

7mm

43a

F

6 | 15 | 15 | 13

6mm
STACK NUMBER INCREASING REGION

9mm
STACK NUMBER UNIFORM REGION

(c) NUMBER OF STACKED LAYERS

6mm

43a

F

6 | 12 | 12 | 11

5mm
STACK NUMBER INCREASING REGION

10mm
STACK NUMBER UNIFORM REGION

FIG. 9b

**FIG. 10**

**FIG. 11**

**FIG. 12**

**FIG. 13**

**FIG. 14**

**FIG. 15**

**FIG. 16**

**FIG. 17**

## REFERENCES CITED IN THE DESCRIPTION

**Patent documents cited in the description**

- US 2016226056 A1
- EP 2728647 A1
- EP 2472641 A1
- US 6677082 B
- US 6680143 B